(19) **Europäisches Patentamt**

**European Patent Office**

**Office européen des brevets**

(11) **EP 1 156 203 B1**

(12) **EUROPEAN PATENT SPECIFICATION**

(45) Date of publication and mention
of the grant of the patent:
**09.08.2006 Bulletin 2006/32**

(51) Int Cl.:
*F02D 21/08* (2006.01)  *F02D 41/18* (2006.01)
*F02D 33/02* (2006.01)  *F02D 41/00* (2006.01)
*F02D 35/00* (2006.01)

(21) Application number: **01111874.2**

(22) Date of filing: **16.05.2001**

(54) **Diesel engine control**

Dieselmotorsteuerung

Commande d'un moteur Diesel

(84) Designated Contracting States:
**DE FR GB**

(30) Priority: **18.05.2000 JP 2000146247**

(43) Date of publication of application:
**21.11.2001 Bulletin 2001/47**

(73) Proprietor: **NISSAN MOTOR CO., LTD.
Yokohama city, Kanagawa (JP)**

(72) Inventor: **Itoyama, Hiroyuki
Yokohama-city,
Kanagawa (JP)**

(74) Representative: **Grünecker, Kinkeldey,
Stockmair & Schwanhäusser
Anwaltssozietät
Maximilianstrasse 58
80538 München (DE)**

(56) References cited:
**EP-A- 0 791 736      EP-A- 0 843 084
EP-A- 0 964 142      DE-A- 19 941 007
US-A- 5 377 651      US-A- 5 515 833**

• **PATENT ABSTRACTS OF JAPAN vol. 1996, no.
12, 26 December 1996 (1996-12-26) & JP 08 210195
A (NISSAN MOTOR CO LTD), 20 August 1996
(1996-08-20)**

**Description**

This invention relates to a control device according to the preamble part of the independent claim 1 and a control method according to the preamble part of the independent claim 13.

From US 5,377,651 a control device and a control method as indicated above are known.

In a diesel engine provided with a catalytic converter for reducing nitrogen oxides (NOx) in an exhaust passage, when the catalyst deteriorates, the exhaust gas pressure rises. When the engine is provided with an exhaust gas recirculation (EGR) device, the EGR amount increases due to this increase of exhaust gas pressure. As a result, an excess air factor of the air-fuel mixture in the engine becomes smaller than in the state where the catalyst is not deteriorated, and smoke is easily generated.

In order to resolve this problem, JP- 11-82183 discloses a technique wherein the excess air factor is maintained by performing feedback control of the intake air amount of the engine so as to coincide with a target intake air amount. JP- 11-50917 discloses a technique wherein an undesirable increase of an EGR amount is prevented by performing feedback control of the EGR amount to coincide with the target EGR amount.

Feedback control works well when the engine operates in a steady running state, but does not provide good target tracking ability in a transient running state.

Further, feedback control, due to its nature, has difficulty in setting a suitable feedback gain for acquiring a desirable response and desirable stability.

The relation of the difference of the real intake air amount and target intake air amount and an EGR valve opening varies according to the differential pressure upstream and downstream of the EGR valve, or the EGR flowrate.

The aforesaid JP- 11-82183 therefore needs to store various feedback gains according to the differential pressure upstream and downstream of the EGR valve or the EGR flowrate. Without a variety of feedback gains, a feedback correction amount becomes large depending on the conditions, and a desirable control precision is not obtained.

It is therefore an objective of the present invention to improve a control device and, accordingly, a control method as indicated above so as to be capable to carry out more precise control of an excess air factor in a diesel engine provided with an EGR device.

This objective is solved according to the present invention by a control device of an engine with an intake passage aspirating air, an exhaust passage discharging an exhaust gas of the engine, and an exhaust gas recirculation valve recirculating part of the exhaust gas of the exhaust passage into the intake passage, comprising: a sensor which detects a running condition of the engine; a sensor which detects a real intake air amount of the intake passage; a microprocessor comprising means for calculating a target opening of the exhaust gas recirculation valve based on the real intake air amount and the running condition so as to control the opening of the exhaust gas recirculation valve according to the target opening, and means for setting a target intake air amount based on the running condition, wherein the device further comprises a sensor which detects a parameter which shows an EGR sensitivity of the intake air amount, the EGR sensitivity representing a magnitude of an effect of a flowrate of the exhaust gas recirculation valve on the real intake air amount, and said microprocessor further comprises: means for determining whether or not a predetermined learning condition is satisfied; means for calculating a learning value with respect to a difference between the target intake air amount and the real intake air amount when the predetermined learning condition is satisfied; means for storing the parameter as a first value when the learning condition is satisfied; means for determining whether or not a learning value reflection permission condition is satisfied; means for sampling the parameter as a second value when the learning value reflection permission condition is satisfied; means for calculating a correction coefficient reflecting said EGR sensitivity from the learning value and a difference between the second value and the first value when the learning value reflection permission condition is satisfied; and means for correcting the target opening of the exhaust gas recirculation valve based on the correction coefficient when the learning value reflection permission condition is satisfied.

This objective is further solved according to the present invention by a control method of an engine with an intake passage aspirating air, an exhaust passage discharging an exhaust gas of the engine, and an exhaust gas recirculation valve recirculating part of the exhaust gas of the exhaust passage into the intake passage, comprising:

detecting a running condition of the engine; detecting a real intake air amount of the intake passage; calculating a target opening of the exhaust gas recirculation valve based on the real intake air amount and the running condition so as to control the opening of the exhaust gas recirculation valve according to the target opening; setting a target intake air amount based on the running condition, wherein there are provided the steps of detecting a parameter which shows an EGR sensitivity of the intake air amount, the EGR sensitivity representing a magnitude of an effect of a flowrate of the exhaust gas recirculation valve on the real intake air amount; determining whether or not a predetermined learning condition is satisfied; calculating a learning value with respect to a difference between the target intake air amount and the real intake air amount when the predetermined learning condition is satisfied; storing the parameter as a first value when the learning condition is satisfied; determining whether or not a learning value reflection permission condition is satisfied; sampling the parameter as a second value when the learning value reflection permission condition is satisfied; calculating a correction coefficient reflecting said EGR sensitivity from the learning value and a difference between the second value and the first value when the learning value reflection permission condition is satisfied; and correcting the target opening of the exhaust gas recirculation valve based on the correction coefficient when the learning value reflection permission condition is satisfied.

Further preferred embodiments of the present invention are laid down in the further subclaims. In the following, the present invention is explained in greater detail by means of several embodiments thereof in conjunction with the accompanying drawings, wherein:

FIG. 1 is a schematic diagram of a control device for a diesel engine according to this invention.

FIG. 2 is a schematic diagram of a common rail fuel injection mechanism with which the diesel engine is provided.

FIG. 3 is a flowchart describing a routine for calculating a target fuel injection amount $Qsol$ performed by a control unit according to this invention.

FIG. 4 is a diagram describing the contents of a basic fuel injection amount map stored by the control unit.

FIG. 5 is a flowchart describing a routine for calculating an EGR valve opening area $Aev$ performed by the control unit.

FIG. 6 is a diagram describing the contents of an EGR valve lift amount map stored by the control unit.

FIG. 7 is a flowchart describing a routine for calculating a target EGR amount $Tqek$ per cylinder performed by the control unit.

FIG. 8 is a flowchart describing a routine for calculating a real intake air amount $Qac$ performed by the control unit.

FIG. 9 is a flowchart describing a routine for calculating an intake air flowrate $Qas0$ of the intake passage performed by the control unit.

FIG. 10 is a diagram describing the contents of an intake air volume map stored by the control unit.

FIG. 11 is a flowchart describing a routine for calculating a target EGR rate $Megr$ performed by the control unit.

FIG. 12 is a diagram describing the contents of a map of a basic target EGR rate $Megrb$ stored by the control unit.

FIG. 13 is a diagram describing the contents of a map of a water temperature correction coefficient $Kegr\_tw$ stored by the control unit.

FIG. 14 is a flowchart describing a complete combustion determining routine performed by the control unit.

FIG. 15 is a flowchart describing a routine for calculating a duty value $Dtyvnt$ of a pressure control valve of a turbo supercharger performed by a control unit.

FIG. 16 is similar to FIG. 15, but showing a second embodiment of this invention.

FIG. 17 is a flowchart describing a routine for calculating an EGR rate $Megrd$ of an intake valve position performed by the control unit.

FIG. 18 is a flowchart describing a routine for calculating a time constant equivalent value $Kkin$ performed by the control unit.

FIG. 19 is a flowchart describing the contents of a map of a volume efficiency equivalent basic value $Kinb$ performed by the control unit.

FIG. 20 is a flowchart describing a subroutine for calculating a target intake air amount $tQac$ performed by the control unit.

FIG. 21 is a diagram describing the contents of a map of a target intake air amount basic value $tQacb$ stored by the control unit.

FIG. 22 is a diagram describing the contents of a map of a correction factor $ktQac$ stored by the control unit.

FIG. 23 is a diagram describing the contents of a map of a target intake air amount $tQac$ stored by the control unit.

FIG. 24 is a flowchart describing a subroutine for calculating a real EGR amount $Qec$ performed by the control unit.

FIG. 25 is a flowchart describing a routine for calculating a target opening $Rvnt$ of a variable fuel injection nozzle performed by the control unit.

FIG. 26 is a diagram describing the contents of a map of the target opening $Rvnt$ stored by the control unit.

FIG. 27 is similar to FIG. 25, but showing the second embodiment of this invention.

FIG. 28 is similar to FIG. 26, but showing the second embodiment of this invention.

FIG. 29 is a flowchart describing a routine for calculating an open loop control amount $Avnt\_f$ of the target opening performed by the control unit.

FIG. 30 is a flowchart describing a routine for calculating a feedback control amount $Avnt\_fb$ of the target opening performed by the control unit.

FIG. 31 is a flowchart describing a subroutine for performing linearization processing on the target opening performed by the control unit.

FIG. 32 is a diagram describing the contents of a map of the target opening $Rvnt$ stored by the control unit.

FIG. 33 is a diagram describing a relation between an opening area of a variable nozzle, and a turbocharging pressure.

FIG. 34 is a flowchart describing a subroutine for setting the duty value *Dtyvnt* of the pressure control valve of the turbocharger performed by the control unit.

FIG. 35 is a flowchart describing a subroutine for setting a duty selection signal flag *fvnt2* performed the control unit.

FIG. 36 is a flowchart describing a routine for correcting a temperature correction amount *Dty_t* of the duty value performed by the control unit.

FIG. 37 is a diagram describing the contents of a map of a basic exhaust gas temperature *Texhb* stored by the control unit.

FIG. 38 is a diagram describing the contents of a map of a water temperature correction coefficient *Ktexh_Tw* stored by the control unit.

FIG. 39 is a diagram describing the contents of a map of the temperature correction amount *Dty_t* stored by the control unit.

FIG. 40 is a diagram describing the temperature characteristics of an actuator of the turbocharger.

FIG. 41 is a diagram of the contents of a map of a duty value *Duty_h* when the variable nozzle is fully closed, when the opening of the variable nozzle is constant or increasing, stored by the control unit.

FIG. 42 is a diagram of the contents of a map of a duty value *Duty_l* when the variable nozzle is fully open, when the opening of the variable nozzle is constant or increasing, stored by the control unit.

FIG. 43 is similar to FIG. 41, but showing a case where the opening of the variable nozzle is decreasing.

FIG. 44 is similar to FIG. 42, but showing a case where the opening of the variable nozzle is decreasing.

FIG. 45 is a diagram describing a hysteresis in the relation between a command opening linearization processing value and the duty value according to this invention.

FIG. 46 is a flowchart describing an operation check subroutine performed by the control unit.

FIG. 47 is a flowchart describing a routine for calculating the duty value *Dtyvnt* performed by the control unit.

FIG. 48 is a diagram describing the contents of a map of a control pattern value *Duty_pu* stored by the control unit.

FIG. 49 is a diagram describing the contents of a map of a duty value *Duty_p_ne* stored by the control unit.

FIG. 50 is a flowchart describing a subroutine for calculating an EGR amount feedback correction coefficient *Kqac00*, an EGR flow velocity feedback correction coefficient *Kqac0*, and an EGR flow velocity learning correction coefficient *Kqac,* performed by the control unit.

FIG. 51 is a flowchart describing a routine for setting a feedback permission flag *fefb* performed by the control unit.

FIG. 52 is a flowchart describing a routine for setting a learning value reflection permission flag *felrn2* performed by the control unit.

FIG. 53 is a flowchart describing a routine for setting a learning permission flag *felrn* performed by the control unit.

FIG. 54 is a flowchart describing a routine for calculating the EGR amount feedback correction coefficient *Kqac00* performed by the control unit.

FIG. 55 is a diagram describing the contents of a map of a correction gain *Gkfb* of an exhaust gas recirculation flowrate stored by the control unit.

FIG. 56 is a diagram describing the contents of a map of a water temperature correction coefficient *KgfbTw* stored by the control unit.

FIG. 57 is a flowchart describing a routine for calculating the EGR flow velocity feedback correction coefficient *Kqac0* performed by the control unit.

FIG. 58 is a diagram describing the contents of a map of a correction gain *Gkfbi* of the exhaust gas recirculation flow velocity stored by the control unit.

FIG. 59 is a diagram describing the contents of a map of a water temperature correction coefficient *KgfbiTw* stored by the control unit.

FIG. 60 is a flowchart describing a subroutine for calculating the EGR flow velocity learning correction coefficient *Kqac* performed by the control unit.

FIG. 61 is a diagram of the contents of a map of a learning reflection basic value *Rqacls* stored by the control unit.

FIG. 62 is a diagram of the contents of a map of a learning reflection value correction coefficient *Krqacls* stored by the control unit.

FIG. 63 is a flowchart describing a subroutine for calculating an EGR valve flow velocity *Cqe* performed by the control unit.

FIG. 64 is a diagram of the contents of a map of the EGR valve flow velocity *Cqe* stored by the control unit.

FIG. 65 is a flowchart describing a routine for setting a learning termination flag *felrn3* performed by the control unit.

FIG. 66 is a flowchart describing a routine for calculating a learning value *Megrl* of the target EGR rate *Megr,* and an engine rotation speed learning value *Nel,* performed by the control unit.

FIG. 67 is a diagram of the contents of a map of a water temperature correction coefficient *Ktwl* stored by the control unit according to a third embodiment of this invention.

FIG. 68 is a diagram of the contents of a map of an atmospheric pressure correction coefficient *kpal* stored by the control unit according to the third embodiment of this invention.

FIGs. 69A-69E are timing charts describing the setting of flags by the control unit according to the first embodiment of this invention.

DESCRIPTION OF THE PREFERRED EMBODIMENTS

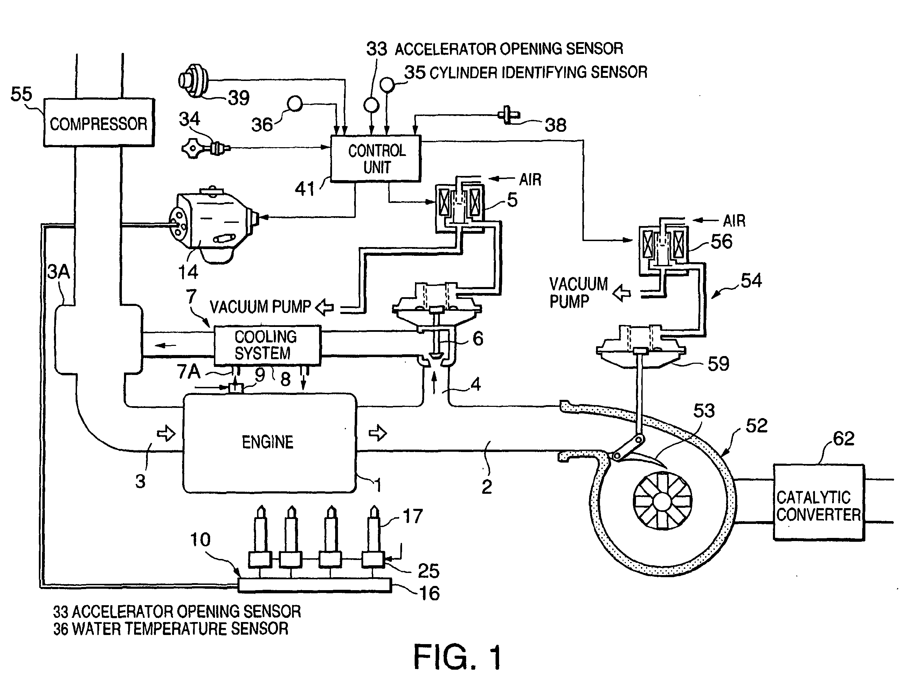

Referring to FIG. 1 of the drawings, a diesel engine 1 comprises an intake passage 3 and exhaust passage 2. The diesel engine 1 is a multi cylinder diesel engine so constructed that the pattern of heat release is single stage combustion due to performing low temperature pre-mixture combustion. Such a diesel engine is disclosed by JP- 8-86251. Intake air of the intake air passage 3 is supplied to each cylinder of the diesel engine 1 via a collector 3A.

A swirl control valve is provided in an intake port leading from the intake passage 3 to each cylinder. When the diesel engine 1 is running at low rotation speed on low load, the swirl control valve closes part of the passage and sets up a swirl in the flow of air flowing into the combustion chamber of the diesel engine 1.

The combustion chamber comprises a large diameter toroidal combustion chamber. This is a combustion chamber wherein a cylindrical cavity of the same diameter is formed on a piston from a cap surface to a base. A conical part is formed at the base of the cavity. As a result, resistance to the swirl flowing in from the outside of the cavity is reduced, and mixing of air and fuel is promoted. Also, due to the shape of the cavity, the swirl diffuses from the center of the cavity to the outside as the piston descends.

The diesel engine 1 comprises a common rail type fuel injection mechanism 10.

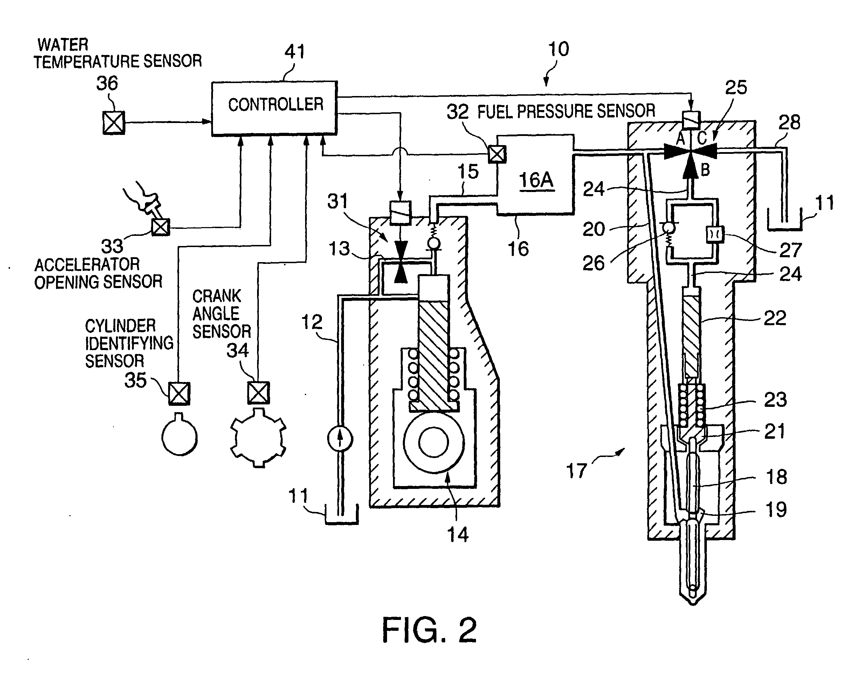

Referring to FIG. 2, the fuel injection mechanism 10 comprises a fuel tank 11, fuel supply passage 12, supply pump 14, pressure accumulating chamber 16A formed in a common rail 16, and a nozzle 17 which is provided for every cylinder. After the fuel supplied from the supply pump 14 is stored in the pressure accumulator 16A via a high pressure fuel passage 15, it is distributed to each of the nozzles 17.

The nozzle 17 comprises a needle valve 18, nozzle chamber 19, fuel passage 20 to the nozzle chamber 19, retainer 21, hydraulic piston 22, return spring 23, fuel passage 24 which leads high pressure fuel to the hydraulic piston 22, and three-way solenoid valve 25 interposed in the fuel passage 24. A check valve 26 and an orifice 27 are also provided in parallel in the fuel passage 24. The return spring 23 pushes the needle valve 18 in the closing direction of the lower part of the figure via the retainer 21. The hydraulic piston 22 comes in contact with the upper edge of the retainer 21.

The three-way valve 25 comprises a port A connected to the pressure accumulating chamber 16A, port B connected to the fuel passage 24 and port C connected to a drain 28. When the three-way valve 25 is OFF, ports A and B are connected and ports B and C are shut off. As a result, the fuel passages 20 and 24 are connected, and high pressure fuel is led to both the upper part of the hydraulic piston 22 and the nozzle chamber 19 from the pressure accumulating chamber 16A. As the pressure-receiving surface area of the hydraulic piston 22 is larger than the pressure-receiving surface area of the needle valve 18, in this state, the needle valve 18 sits in the valve seat, and the nozzle 17 is thereby closed.

In the state where the three-way valve 25 is ON, the ports A and B are shut off, and the ports B and C are connected.

Consequently, the fuel pressure of the fuel passage 24 which pushes the hydraulic piston 22 downward is released to the fuel tank 11 via the drain 28, the needle valve 18 lifts due to the fuel pressure of the nozzle chamber 19 which acts on the needle valve 18 in an upward direction, and the fuel of the nozzle chamber 19 is injected from the hole at the end of the nozzle 17. If the three-way valve 25 is returned to the OFF state, the fuel pressure of the pressure accumulating chamber 16A again acts downward on the hydraulic piston 22, the needle valve 18 sits in the valve seat, and fuel injection is terminated.

That is, fuel injection start timing is adjusted by the change-over timing from OFF to ON of the three-way valve 25, and fuel injection amount is adjusted by the duration of the ON state. Therefore, if the pressure of the pressure accumulating chamber 16A is the same, the fuel injection amount increases the longer the ON time of the three-way valve 25.

Further, to adjust the pressure of the pressure accumulating chamber 16A, the fuel injection mechanism 10 comprises a return passage 13 which returns the surplus fuel discharged by the supply pump 14 to the fuel supply passage 12. The return passage 13 is provided with a pressure regulating valve 31. The pressure regulating valve 31 opens and closes the return passage 13, and adjusts the pressure of the pressure accumulating chamber 16A by varying the fuel injection amount to the pressure accumulating chamber 16A.

The fuel pressure of the pressure accumulating chamber 16A is equal to the fuel injection pressure of the nozzle 17, and the fuel injection rate is higher the higher the fuel pressure of the pressure accumulating chamber 16. The three-way valve 25 and the pressure regulating valve 31 function according to the input signal from a control unit 41.

The above construction of the fuel injection mechanism 10 is disclosed and known from pp. 73 - 77, Lecture Papers of the 13th Symposium on the Internal Combustion Engine.

Now, referring again to FIG. 1, after the exhaust gas in the exhaust passage 2 drives an exhaust gas turbine 52 of a variable capacity turbocharger, it is discharged into the atmosphere. The variable capacity turbocharger comprises the exhaust gas turbine 52 and a compressor 55 which compresses air by the rotation of the exhaust gas turbine 52. The compressor 55 is provided in the middle of the intake passage 3, and the intake passage 3 supplies air compressed by the compressor 55 to the diesel engine 1. A variable nozzle 53 driven by a pressure actuator 54 is provided at an inlet to the exhaust gas turbine 52.

The pressure actuator 54 comprises a diaphragm actuator 59 which drives the variable nozzle 53 according to a signal pressure, and a pressure control valve 56 which generates the signal pressure according to a signal input from the control unit 41.

The control unit 41 controls the variable nozzle 53 to reduce the nozzle opening when the rotation speed of the diesel engine 1 is low. As a result, the flow velocity of exhaust gas introduced to the exhaust gas turbine 52 is increased so that a predetermined supercharging pressure is attained. On the other hand, the control unit 41 controls the variable nozzle 53 to fully open, when the rotation speed of the diesel engine 1 is high, in order to introduce exhaust gas into the exhaust gas turbine 52 without resistance.

When the air-fuel mixture is burnt in the diesel engine 1, noxious nitrogen oxides (NOx) are formed. The NOx amount largely depends on the combustion temperature, and the generation amount of NOx can be suppressed by making the combustion temperature low. This diesel engine 1 reduces the oxygen concentration in the combustion chamber by exhaust recirculation (EGR), and thereby realizes low-temperature combustion. For this purpose, the diesel engine 1 comprises an exhaust gas recirculation (EGR) passage 4 which connects the exhaust passage 2 upstream of the exhaust gas turbine 52 and the collector 3A of the intake passage 3. The EGR passage 4 is provided with a diaphragm type exhaust gas recirculation (EGR) valve 6 which responds to a control negative pressure provided from a negative pressure control valve 5 and a cooling system 7.

The negative pressure control valve 5 generates a negative pressure in response to a duty signal input from the control unit 41, and thereby varies the rate of exhaust gas recirculation (EGR rate) via the EGR valve 6.

For example, in the low rotation speed, low load range of the diesel engine 1, the EGR rate is a maximum 100 percent, and as the rotation speed and load of the diesel engine 1 increase, the EGR rate is decreased. On high load, since the exhaust gas temperature is high, intake air temperature will rise if a large amount of EGR is performed. If the intake air temperature rises, NOx will no longer decrease, the ignition delay of injected fuel becomes shorter, and it becomes impossible to achieve pre-mixture combustion. Therefore, the EGR rate is made to decrease in stages as the rotation speed and load of the diesel engine 1 increase.

The cooling system 7 leads part of the engine cooling water to a water jacket 8 surrounding the EGR passage 4, and cools the recirculated exhaust gas in the EGR passage 4. A cooling water inlet 7A of the water jacket 8 is provided with a flow control valve 9 which adjusts the recirculating amount of cooling water according to a signal from the control unit 41.

The pressure regulating valve 31, the three-way valve 25, the negative pressure control valve 5, a step motor pressure actuator 54 and the flow control valve 9 are respectively controlled by signals from the control unit 41. The control unit 41 comprises a microcomputer equipped with a central processing unit (CPU), random access memory (RAM), read-only memory (ROM) and input/output interface (I/O interface).

Signals corresponding to detection values are input to the control unit 41 from a pressure sensor 32 which detects a fuel pressure of the pressure accumulating chamber 16A, an accelerator opening sensor 33 which detects an opening $Cl$ of a vehicle accelerator pedal, a crank angle sensor 34 which detects a rotation speed $Ne$ and crank angle of the diesel engine 1, a cylinder identifying sensor 35 which identifies cylinders of the diesel engine 1, a water temperature sensor 36 which detects a cooling water temperature $Tw$ of the diesel engine 1, an atmospheric pressure sensor 38 which detects an atmospheric pressure $Pa$ and an air flow meter 39 which detects an intake air flowrate of the intake passage 3. The atmospheric pressure sensor 38 and air flow meter 39 are installed in the intake passage 3 upstream of the compressor 55.

Based on the rotation speed of the diesel engine 1 and accelerator opening, the control unit 41 calculates a target fuel injection amount of the nozzle 17 and target pressure of the pressure accumulating chamber 16A. The fuel pressure of the pressure accumulating chamber 16A is feedback controlled by opening and closing the pressure regulating valve 31 so that the actual pressure of the pressure accumulating chamber 16A detected by the pressure sensor 32 coincides with the target pressure.

The control unit 41 also controls an ON time of the three-way valve 25 according to the calculated target fuel injection amount, and a fuel injection start timing in response to the running conditions of the diesel engine 1 by the change-over timing to ON of the three-way valve 25. For example, when the diesel engine 1 is in a low rotation speed, low load state under a high EGR rate, the fuel injection start timing is delayed near top dead center (TDC) of the piston so that the ignition delay of injected fuel is long. Due to this delay, the combustion chamber temperature at the time of ignition is lowered, and the generation of smoke due to the high EGR rate is suppressed by increasing the pre-mixture combustion ratio. On the other hand, the injection start timing is advanced as the rotation speed and load of the diesel engine 1 increase. This is due to the following reason. Specifically, even if the ignition delay period is constant, the ignition delay crank angle obtained by converting the ignition delay period increases in proportion to the increase in engine speed. Therefore, in order to fire the injected fuel at a predetermined crank angle, the injection start timing needs to be advanced at high rotation speed.

The control unit 41 also controls the turbocharging pressure and EGR amount.

If the EGR amount is varied, as already stated, the turbocharging pressure will also vary. Conversely if the turbocharging pressure is varied, as the exhaust gas pressure varies, the EGR amount varies. Therefore, the turbocharging pressure and EGR amount cannot be controlled independently, and may cause an external control disturbance to each other.

If it is attempted to keep the turbocharging pressure constant when changing the EGR amount, the opening of the variable nozzle 53 of the turbocharger must be readjusted. Also, if it is attempted to keep the EGR amount constant when changing the turbocharging pressure, the opening of the EGR valve 6 must be readjusted. In such a method, it is difficult to ensure control precision during a transient state of the engine 1.

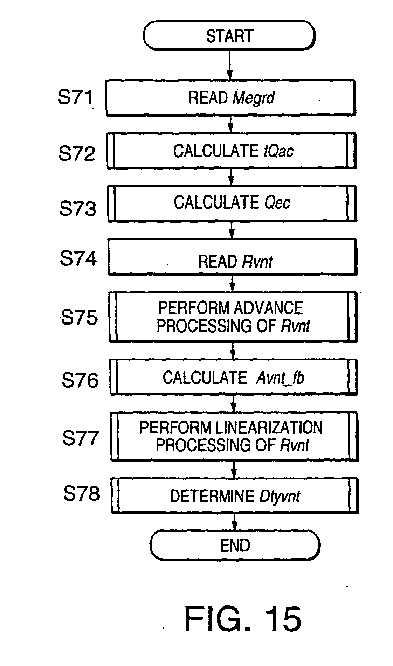

The eontrol unit 41 according to this invention calculates a target intake air amount *tQac* of the intake passage 3 according to vehicle running conditions, and sets a target opening *Rvnt* of the variable nozzle 53, which is an operating target value of the turbocharger from a target intake air amount *tQac*, real EGR amount *Qec* of the EGR passage 4, and EGR rate *Megrd* of intake air passing through the intake valve of the diesel engine 1. The EGR rate *Megrd* is also referred to as a real EGR rate. A duty value *Dtyvnt* applied to a pressure control valve 56 is then determined using the routine shown in FIG. 15, and a corresponding command signal is output to the pressure control valve 56 so that the variable nozzle 53 attains the target opening *Rvnt.* In this way, the control unit 41 controls a turbocharging pressure of the turbocharger.

Further, the control unit according to this invention predicts a flow velocity *Cqe* of exhaust gas flowing through the EGR valve 6 (hereafter EGR valve flow velocity) and controls an opening *Aev* of the EGR valve 6 based on this prediction value.

According to research carried out by the Inventors, it was found that the EGR amount influences the control of an intake air amount. Specifically, when the EGR amount is large, even if it is attempted to vary a real intake air amount or real intake air pressure, there is not much change. However, when the EGR amount is small, the real intake air amount can be varied over a wide range. In the following description, the effect of the variation of EGR amount on the intake air amount will be referred to as the EGR sensitivity of the intake air amount.

Thus, when the EGR amount is large, the EGR sensitivity of the intake air amount is small, and when the EGR amount is small, the EGR sensitivity of the intake air amount is large.

If an error ratio of the intake air amount is learned in a region where the EGR sensitivity is small, a learning value will become large.

Herein, the error ratio denotes a ratio of a real intake air amount with respect to a target intake air amount. For example, when a real intake air amount is less than a target value, a feedback correction coefficient becomes larger than 1, and an error ratio learning value becomes a positive value less than 1.0. In this case, in a region where the EGR sensitivity is large, the feedback correction coefficient larger than 1 performs an increase correction of the real intake air amount, the real intake air amount increases with good response and coincides with the target value. On the other hand, in a region where the EGR sensitivity is small, it takes a relatively long time until the real intake air amount reaches the target value with the same feedback correction coefficient, so the feedback correction coefficient continues increasing. As a result, the error ratio learning value becomes large. Therefore, the error ratio learning value has a larger value the smaller the EGR sensitivity.

The Inventors discovered that there was a control error in the EGR ratio and a control error in the engine rotation speed, which are parameters affecting the EGR sensitivity of the intake air amount. Hence, in this control device, when controlling the intake air amount using the error ratio learning value of the intake air amount, a correction according to these parameters is added to eliminate the effect of the EGR sensitivity of the intake air amount.

Specifically, the following processing is performed.

(1) The error ratio learning value of the intake air amount is limited to a single value. When learning permission conditions are satisfied, the calculation of the error ratio learning value is performed only once, and after learning has terminated, under learning value reflection permission conditions, a learning correction coefficient is calculated using the same error ratio learning value. The parameters used for calculating the EGR valve flow velocity *Cqe* are corrected by this correction coefficient.

(2) When the learning correction coefficient is calculated from the error ratio learning value, corrections based on the control error of EGR rate and the control error of engine rotation speed, which are parameters affecting EGR sensitivity, are performed.

Further, an EGR flow velocity feedback correction coefficient *Kqac0* is calculated so that a real intake air amount *Qac* coincides with a target intake air amount delay processing value *tQacd.* When learning permission conditions are satisfied, an error ratio learning value *Rqac* is calculated based on the feedback correction coefficient *Kqac0*, and an old error ratio learning value $Rqac_{n-1}$ stored in the memory of the control unit 41 is updated. At the same time, learning values of parameters which affect EGR sensitivity are newly calculated. Herein, the parameters are the target EGR rate *Megr* and the rotation speed *Ne* of the diesel engine 1. The learning values are respectively referred to as *Megrl* and *Nel.*

If learning value reflection permission conditions are satisfied after terminating the computation of the error ratio learning value *Rqac* and the learning values *Megrl, Nel,* the learning correction coefficient *Kqac* is calculated based on a difference *dMegr* between the learning value *Megrl* and the present value of the target EGR rate *Megr,* a difference between the learning value *Nel* and the present value of the engine rotation speed *Ne,* and the error ratio learning value *Rqac* stored in the memory. The real EGR amount *Qec* which is a parameter used for computing the EGR valve flow velocity *Cqe* is then corrected using the learning correction coefficient *Kqac.*

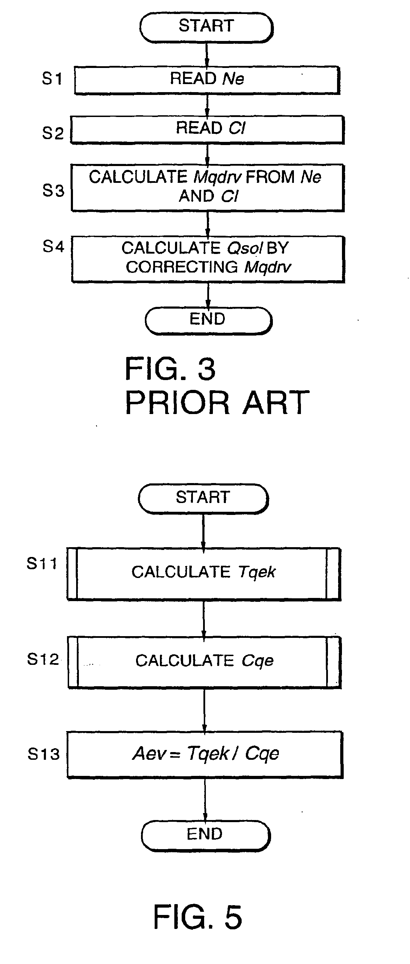

This control performed by the control unit 41 will be described referring to the flowcharts. FIG. 3, FIG. 4 and FIGs. 8-14 are known from JP- 10-288071, Of the routines shown in these flowcharts, independent routines are performed at execution intervals described separately in the following description, and subroutines are performed at the execution intervals of the parent routine.

The routine for calculating common parameters used for control of turbocharging pressure and the EGR amount will first be described. The common parameters are a target fuel injection amount *Qsol* of the fuel injection device 10, the target EGR rate *Megr* of the EGR valve 6, a time constant equivalent value *Kkin,* the real EGR rate *Megrd,* the real intake air amount *Qac,* an intake air flowrate *Qas0* of the intake passage 3 and the real EGR amount *Qec* of the EGR passage 4. The time constant equivalent value *Kkin* is a value representing an EGR control delay due to a collector 3A interposed between the EGR valve 6 and the intake valve of the diesel engine 1. The real EGR rate *Megrd* shows the EGR rate of the intake air which passes through the intake valve of the diesel engine 1. The real EGR rate *Megrd* varies with a first order delay relative to the target EGR rate *Megr.* The calculation of these parameters is performed independently of the turbocharging pressure control routine, and the EGR amount control routine.

First, referring to FIG. 3, the routine for calculating the target fuel injection amount *Qsol* will be described. This routine is performed in synchronism with a REF signal output by the crank angle sensor 34 for each reference position of the combustion cycle of each cylinder. In the case of a four-stroke cycle engine, the REF signal is output every 180 degrees for a four cylinder engine, and every 120 degrees for a six cylinder engine.

First, in a step S1, the engine speed *Ne* is read, and in a step S2, the accelerator opening *Cl* is read.

In a step S3, a basic fuel injection amount *Mqdrv* is calculated by looking up a map shown in FIG.4 based on the engine rotation speed *Ne* and the accelerator opening *Cl.* This map is stored beforehand in the memory of the control unit 41.

In a step S4, the target fuel injection amount *Qsol* is calculated by adding an increase correction based on an engine cooling water temperature *Tw*, etc., to the basic fuel injection amount *Mqdrv.*

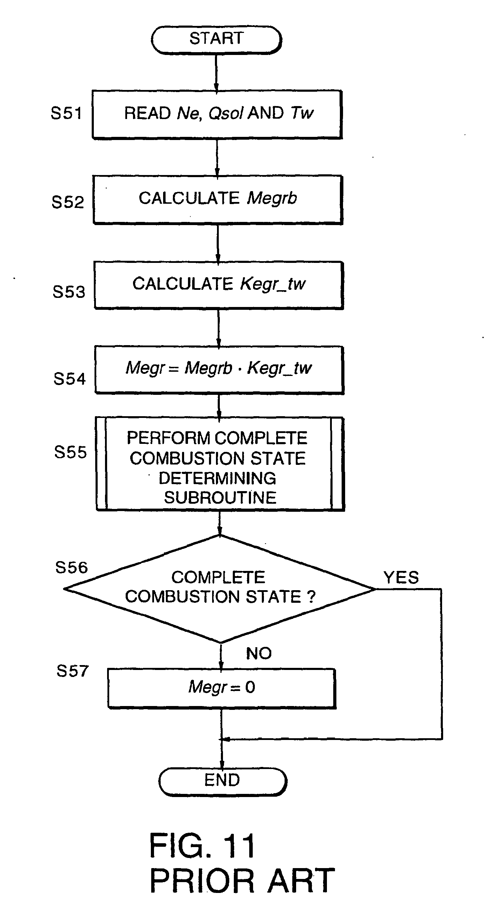

Next, referring to FIG.11, a routine for calculating the target EGR rate *Megr* will be described. This routine is also performed in synchronism with the REF signal.

The control unit 41 first reads the engine rotation speed *Ne,* the target fuel injection amount *Qsol* and the engine cooling water temperature *Tw* in a step S51.

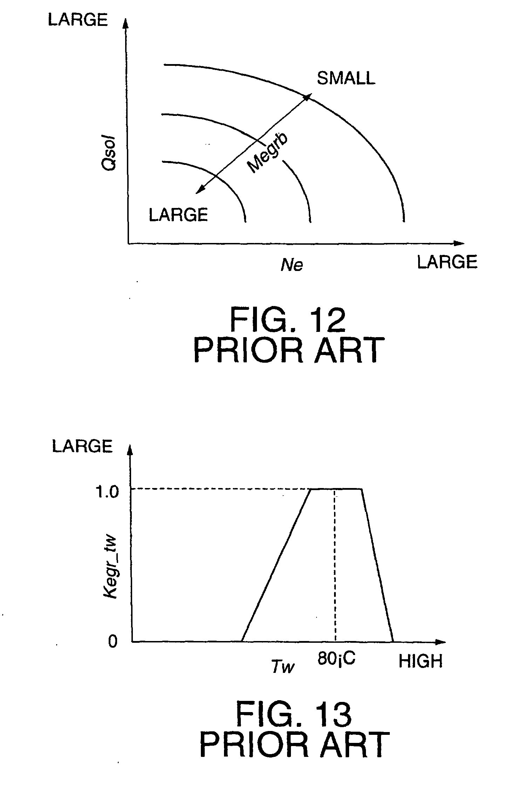

In a step S52, referring to a map shown in FIG. 12, the basic target EGR rate *Megrb* is calculated from the engine rotation speed *Ne* and the target fuel injection amount *Qsol.* This map is stored beforehand in the memory of the control unit 41. In this map, the basic target EGR rate *Megrb* is set larger in a region where the operating frequency of the engine is higher. This region corresponds to a region where both the rotation speed *Ne* and the load are small. In this map, the load is represented by the target fuel injection amount *Qsol.* When the engine output is high, smoke tends to be generated, so in such a region, the basic target EGR rate *Megrb* is set to have small values.

In a step S53, referring to a map shown in FIG. 13, a water temperature correction coefficient *Kegr_Tw* of the basic target EGR rate *Megrb* is calculated from the cooling water temperature *Tw.* This map is also stored beforehand in the memory of the control unit 41.

In a step S54, the target EGR rate *Megr* is calculated by the following equation (1) from the basic target EGR rate *Megrb* and water temperature correction coefficient *Kegr_Tw.*

$$Megr = Megrb \cdot Kegr\_tw \tag{1}$$

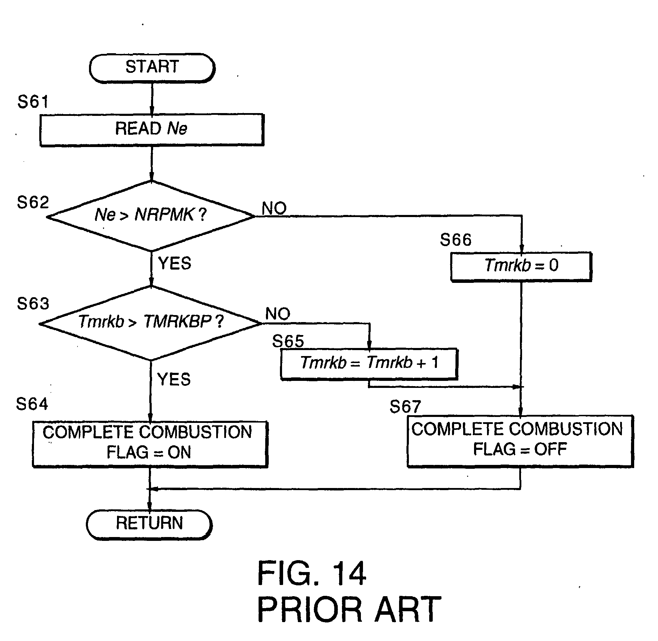

In a step S55, a subroutine shown in FIG. 14 which determines whether or not the diesel engine 1 is in a complete combustion state, is performed.

Describing this subroutine, firstly in a step S61, the engine rotation speed *Ne* is read, and in a step S62, the engine rotation speed *Ne* and a complete combustion determining slice level *NRPMK* corresponding to a complete combustion rotation speed are compared.

The slice level *NRPMK* is set, for example, to 400rpm. When the engine rotation speed *Ne* exceeds the slice level *NRPMK,* the routine proceeds to a step S63.

Here, a counter value *Tmrkb* is compared with a predetermined time *TMRKBP,* and when the counter value *Tmrkb* is larger than the predetermined time *TMRKBP,* a complete combustion flag is turned ON in a step S64, and the subroutine is terminated.

When the engine rotation speed *Ne* is below the slice level *NRPMK* in the step S62, the subroutine proceeds to a step S66. Here, the counter value *Tmrkb* is cleared to 0, the complete combustion flag is turned OFF in a next step S67, and the subroutine is terminated.

When the counter value *Tmrkb* is below the predetermined time *TMRKBP* in the step S63, the counter value *Tmrkb* is incremented in a step S65 and the subroutine is terminated.

In this subroutine, even if the engine rotation speed *Ne* exceeds the slice level *NRPMK,* the complete combustion flag does not turn ON immediately, and the complete combustion flag only changes to ON after this state has continued for the predetermined time *TMRKBP.*

Referring again to FIG. 11, after performing the subroutine of FIG. 14, the control unit 41 determines the complete combustion flag in a step S56. When the complete combustion flag is ON, the subroutine of FIG. 11 is terminated. When the complete combustion flag is OFF, the target EGR rate *Megr* is reset to 0 in a step S57, and the subroutine of FIG. 11 is terminated.

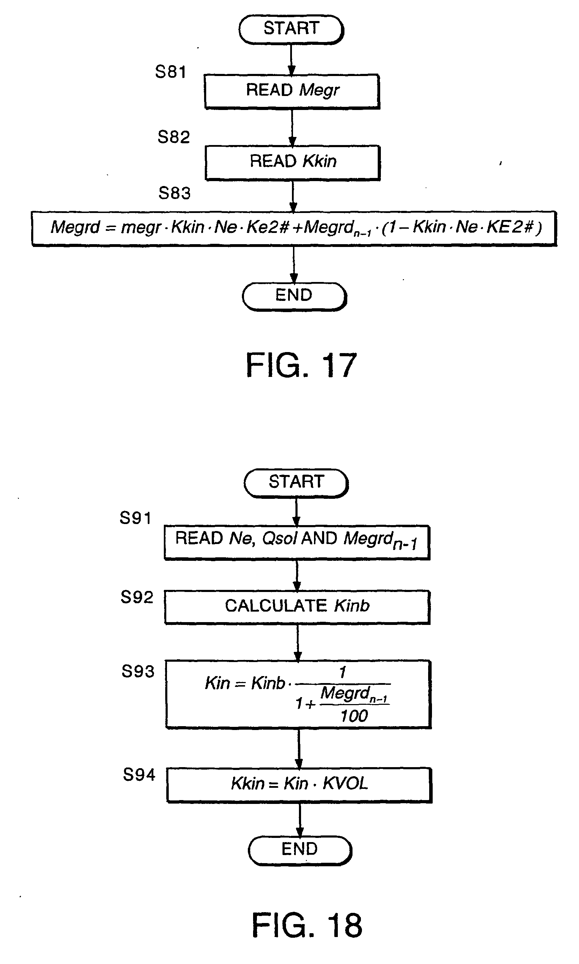

Referring to FIGs. 17 and 18, a routine for calculating the time constant equivalent value *Kkin* and the real EGR rate *Megrd* will now be described. The real EGR rate *Megrd* varies with a first order delay relative to the target EGR rate *Megr.* As the calculations of the time constant equivalent value *Kkin* and the real EGR rate *Megrd* are inter-related, they will be described together.

FIG. 18 shows a routine for calculating the time constant equivalent value *Kkin.* This routine is performed in synchronism with the REF signal.

The control unit 41 reads the engine rotation speed *Ne,* the target fuel injection amount *Qsol* and the immediately preceding value *Megrd_{n-1}* (%) of the real EGR rate in a step S91. The immediately preceding value *Megrd_{n-1}* is a value of *Megrd* calculated on the immediately preceding occasion when the routine was performed.

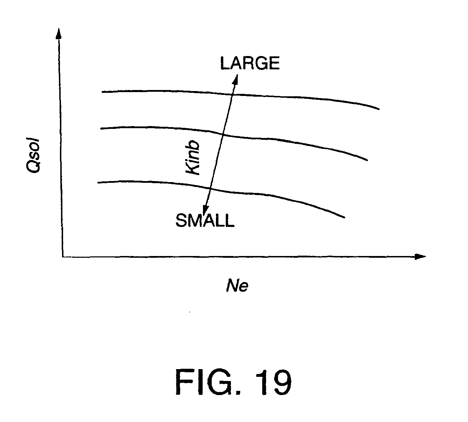

In a step S92, a volume efficiency equivalent basic value *Kinb* is calculated from the engine rotation speed *Ne* and the target fuel injection amount *Qsol* by looking up a map shown in FIG. 19 previously stored in the memory of the control unit 41.

In a step S93, a volume efficiency equivalent value *Kin* is calculated from the following equation (2). When EGR is performed, the proportion of fresh air in the intake air falls, and the volume efficiency decreases. This reduction is reflected in the calculation of the volume efficiency equivalent value *Kin* via the volume efficiency equivalent basic value *Kinb.*

$$Kin = Kinb \cdot \frac{1}{1+\dfrac{Megrd_{n-1}}{100}} \qquad (2)$$

In a step S94, the time constant equivalent value *Kkin* corresponding to the capacity of the collector 3A is calculated by multiplying the volume efficiency equivalent value *Kin* by a constant *KVOL.*

The constant *KVOL* is expressed by the following equation (3):

$$KVOL = (VE/NC)/VM \qquad (3)$$

where, *VE* = displacement of diesel engine 1,

*NC* = number of cylinders of diesel engine 1, and
*VM* = capacity of passage from collector 3A to the intake valve.

FIG. 17 shows the routine for calculating the real EGR rate *Megrd.* This routine is performed at an interval of 10 milliseconds.

The control unit 41 first reads the target EGR rate *Megr* in a step S81.

In a following step S82, the time constant equivalent value *Kkin* is read. The routine of FIG. 18, which calculates the time constant equivalent value *Kkin*, is performed in synchronism with the REF signal, and this routine which calculates the real EGR rate *Megrd* is performed at an interval of 10 milliseconds. Therefore, the time constant equivalent value *Kkin* read here is the time constant equivalent value *Kkin* calculated by the routine of FIG. 18immediately before the execution of the routine of FIG. 17. Likewise, the immediately preceding value $Megrd_{n-1}$ of the real EGR rate read by the routine of FIG. 18 is the real EGR rate calculated by the routine of FIG. 17just before the execution of the routine of FIG. 18.

In a step S83, the real EGR rate *Megrd* is calculated from the following equation (4) using the target EGR rate *Megr*, immediately preceding value $Megrd_{n-1}$, and time constant equivalent value *Kkin*.

$$Megrd = megr \cdot Kkin \cdot Ne \cdot Ke2\# + Megrd_{n-1} \cdot (1 - Kkin \cdot Ne \cdot KE2\#) \tag{4}$$

where, *KE2#* = constant.

In this equation, *Ne\* KE2#* is a value to convert the EGR rate per intake stroke of each cylinder, to an EGR rate per unit time.

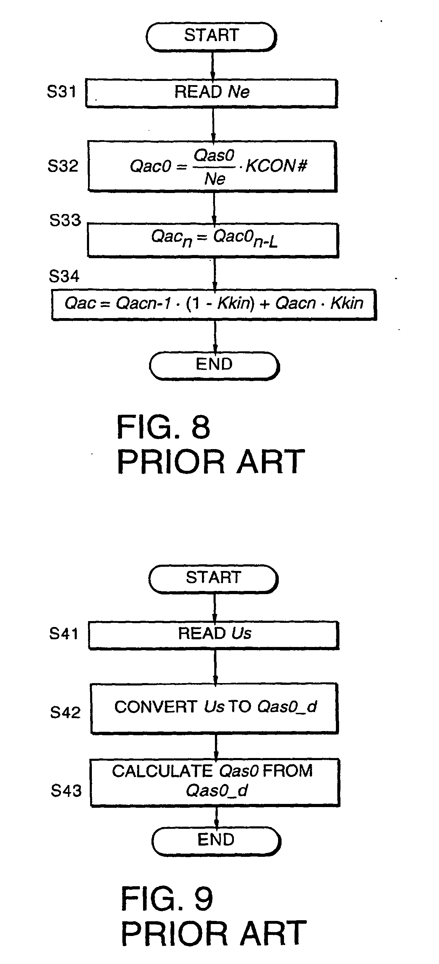

Next, referring to FIG. 8, a routine for calculating the real intake air amount *Qac* will be described. This routine is performed in synchronism with the REF signal. The real intake air amount *Qac* expresses the intake air amount in the intake valve position of one cylinder of the diesel engine 1. The real intake air amount *Qac* is calculated from a flowrate *Qas0* of the intake passage 3 detected by the air flow meter 39, but as the air flow meter 39 is situated upstream of the compressor 55, the real intake air amount *Qac* is calculated considering the time until the air which has passed through the air flow meter 39 is taken into the cylinder via the collector 3A.

First, in a step S31, the control unit 41 reads the engine rotation speed *Ne* and intake air flowrate *Qas0* of the intake passage 3.

In a step S32, the intake air flowrate *Qas0* is converted into an intake air amount *Qac0* per cylinder by the following formula (5).

$$Qac0 = \frac{Qas0}{Ne} \cdot KCON\# \tag{5}$$

where, *KCON#* = constant.

The constant *KCON#* is a constant for converting the intake air flowrate *Qas0* of the intake passage 3 into the intake air amount per cylinder. In a four-cylinder engine, two cylinders perform air intake in each rotation, so the constant *KCON#* is 30. In a six-cylinder engine, three cylinders perform air intake in each rotation, so the constant *KCON#* is 20.

A considerable time is required until the air which has passed through the air flow meter 39 is actually taken into the cylinder. In order to correct for this time difference, the control unit 41 performs the processing of steps S33, S34.

In the step S33, considering the time required from the air flow meter 39 to the inlet of the collector 3A, a value $Qac0_{n-L}$ of *Qac0* which was calculated in the routine executed *L* times ago, is set as an intake air amount $Qac_n$ per cylinder at the inlet of the collector 3A. The value of L is determined experimentally.

In the step S34, considering the time difference from the collector 3A to the intake valve of each cylinder of the diesel engine 1, the real intake air amount *Qac* is calculated by equation (6) of first order delay.

$$Qac = Qac_{n-1} \cdot (1 - Kkin) + Qac_n \cdot Kkin \tag{6}$$

where, *Kkin* = time constant equivalent value, and

$Qac_{n-1}$ = *Qac* calculated on the immediately preceding occasion the routine was executed.

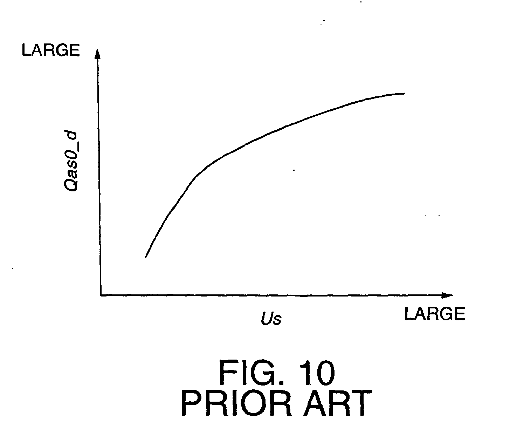

The signal input into the control unit 41 from the air flow meter 39 is an analog voltage signal *Us*, and the control unit 41 converts the analog voltage signal *Us* into the intake air flowrate *Qas0* of the intake passage 3 by the routine shown in FIG. 9. This routine is performed at an interval of 4 milliseconds. In a step S41, the control unit 41 reads the analog voltage signal *Us*, and in a step S42, converts this into a flowrate *Qas0_d* by looking up a map shown in FIG. 10. This map is stored beforehand in the memory of the control unit 41.

Further, in a step S43, weighted average processing is performed on the flowrate *Qas0_d*, and the value obtained is taken as the intake air flowrate *Qas0* of the intake passage 3.

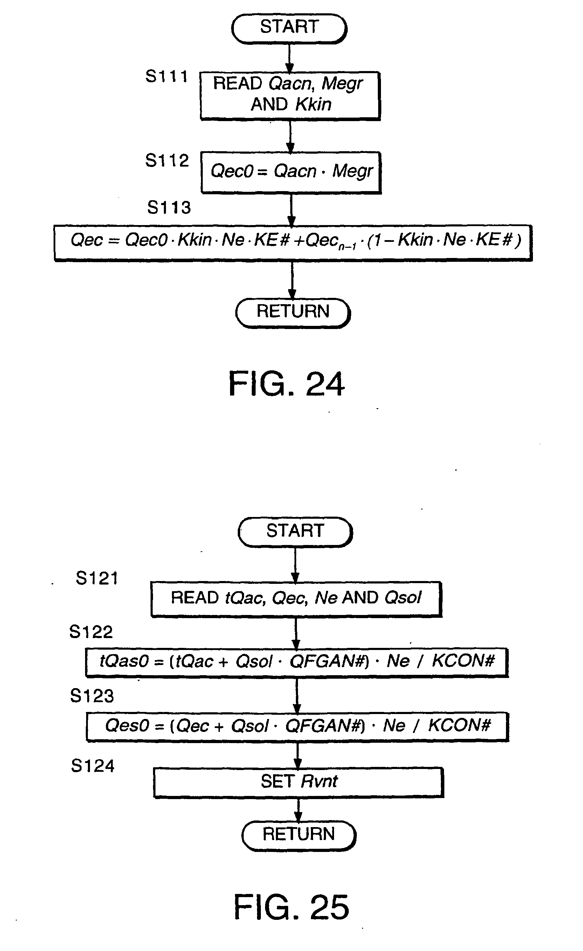

Next, referring to FIG. 24, a routine for calculating the real EGR amount *Qec* will be described. The real EGR amount *Qec* corresponds to an EGR amount per cylinder in the intake valve position. This routine is performed at an interval of 10 milliseconds.

Firstly in a step S111, the control unit 41 reads the intake fresh air amount $Qac_n$ per cylinder at the inlet of the collector 3A, the target EGR rate *Megr,* and the time constant equivalent value *Kkin* corresponding to the collector capacity. For the intake fresh air amount $Qac_n$ per cylinder at the inlet of the collector 3A, a value calculated by the routine of FIG. 8 is used, and for the time constant equivalent value *Kkin,* a value calculated by the routine of FIG. 18 is used.

In a next step S112, an EGR amount *Qec0* per cylinder at the inlet of the collector 3A is calculated by the following equation (7).

$$Qec0 = Qacn \cdot Mger \tag{7}$$

In a next step S113, the real EGR amount *Qec* is calculated by the following equation (8) and the routine is terminated.

$$Qec = Qec0 \cdot Kkin \cdot Ne \cdot KE\# + Qec_{n-1} \cdot (1 - Kkin \cdot Ne \cdot KE\#) \tag{8}$$

where, *KE#* = constant, and

$Qec_{n-1}$ = $Qec_n$ calculated on the immediately preceding occasion the routine was executed.

Equation (8) renders a delay processing similar to that of equation (4).

The control of turbocharging pressure and control of the EGR amount by the control unit 41, are performed using the target fuel injection amount *Qsol*, time constant equivalent value *Kkin,* target EGR rate *Megr,* real EGR rate *Megrd,* the real intake air amount *Qac* and the real EGR amount *Qec* calculated in this way.

The turbocharging pressure is controlled by a duty value *Dtyvnt* of a signal output to the pressure control valve 56 of the turbocharger When the duty value *Dtyvnt* is zero, the pressure control valve 56 fully opens, and when the duty value is 1, it is fully closed.

The routine shown in FIG. 15 determines the duty value *Dtyvnt.* Therefore, this routine constitutes the main routine of turbocharging pressure control. This routine is performed at an interval of 10 milliseconds.

First, the control unit 41 reads the real EGR rate *Megrd* in a step S71.

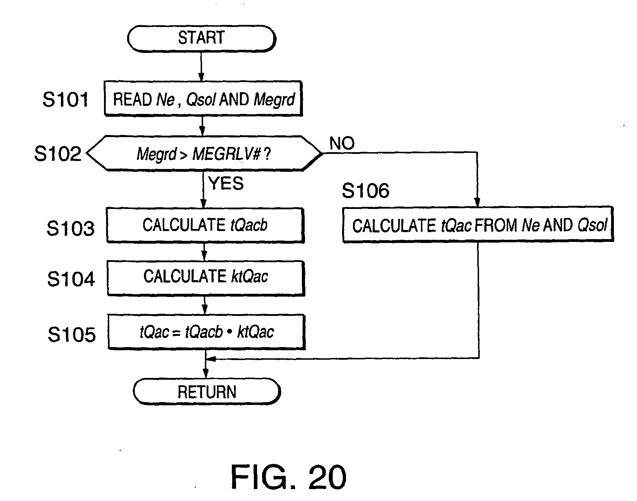

In a step S72, the target intake air amount *tQac* is calculated using the subroutine shown in FIG. 20.

Referring to FIG. 20, firstly in a step S101, the control unit 41 reads the engine rotation speed *Ne,* target fuel injection amount *Qsol* and real EGR rate *Megrd.* In a step S102, the real EGR rate *Megrd* is compared with a predetermined value *MEGRLV#.* The predetermined value *MEGRLV#* is a value for determining whether or not exhaust gas recirculation is actually being performed, and is set to, for example, 0.5%.

In the step S102, when *Megrd > MEGRLV#,* the subroutine proceeds to a step S103. On the other hand, if *Megrd ≤ MEGRLV#,* the subroutine proceeds to a step S106. In order to treat the case of a very small exhaust gas recirculation to be the same as the case where exhaust gas recirculation is not performed, the predetermined value *MEGRLV#* is not set to zero.

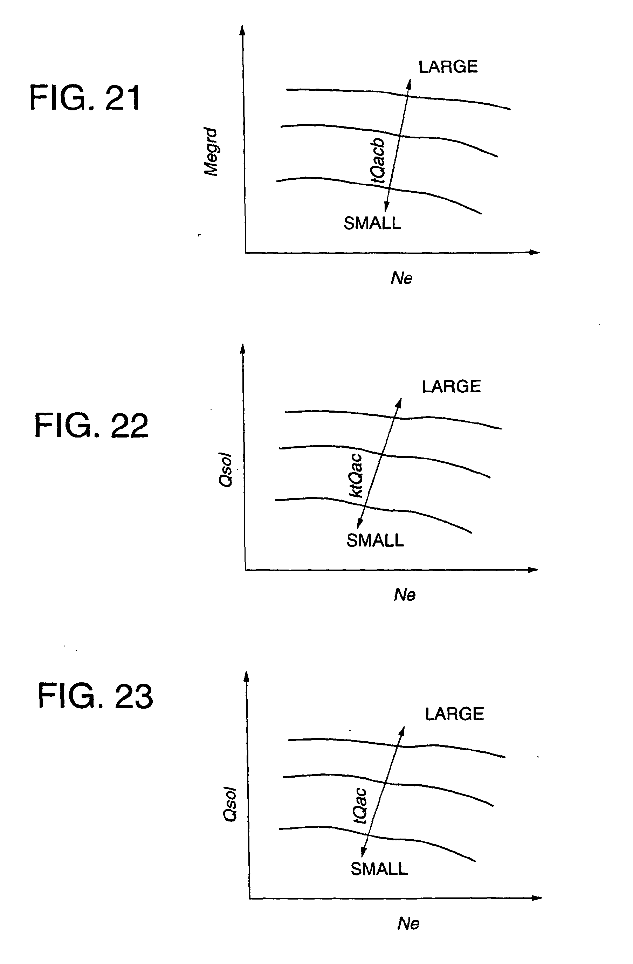

In the step S103, a target intake air amount basic value *tQacb* is calculated from the engine rotation speed *Ne* and real EGR rate *Megrd* by looking up a map shown in FIG. 21. When the engine rotation speed *Ne* is constant, this map gives a larger target intake air amount basic value *tQacb* the larger the real EGR rate *Megrd.* This map is previously stored in the memory of the control unit 41.

Next, in a step S104, a correction coefficient *ktQac* of the target intake air amount is calculated from the engine rotation speed *Ne* and the target fuel injection amount *Qsol* by looking up a map shown in FIG. 22. The correction coefficient *ktQac* is a coefficient for setting the target intake air amount according to the running condition of the vehicle.

In a step S105, the target intake air amount *tQac* is calculated by multiplying the target intake air amount basic value *tQacb* by the correction coefficient *ktQac*.

On the other hand, in the step S106, the target intake air amount *tQac*, when exhaust gas recirculation is not performed, is calculated from the engine rotation speed *Ne* and the target fuel injection amount *Qsol* by looking up a map shown in FIG. 23.

After calculating the target intake air amount *tQac* in this way, the subroutine is terminated.

Next, in a step S73 of FIG. 15, the control unit 41 reads the real EGR amount *Qec* calculated by the routine of FIG. 24.

In a step S74, the control unit 41 reads the target opening *Rvnt* of the variable nozzle 53. Here, the opening is a value which expresses the opening area of the variable nozzle 53 as a percentage relative to the opening area when the nozzle is fully open. Therefore, the opening when the nozzle is fully open is 100%, and the opening when it is fully closed is 0%. The opening is used in order to express the opening of the variable nozzle 53 as a universal value which is not affected by the capacity of the turbocharger, but the opening area of the variable nozzle 53 may of course also be used.

The target opening *Rvnt* of the variable nozzle 53 is calculated by a routine shown in FIG. 25. This routine is performed independently of the main routine of FIG. 15 in synchronism with the REF signal.

Referring to FIG. 25, in a step S121, the control unit 41 first reads the target intake air amount *tQac*, real EGR amount *Qec,* engine rotation speed *Ne* and target fuel injection amount *Qsol.* In a following step S122, an intake air amount equivalent value *tQas0* for calculating the target opening *Rvnt* of the variable nozzle 53 is calculated by the following equation (9).

$$tQas0 = (tQac + Qsol \cdot QFGAN\#) \cdot Ne / KCON\# \tag{9}$$

where, *KCON#* = constant.

In a step S123, an EGR amount equivalent value *Qes0* is calculated by the following equation (10).

$$Qes0 = (Qec + Qsol \cdot QFGAN\#) \cdot Ne / KCON\# \tag{10}$$

In equations (9) and (10), *Ne* / *KCON#* is a coefficient for converting the intake air amount per cylinder or the EGR amount into a value per unit time.

Moreover, in equations (9) and (10), *Qsol · QFGAN#* is added to the target intake air amount *tQac* or the real EGR amount *Qec* in order to vary the target opening *Rvnt* according to the load of the diesel engine 1.

The effect of the target fuel injection amount *Qsol*, which represents the load of the diesel engine 1, is adjusted by the gain *QFGAN#.* In the following description, *tQas0* calculated in this way is referred to as an intake air amount equivalent value, and *Qes0* is referred to as a set EGR amount equivalent value.

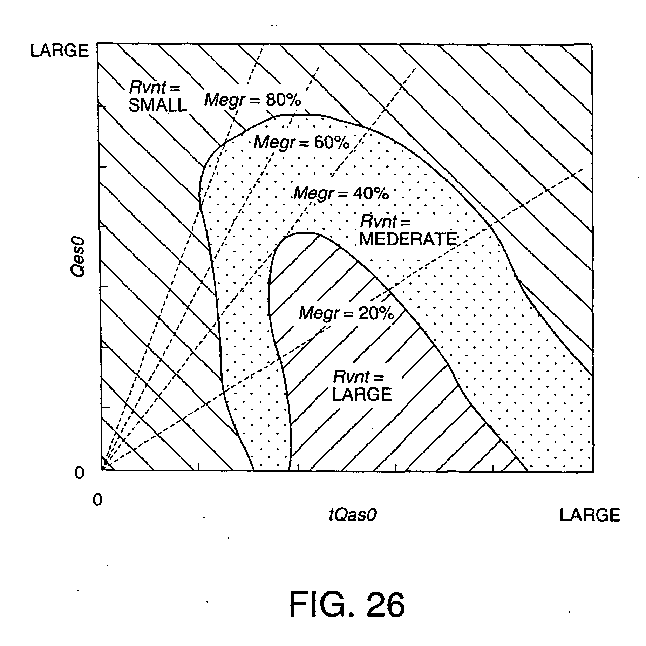

In a following step S124, the target opening *Rvnt* of the variable nozzle 53 is calculated by looking up a map shown in FIG. 26 stored beforehand based on the intake air amount equivalent value *tQas0* and the EGR amount equivalent value *Qes0.* This map is stored beforehand in the memory of the control unit 41.

Describing the characteristics of the target opening *Rvnt* specified by this map, in the region on the right-hand side of the figure where the intake air amount equivalent value *tQas0* is large, the target opening *Rvnt* decreases with increase of the EGR amount equivalent value *Qes0.* This is due to the following reason. Fresh air decreases as the EGR amount increases, and as a result, the air-fuel ratio becomes rich and smoke is easily generated. To avoid this situation, the target opening *Rvnt* is decreased and the fresh air intake amount is increased by raising the turbocharging pressure of the turbocharger the more the EGR amount increases.

In the region on the left-hand side of the figure where the intake air amount equivalent value *tQas0* is small, the turbocharging efficiency of the turbocharger is small. In this map, in this region, the target opening *Rvnt* is decreased as the intake air amount equivalent value *tQas0* decreases. This is because the exhaust pressure required to rotate the exhaust gas turbine 52 is difficult to establish if the target opening *Rvnt* is increased in this region. It is also because, when the vehicle is accelerated by fully opening the accelerator pedal, the acceleration effect due to turbocharging is larger if the initial opening of the variable nozzle 53 is small.

In the figure, the target opening *Rvnt* of the region indicated by *Rvnt* = Small is about 20%. The target opening *Rvnt* of the region indicated by *Rvnt* = Large is set to about 30% when fuel-cost performance is emphasized, and to about 60% when exhaust gas purification is emphasized.

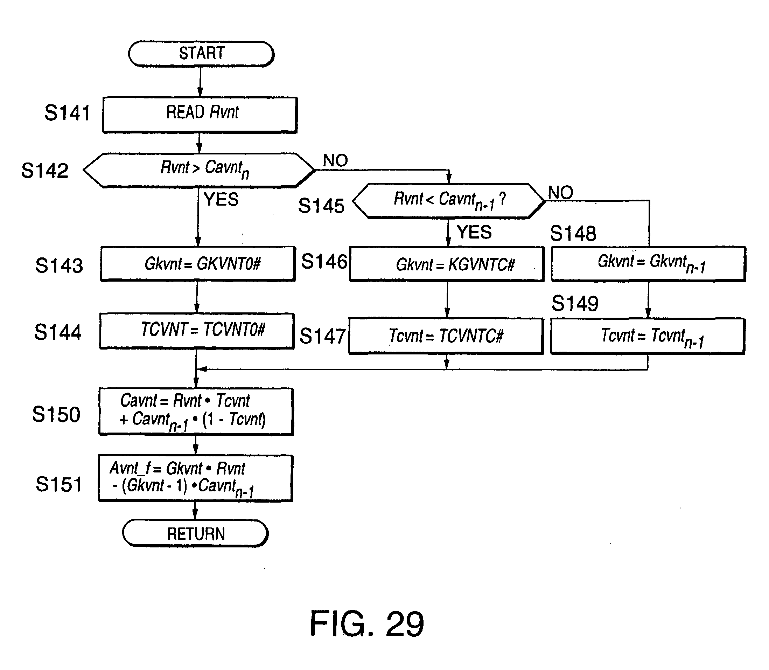

Now, after reading the target opening *Rvnt* in the step S74 of FIG. 15, the control unit 41, in a step S75, adds advance processing to the target opening *Rvnt* using the subroutine shown in FIG. 29. This advance processing aims to compensate the operating delay based on the time required to operate the pressure actuator 54 which drives the variable nozzle 53. This processing is needed as the operation of the pressure actuator 54 using the pressure control valve 56 and the diaphragm actuator 59 has a large response delay compared to a step motor.

Referring to FIG. 29, the control unit 41 first reads the target opening *Rvnt* in a step S141.

In a step S142, an opening prediction value $Cavnt_{n-1}$ calculated on the immediately preceding occasion when the subroutine was executed, is compared with the target opening *Rvnt*. The opening prediction value $Cavnt_{n-1}$ will be described in a later step S150.

When $Rvnt > Cavnt_{n-1}$, the variable nozzle 53 is operating in the opening direction. In this case, in a step S143, the subroutine sets a advance correction gain *Gkvnt* as a predetermined value *GKVNTO#*, sets a advance correction time constant equivalent value *Tcvnt* as a predetermined value *TCVNTO#* in a step S144, and proceeds to the step S150.

Here, the time constant equivalent value *Tcvnt* is the inverse of a time constant, and shows that the response is faster for a larger value.

On the other hand, when $Rvnt \leq Cavnt_{n-1}$ in the step S142, the subroutine determines whether or not $Rvnt < Cavnt_{n-1}$ in a step S145.

When $Rvnt < Cavnt_{n-1}$, the variable nozzle 53 is operating in the closing direction. In this case, the subroutine sets the advance correction gain *Gkvnt* to a predetermined value *GKVNTC#* in a step S146, sets the advance correction time constant equivalent value *Tcvnt* to a predetermined value *TCVNTC#* in a step S147, and proceeds to the step S150. Herein, *GKVNTO# < GKVNTC#* and *TCVNTO# < TCVNTC#*.

The reason for this setting is that, when the variable nozzle 53 is being closed, the exhaust gas pressure works as a resistance force, hence it is desirable to set the gain larger and set the time constant smaller than when the nozzle is being opened to expedite the operation of the variable nozzle 53. Making the time constant small means making the time constant equivalent value *Tcvnt* large, as mentioned above.

In a step S145, when the target opening *Rvnt* is not smaller than the opening prediction value $Cavnt_{n-1}$, i.e., *Rvnt* is equal to $Cavnt_{n-1}$, the subroutine sets the advance correction gain *Gkvnt* equal to the immediately preceding value $Gkvnt_{n-1}$ in a step S148, sets the advance correction time constant equivalent value *Tcvnt* equal to the immediately preceding value $Tcvnt_{n-1}$, and proceeds to the step S150.

In the step S150, an opening prediction value *Cavnt* is calculated from the equation (11) below using the advance correction time constant equivalent value *Tcvnt* and the target opening *Rvnt.*

$$Cavnt = Rvnt \cdot Tcvnt + Cavnt_{n-1} \cdot (1 - Tcvnt) \qquad (11)$$

where, $Cavnt_{n-1} = Cavnt$ calculated on the immediately preceding occasion the subroutine was executed.

In a subsequent step S151, an open loop control amount *Avnt_f* of the target opening is calculated by the following equation (12) using the opening prediction value *Cavnt* and the target opening *Rvnt.*

$$Avnt\_f = Gkvnt \cdot Rvnt - (Gkvnt - 1) \cdot Cavnt_{n-1} \qquad (12)$$

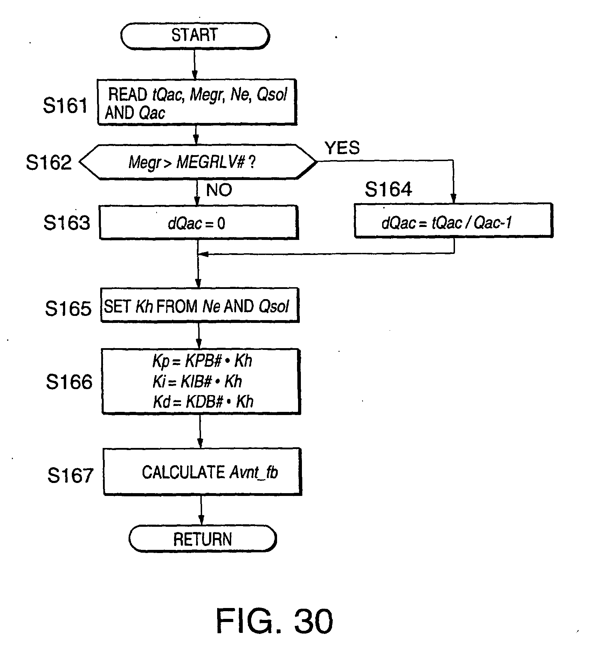

After executing the subroutine of FIG. 29, the control unit 41 returns to the routine of FIG. 15, and calculates a feedback correction amount Avnt_fb of the target opening *Rvnt* using the subroutine shown in FIG. 30 in a step S76.

Referring to FIG. 30, the control unit 41 first reads the target intake air amount *tQac*, target EGR rate *Megr,* engine rotation speed *Ne*, target fuel injection amount *Qsol* and the real intake air amount *Qac* in a step S161.

In a step S162, the target EGR rate *Megr* is compared with the predetermined value *MEGRLV#*. The predetermined value *MEGRLV#* is the same as that which was used in the step S102 of FIG. 20. Herein, it is determined whether or not to perform exhaust gas recirculation by comparing the target EGR rate *Megr* with the predetermined value *MEGRLV#.*

$Megr \geq MEGRLV\#$ is a region where exhaust gas recirculation should be performed. In this case, the subroutine proceeds to a step S164, and an error rate *dQac* of the target intake air amount *tQac* is calculated relative to the real intake air amount *Qac* by the following equation (13).

$$dQac = (tQac / Qac) - 1 \qquad (13)$$

When the target intake air amount *tQac* is larger than the real intake air amount *Qac*, the error rate *dQac* takes a positive value, and when the target intake air amount *tQac* is smaller than the real intake air amount *Qac*, the error rate *dQac* takes a negative value.

If the target intake air amount *tQac* is equal to the real intake air amount *Qac*, the error rate *dQac* is zero.

*Megr < MEGRLV#* is a region in which exhaust gas recirculation is not performed. In this case, the subroutine sets the error rate *dQac* to 0 in a step S163.

After setting the error rate *dQac*, the subroutine proceeds to a step S165.

In the step S165, a feedback gain correction coefficient *Kh* used for feedback control of the target opening *Rvnt* is calculated, from the engine rotation speed *Ne* and the target fuel injection amount *Qsol,* by looking up a map stored beforehand in the control unit 41. The map is set so as to increase the correction coefficient *Kh* the larger the load of the diesel engine 1 represented by the target fuel injection amount *Qsol*, and the larger the rotation speed *Ne* of the diesel engine 1.

In a following step S166, a proportional feedback gain *Kp*, integral feedback gain *Ki* and differential feedback gain *Kd* are calculated by multiplying the correction coefficient *Kh* by a proportion constant *KPB#*, integral constant *KIB#* and differential constant *KDB#*, respectively.

In a step S167, based on these gains, the feedback control amount Avnt_fb of the target opening *Rvnt* of the variable nozzle 53 is calculated using proportional/integral/differential control equations known in the art.

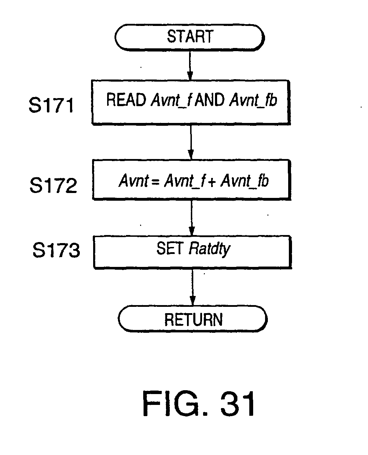

After the above calculation, the control unit 41 returns to the routine of FIG. 15, and performs linearization processing on the target opening *Rvnt* using a subroutine shown in FIG. 31 in a step S77.

Referring to FIG. 31, in a step 171, the control unit 41 reads the open loop control amount *Avnt_f* and the feedback control amount *Avnt_fb* of the target opening *Rvnt.*

In a next step S172, a command opening *Avnt* is calculated by summing these control amounts.

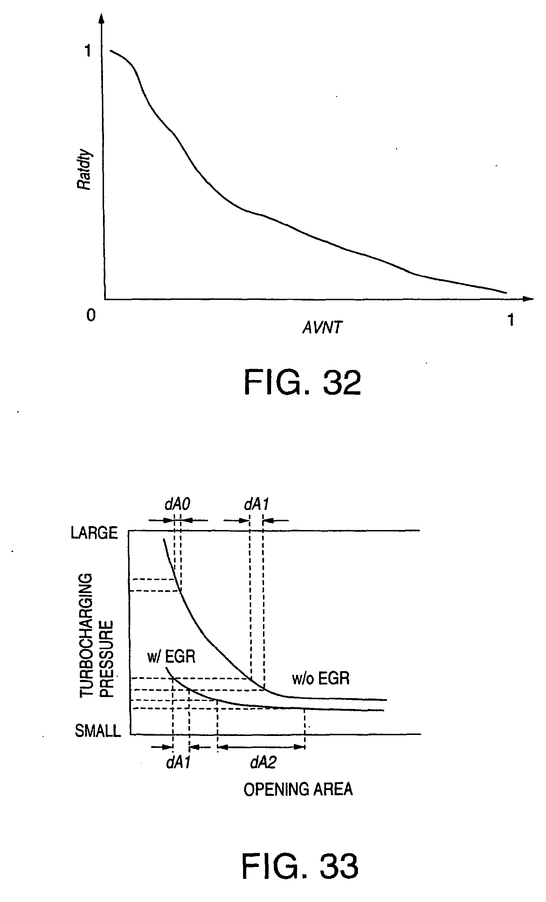

In a following step S173, a linearization processing value *Ratdty* of the command opening *Avnt* is calculated from the command opening *Avnt* by looking up a map of FIG. 32 previously stored in the memory of the control unit 41. This linearization is required for the following reason.

FIG. 33 shows the characteristics of the opening area of the variable nozzle 53 with respect to the turbocharging pressure. The characteristics when EGR is performed is indicated by a curve w/ EGR and the characteristics when EGR is not performed is indicated by another curve w/o EGR. As can be understood from this figure, when the turbocharging pressure is high, or the intake air amount is large, the variation of the opening area of the variable nozzle 53 relative to the variation of the turbocharging pressure is small. When the turbocharging pressure is low, or the intake air amount is small, the opening area of the variable nozzle 53 largely varies with respect to the variation of the turbocharging pressure. EGR further promotes this tendency. In other words, if the opening area of the variable nozzle 53 is controlled with a fixed feedback gain, it is difficult to control precisely the turbocharging pressure. In order to ensure the prompt response of the turbocharging pressure, the feedback gain *Kh* must be set to vary according to running conditions.

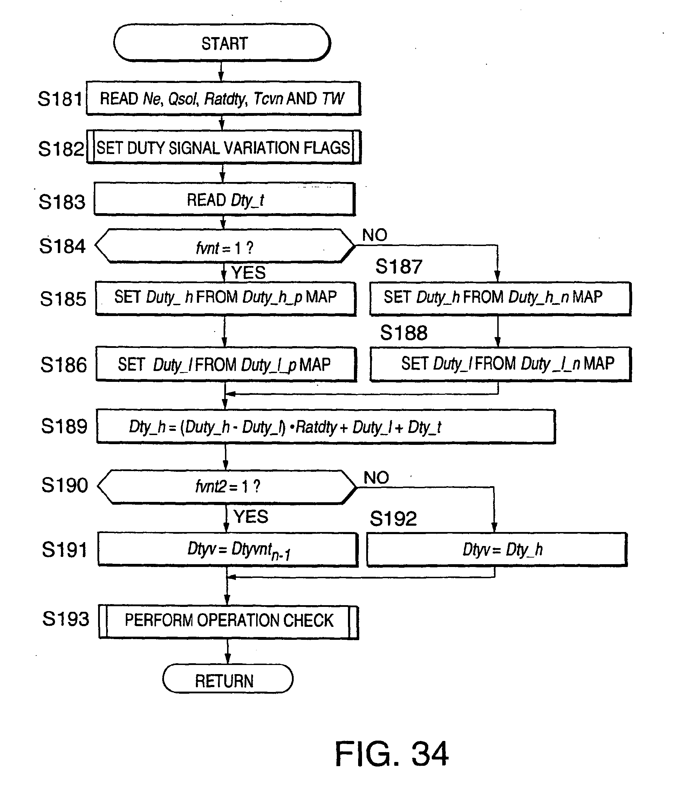

After this processing, the control unit 41 returns again to the routine of FIG. 15, and determines the duty value *Dtyvnt* using a subroutine shown in FIG. 34 in a step S78.

Referring to FiG. 34, in a step S181, the control unit 41 reads the engine rotation speed *Ne,* target fuel injection amount *Qsol*, linearization processing value *Ratdty* of the command opening, advance correction time constant equivalent value *Tcvnt* and cooling water temperature *Tw* of the diesel engine 1.

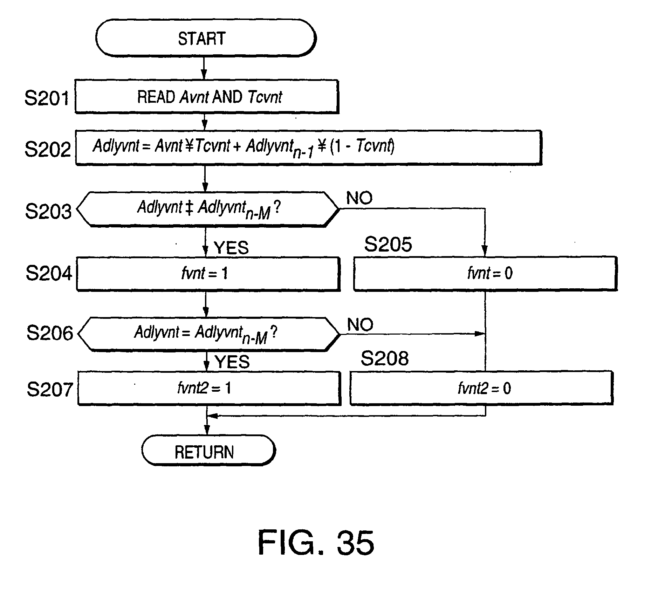

In a step S182, duty signal variation flags are set using the subroutine shown in FIG. 35.

Referring to FIG. 35, the control unit 41 first reads the command opening *Avnt* and the advance correction time constant equivalent value *Tcvnt* in a step S201.

In a next step S202, a command opening prediction value *Adlyvnt* is calculated by the following equation (14).

$$Adlyvnt = Avnt \cdot Tcvnt + Adlyvnt_{n-1} \cdot (1 - Tcvnt) \qquad (14)$$

where, $Adlyvnt_{n-1}$ = value of *Adlyvnt* calculated on the immediately preceding occasion the subroutine was executed.

Here, the relation between the command opening *Avnt* and the command opening prediction value *Adlyvnt* corresponds to the relation between the target opening *Rvnt* and the opening prediction value *Cavnt.*

In a following step S203, the command opening prediction value *Adlyvnt* is compared with a command opening prediction value $Adlyvnt_{n-M}$ calculated by the subroutine executed *M* times ago.

When $Adlyvnt \geq Adlyvnt_{n-M}$, the command opening is increasing or constant. In this case, the subroutine sets an operation direction flag $fvnt$ to 1 in a step S204, and proceeds to a step S206.

In the step S206, it is determined whether or not $Adlyvnt = Adlyvnt_{n-M}$. When $Adlyvnt = Adlyvnt_{n-M}$, in a step S207, a duty hold flag $fvnt2$ is set to 1, and the subroutine is terminated.

When $Adlyvnt = Adlyvnt_{n-M}$ is not satisfied, the routine proceeds to a step S208.

When $Adlyvnt < Adlyvnt_{n-M}$ in the step S203, it shows that the command opening is decreasing. In this case, the subroutine resets the operation direction flag $fnvt$ to zero in a step S205, and the routine proceeds to the step S208.

In the step S208, the duty hold flag $fvnt2$ is reset to zero, and the subroutine is terminated.

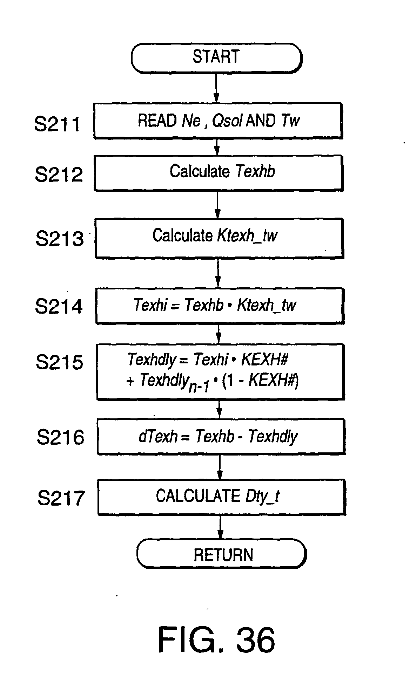

Thus, after setting the two flags $fvnt$ and $fvnt2$, the control unit 41 reads a duty value temperature correction amount $Dty\_t$ in a step S183 of FIG. 34. The duty value temperature correction amount $Dty\_t$ is calculated by a routine of FIG. 36 performed independently in synchronism with the REF signal.

Referring to FIG. 36, in a step S211, the control unit 41 first reads the engine rotation speed $Ne,$ target fuel injection amount $Qsol$ and cooling water temperature $Tw.$

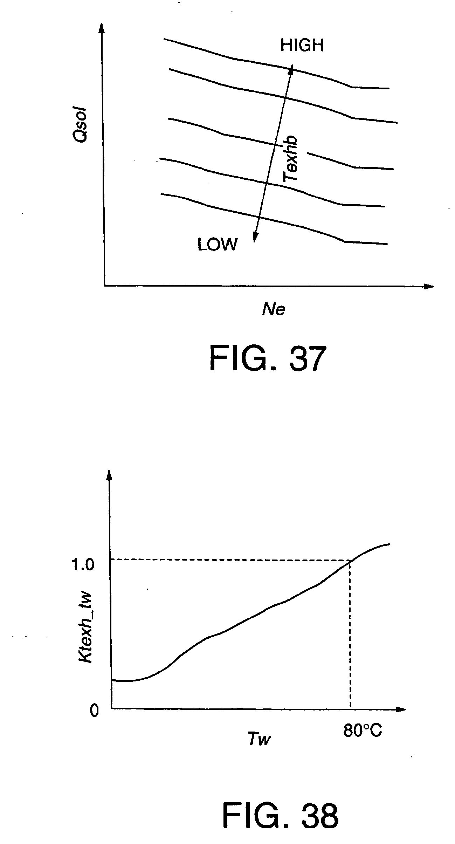

In a step S212, a basic exhaust gas temperature $Texhb$ is calculated from the engine rotation speed $Ne$ and target fuel injection amount $Qsol$ by looking up a map shown in FIG. 37 previously stored in the memory of the control unit 41. The basic exhaust gas temperature $Texhb$ is the exhaust gas temperature after the diesel engine 1 has completed warming up.

In a next step S213, a water temperature correction coefficient $Ktexh\_Tw$ is calculated by looking up a map shown in FIG. 38 stored in the control unit 41, based on the cooling water temperature $Tw.$

In a step S214, an exhaust gas temperature $Texhi$ is calculated by multiplying the basic exhaust gas temperature $Texhb$ by the water temperature correction coefficient $Ktexh\_Tw.$

In a next step S215, a real exhaust gas temperature $Texhdly$ is calculated by adding a first order processing delay to the exhaust gas temperature $Texhi$ by the following equation (15). This value is a value which takes account of the delay due to the heat inertia in the variation of exhaust gas temperature.

$$Texhdly = Texhi \cdot KEXH\# + Texhdly_{n-1} \cdot (1 - KEXH\#) \qquad (15)$$

where, $KEXH\#$ = constant, and

$Texhdly_{n-1}$ = $Texhdly$ calculated on the immediately preceding occasion when the subroutine was executed.

In a following step S216, a difference $dTexh$ of the basic exhaust gas temperature $Texhb$ and this real exhaust gas temperature $Texhdly$ is calculated.

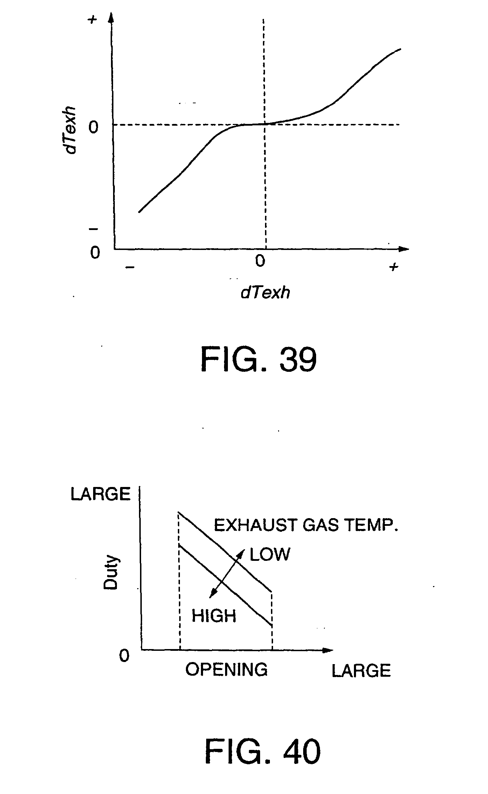

In a last step S217, the duty value temperature correction amount $Dty\_t$ is calculated by looking up a map shown in FIG. 39 previously stored in the memory of the control unit 41, based on the difference $dTexh.$ The meaning of the processing of the steps S216 and S217 will be described in detail later.

After reading the value of $Dty\_t$ in the step S183, the control unit 41 performs processing after the step S184 of FIG. 34. Steps S184-S189 are steps which add hysteresis processing to the duty value.

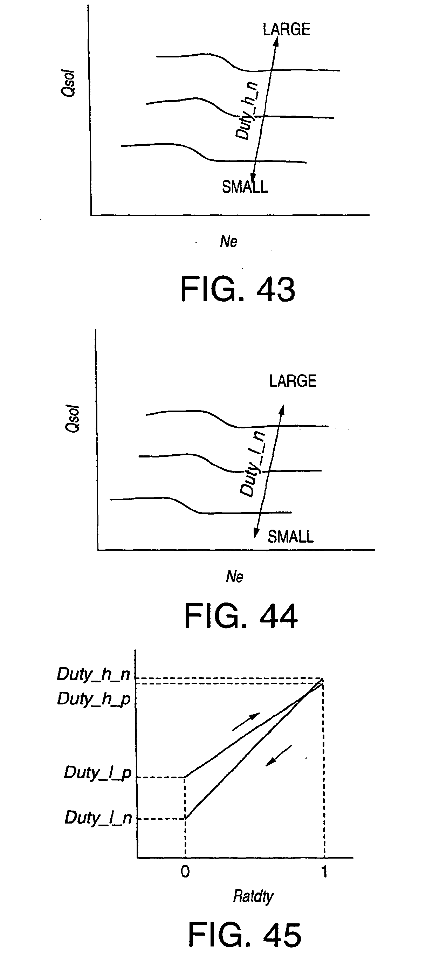

Describing this hysteresis processing with reference to FIG. 45, when the linearization processing value $Ratdty$ of the command opening $Avnt$ is increasing, the duty value is made to vary according to a straight line which joins a command signal $Duty\_l\_p$ when the variable nozzle 53 is fully open, and a command signal $Duty\_h\_p$ when the variable nozzle 53 is fully closed. On the other hand, when the linearization processing value $Ratdty$ is decreasing, the duty value is made to vary according to a straight line which connects a command signal $Duty\_l\_n$ when the variable nozzle 53 is fully open, and a command signal $Duty\_h\_n$ when the variable nozzle 53 is fully closed. In the drawing, two lines intersect in the region where the variable nozzle 53 is nearly closed, but this region is a region which is not used in actual control of the pressure control valve 56. These characteristics are set assuming that the diesel engine 1 has completely warmed up. When the real exhaust gas temperature $Texhdly$ is low, the pressure actuator 54 has the characteristic of opening the variable nozzle 53 larger for the same duty value, as shown in FIG. 40. Hence, it is necessary to apply the temperature correction amount $Dty\_t$ calculated in the steps S216, S217 of FIG. 36, to compensate the difference in the characteristic of the pressure actuator 54 due to the exhaust gas temperature.

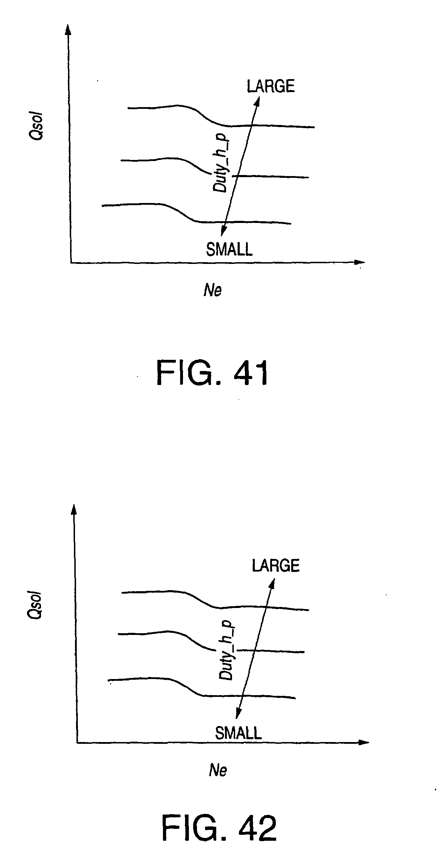

Now, the control unit 41 determines the operation direction flag $fvnt$ in the step S184. When the operation direction flag $fvnt$ is 1, i.e., when the command opening $Avnt$ is increasing or constant, the processing of steps S185, S186 is performed. In the step S185, a duty value $Duty\_h$ when the variable nozzle 53 is fully closed, is calculated based on the target fuel injection amount $Qsol$ by looking up a $Duty\_h\_p$ map shown in FIG. 41.

In the following step S 186, a duty value $Duty\_l$ when the variable nozzle 53 is fully open, is calculated by looking up a *Duty_l_p* map shown in FIG. 42. After this processing, the subroutine proceeds to a step S189.

When the operation direction flag *fvnt* is 0 in the step S184, i.e., when the command opening *Avnt* is decreasing, the processing of steps S187, S188 is performed. In the step S187, the duty value *Duty_h* when the variable nozzle 53 is fully closed, is calculated based on the target fuel injection amount *Qsol* by looking up a *Duty_h_n* map shown in FIG. 43. In the following step S188, the duty value *Duty_l* when the variable nozzle 53 is fully open, is calculated based on the target fuel injection amount *Qsol* by looking up a *Duty_l_n* map shown in FIG. 44.

After this processing, the subroutine proceeds to a step S189.

In the step S189, a command duty basic value *Dty_h* is calculated by performing linear interpolation processing by the following equation (16) using the duty values *Duty_h*, *Duty_l* found by the above processing, the linearization processing value *Ratdty* of the command opening *Avnt*, and the temperature correction amount *Dty_t*.

$$Dty\_h = (Duty\_h - Duty\_l) \cdot Ratdty + Duty\_l + Dty\_t \qquad (16)$$

By changing the straight line used for linear interpolation processing in the case where the command opening *Avnt*, is decreasing, and the case where it is not, the command duty basic value *Dty_h* is made smaller, for the same linearization processing value *Ratdty*, in the case where the command opening *Avnt* is decreasing than in other cases.

In a next step S190, the duty hold flag *fvnt2* is determined. When the duty hold flag *fvnt2* is 1, i.e., the command opening prediction value *Adlyvnt* is not changing, a command duty value *Dtyv* is set equal to the duty value $Dtyvnt_{n-1}$ calculated on the immediately preceding occasion the subroutine was executed, in a step S191. The duty value $Dtyvnt_{n-1}$ will be described in detail later.

When the duty maintenance flag *fvnt2* is 0, i.e., when the command opening prediction value *Adlyvnt* is changing, in a step S192, the command duty value *Dtyv* is set equal to the command duty basic value *Dty_h* calculated in the step S189.

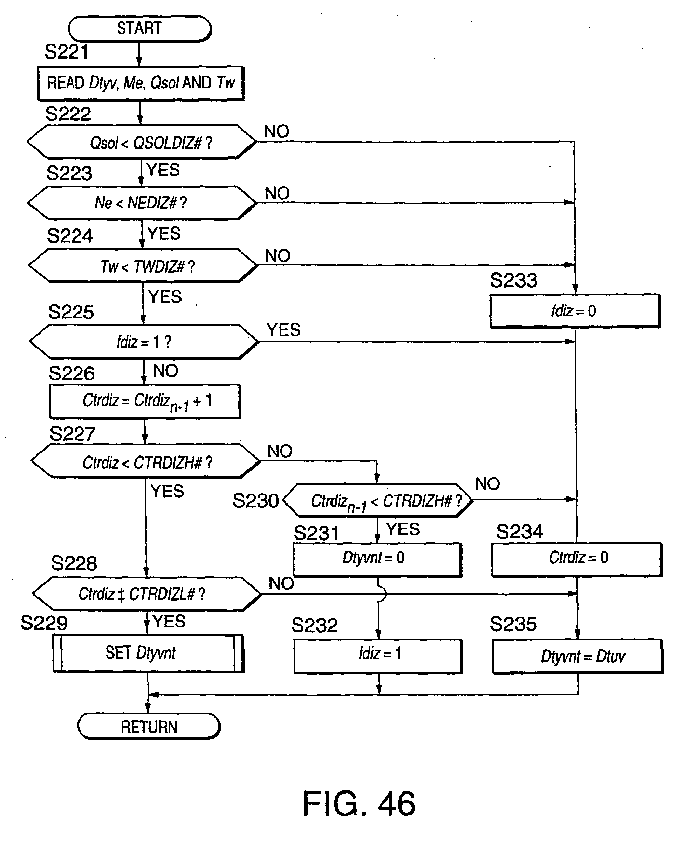

Thus, after determining the command duty value *Dtyv* in the step S191 or step S192, in a final step S193, the control unit 41 performs an operation check on the variable nozzle 53 using the subroutine of FIG. 46 based on the command duty value *Dtyv*.

Referring to FIG. 46, in a step S221, the control unit 41 first reads the command duty value *Dtyv*, engine rotation speed *Ne*, target fuel injection amount *Qsol* and the cooling water temperature *Tw*.

In subsequent steps S222-S225, it is determined whether or not operation check conditions are satisfied. An operation check is performed only when all these conditions are satisfied.

In the step S222, it is determined whether or not the target fuel injection amount *Qsol* is less than a predetermined value *QSOLDIZ#*. When this condition is satisfied, it means that the diesel engine 1 is performing fuel cut.

In the step S223, it is determined whether or not the engine rotation speed *Ne* is less than a predetermined value *NEDIZ#*. When this condition is satisfied, it means that the rotation speed *Ne* of the diesel engine 1 is in an intermediate or low speed region.

In the step S224, it is determined whether or not the cooling water temperature *Tw* is less than a predetermined value *TwDIZ#*. When this condition is satisfied, it means that warming up of the diesel engine 1 is not complete.

In the step S225, it is determined whether or not an operation check flag *Fdiz* is 0. When this condition is satisfied, it means that an operation check has not yet been performed.

When all the conditions are satisfied, an operation check counter value *CtFdiz* is incremented in a step S226, and the routine proceeds to a step S227.

If any of the determination results of the steps S222-S224 is not satisfied, the subroutine resets the operation check flag *Fdiz* to 0 in a step S233, and proceeds to a step S234. However, when the operation check flag *Fdiz* is 1 in the step S225, it proceeds to the step S234 immediately.

In a step S227, the operation check counter value *CtFdiz* is compared with a predetermined upper limiting value *CTRDIZH#*.

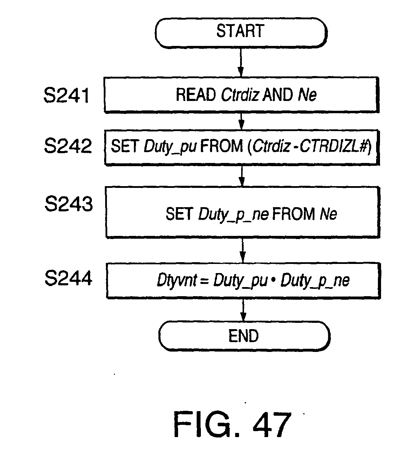

When the operation check counter value *CtFdiz* is smaller than the upper limiting value *CTRDIZH#*, in a step S228, the operation check counter value *CtFdiz* is compared with a predetermined lower limiting value *CTRDIZL#*. When the operation check counter value *CtFdiz* is not less than the lower limiting value *CTRDIZL#*, in a step S229, the duty value *Dtyvnt* is set for checking operation using a subroutine shown in FIG. 47.

The upper limiting value *CTRDIZH#* is set to, for example, 7 seconds, and the lower limiting value *CTRDIZL#* is set to, for example, 2 seconds. In this case, the duty value for checking operation is set only in a 5 second interval of the difference between the upper limiting value and lower limiting value.

Here, referring to FIG. 47, a subroutine for setting the duty value for operation check will be described.

The control unit 41, in a step S241, first reads the operation check counter value *CtFdiz* and engine rotation speed *Ne.*

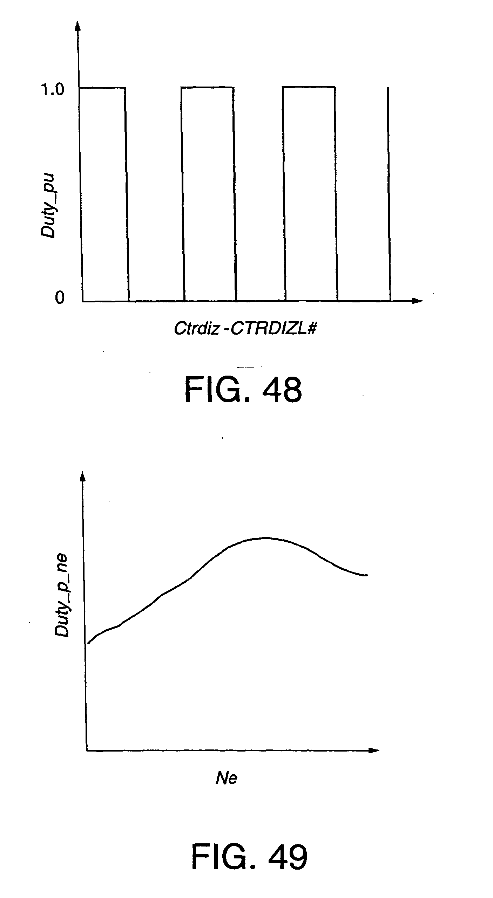

In a following step S242, a control pattern value *Duty_pu* is set by looking up a map shown in FIG. 48based on the difference of the operation check counter value *CtFdiz* and lower limiting value *CTRDIZL#*. This map is previously stored in the memory of the control unit 41 The control pattern value *Duty_pu* is set so that it repeatedly varies between 0 and 1 with a short period according to the elapsed time after the operation check counter value *CtFdiz* exceeds the lower limiting value *CTRDIZL#.*

In a next step S243, a duty value *Duty_p_ne* commanded to the pressure control valve 56 is calculated by looking up a map shown in FIG. 49 previously stored in the memory of the control unit 41, based on the engine rotation speed *Ne.* The duty value *Duty_p_ne* is set supposing that the duty for checking the opening and closing operation of the variable nozzle 53 differs according to the engine rotation speed *Ne.* For example, when the variable nozzle 53 is to be closed, it must close against the exhaust gas pressure. The exhaust gas pressure increases in accordance with the increase in engine rotation speed *Ne.*

Further, when the engine rotation speed *Ne* is in the high-speed region, the closing of the variable nozzle 53 to check operation has a major impact on the engine running environment. Therefore, in the high speed region, the duty value *Duty_p_ne* is decreased as the engine rotation speed *Ne* increases so as to reduce the impact on the engine running environment.

In a following step S244, the duty value *Dtyvnt* is calculated by multiplying the duty value *Duty_p_ne* by the control pattern value *Duty_pu,* and the subroutine is terminated.

In this way, after terminating the setting of the duty value for checking operation in the step S229 of FIG. 46, the subroutine of FIG. 46 is also terminated.

On the other hand, in the step S227 of FIG. 46, when the operation check counter value *CtFdiz* is not less than the upper limiting value *CTRDIZH#,* the processing of the step S230 is performed. Here, an immediately preceding value *CtFdiz$_{n-1}$* of the operation check counter value *CtFdiz* operation is compared with the upper limiting value *CTRDIZH#.* If the immediately preceding value *CtFdiz$_{n-1}$* is less than the upper limiting value *CTRDIZH#*, it means that *CTRDIZH#* reached the upper limiting value *CTRDIZH#* for the first time in the repeat execution of this subroutine, the duty value *Dtyvnt* is set to 0 in a step S231, the operation check flag *Fdiz* is set to 1 in a step S232, and the subroutine is terminated.

By once setting the duty value *Dtyvnt* to 0 in the step S231when the operation check is completed, the variable nozzle 53 fully opens. This operation aims to maintain control precision during ordinary control performed thereafter. By setting the operation check flag *Fdiz to* 1, the determination result of the step S225 will always be negative in the execution of the subroutine thereafter. It means the operation check of the variable nozzle 53 is performed only once after starting the diesel engine 1.

On the other hand, when the immediately preceding value *CtFdiz$_{n-1}$* of the operation check counter value *CtFdiz* is not less than the upper limiting value *CTRDIZH#* in the step S230, the subroutine proceeds to the step S234. In the step S234, the operation check counter value *CtFdiz* is reset to 0, and the routine proceeds to a step S235.

When the operation check counter value *CtFdiz* is less than the predetermined lower limiting value *CTRDIZL# in the step S228*, the subroutine also proceeds to the step S235.

In the step S235, the duty value *Dtyvnt* for operation check is set equal to the command duty value *Dtyv* determined in the step S191 or step S192, and the subroutine is terminated. In this case therefore, the ordinary control of the variable nozzle 53 is performed.

In particular, when operation of the pressure actuator 54 is unstable such as at low temperatures etc., this operation check of the variable nozzle 53 makes the operation of the variable nozzle 53 smooth and increases reliability in control of turbocharging pressure.

In this way, by ending the subroutine of FIG. 46, the processing of the subroutine of FIG. 34 and also that of the main routine of FIG. 15 is terminated.

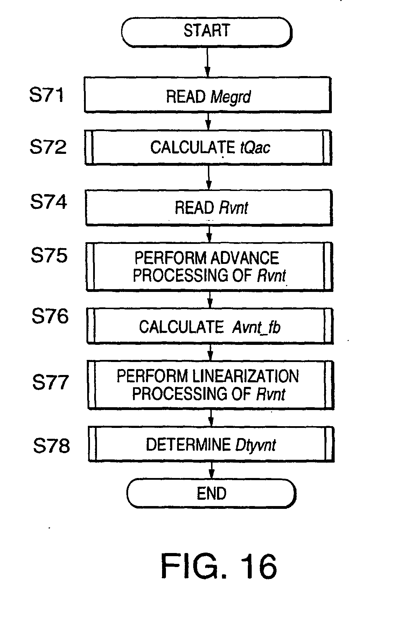

Next, referring to FIG. 16, a second embodiment of this invention will be described relating to the pressure control of the turbocharger.

According to this embodiment, a routine shown in FIG. 16 is used instead of the routine of FIG. 15 for calculating the duty value *Dtyvnt* of the pressure control valve of the turbocharger. As in the case of the routine of FIG. 15, the routine of FIG. 16 is also performed at an interval of 10 milliseconds.

In the routine of FIG. 15, the target opening *Rvnt* of the variable nozzle 53 was calculated based on the real EGR amount *Qec*, but in the routine of FIG. 16, the target opening *Rvnt* is calculated based on the real EGR rate *Megrd.*

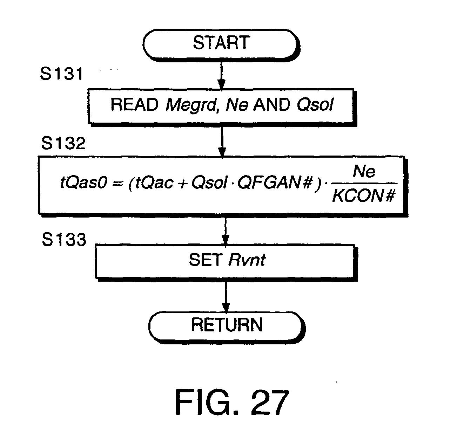

Specifically, in the routine of FIG. 16, the processing of the step S73 of FIG. 15 which calculates the real EGR amount *Qec*, is omitted. At the same time, the routine shown in FIG. 27 is applied instead of the routine shown in FIG. 25 in the calculation of the target opening *Rvnt* of the variable nozzle 53. The remaining processing details are identical to those of the first embodiment.

Referring to FIG. 27, in a step S131, the control unit 41 reads the target intake air amount *Qtac*, real EGR rate *Megrd,* engine rotation speed *Ne* and target fuel injection amount *Qsol*.

In a step S132, an identical calculation is performed to that of the step S122 of FIG. 15, and the intake air amount equivalent value *tQas0* is calculated.

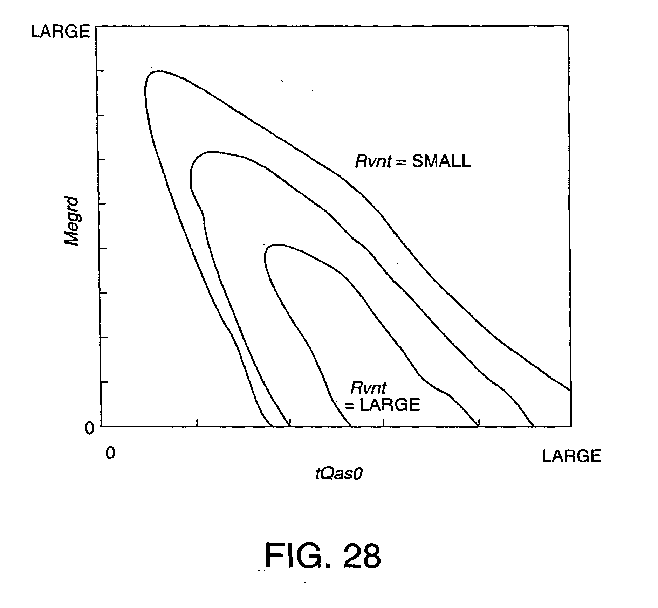

In a step S133, the target opening *Rvnt* of the variable nozzle 53 is calculated by looking up a map shown in FIG. 28 previously stored in the memory of the control unit 41, based on the intake air amount equivalent value *tQas0* and real EGR rate *Megrd.*

In the map of FIG. 26 of the first embodiment, the vertical axis represents the EGR rate equivalent value *Qes0*, but in the map of FIG. 28, the vertical axis represents the real EGR rate *Megrd.* The two maps differ only with regard to these parameters, and the characteristics of the target opening *Rvnt* obtained are identical whichever map is used.

The map used to calculate the target opening *Rvnt* may be specified using various parameters in addition to the above. For example, in the map of FIG. 26, instead of the EGR amount equivalent value *Qes0* on the vertical axis, the real EGR amount *Qec* or the EGR amount *Qec0* per cylinder at the inlet of the collector 3A may be taken. In a map of FIG. 28, instead of the intake air amount equivalent value *tQas0* on the horizontal axis, the target intake air amount *tQac* may be taken. Further, instead of the real EGR rate *Megrd* on the vertical axis, the target EGR rate *Megr* may be taken.

Next, referring to FIG. 5, the calculation of the target opening area *Aev* of the EGR valve 6 will be described. This routine constitutes the main routine for controlling the EGR valve 6 This routine is performed every time the REF signal is input.

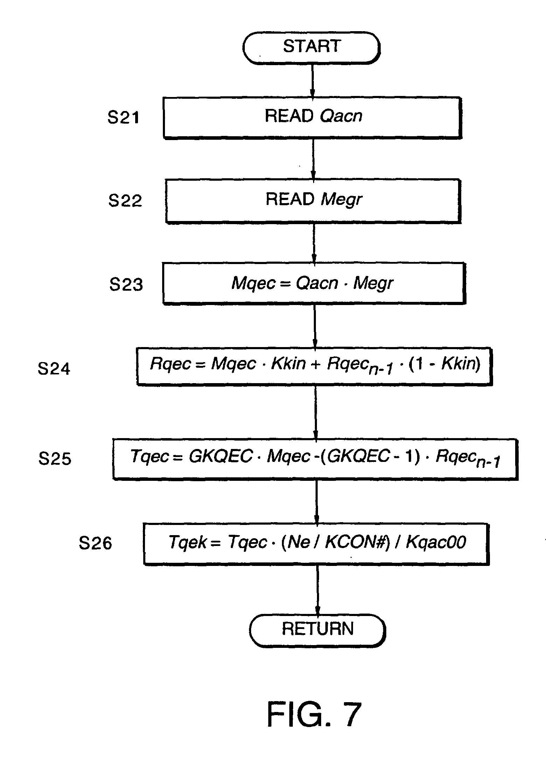

First, in a step S11, the control unit 41 calculates a target EGR amount *Tqec* of the EGR valve 6 using a subroutine shown in FIG. 7.

Referring to FIG. 7, in a step S21, the control unit 41 reads the intake air amount *Qac_n* per cylinder at the inlet of the collector 3A. *Qac_n* is a value calculated in the above-mentioned step S33 of FIG. 8.

In a following step S22, the target EGR rate *Megr* is read. The target EGR rate *Megr* is a value calculated by the routine of FIG. 11.

In a next step S23, a required EGR amount *Mqec* is calculated by the following equation (17). The required EGR amount *Mqec* is also an amount per cylinder.

$$Mqec = Qac_n \cdot Megr \qquad (17)$$

In a next step S24, delay processing is performed on the required EGR amount *Mqec* by the following equation (18), using the time constant equivalent value *Kkin* calculated by the routine of FIG. 18, to convert it to an intermediate value *Rqec* corresponding to the required EGR amount per cylinder in the intake valve position of the diesel engine 1. The delay processing corresponds to the response delay of the negative pressure control valve 5 and the EGR valve6.

$$Rqec = Mqec \cdot Kkin + Rqec_{n-1} \cdot (1 - Kkin) \qquad (18)$$

where, *RQec_{n-1}* = *Rqec* calculated on the immediately preceding occasion the subroutine was executed.

In a step S25, the target EGR amount *Tqec* per cylinder in the position of the EGR valve 6 is calculated by performing advance processing by the following equation (19) using the intermediate value *Rqec* and the required EGR amount *Mqec.* This advance processing compensates the delay of the variation of EGR amount due to the time required for the exhaust gas to travel from the EGR valve 6 to the intake valve of the diesel engine 1 via the collector 3A.

$$Tqec = Mqec \cdot GKQEC + Rqec_{n-1} \cdot (1 - GKQEC) \qquad (19)$$

where, *GKQEC* = advance correction gain.

In a final step S26, the target EGR amount *Tqec* per cylinder is converted to a target EGR amount *Tqek* per unit time by the following equation (20).

$$Tqek = Tqec \cdot (Ne / KCON\#) / Kqac00 \qquad (20)$$

where, *Kqac00* = EGR amount feedback correction coefficient.

The EGR amount feedback correction coefficient *Kqac00* will be described later.

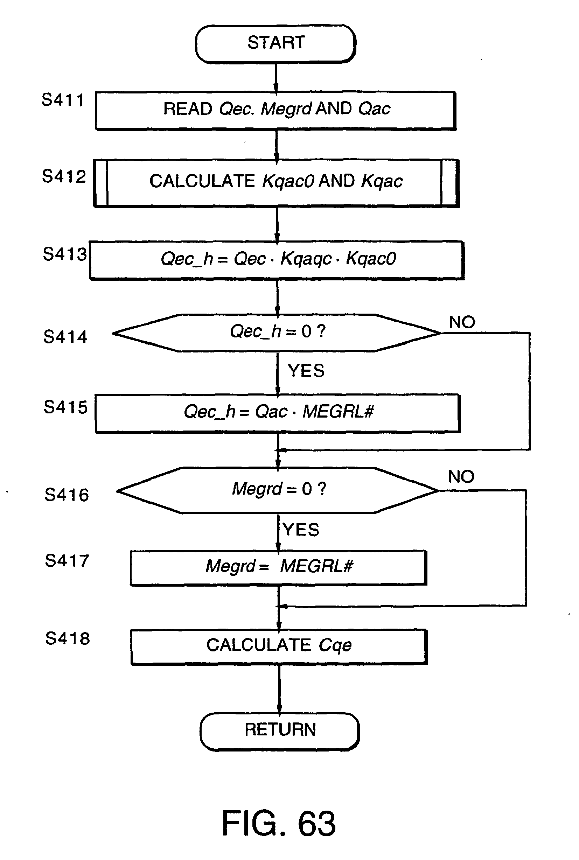

Next, referring again to FIG. 5, after calculating the target EGR amount *Tqek* per unit time, the control unit41 calculates the EGR valve flow velocity *Cqe* in a step S12 by using a subroutine of FIG. 63.

Referring to FIG. 63, in a step S411, the control unit 41 reads the real EGR amount *Qec*, real EGR rate *Megrd* and real intake air amount *Qac*.

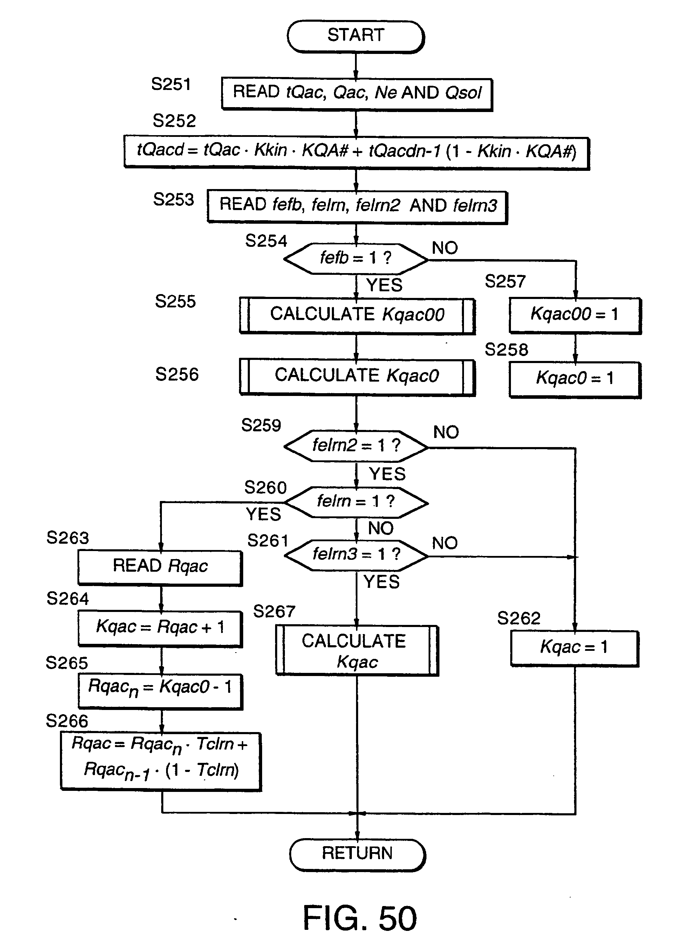

In a step S412, by a subroutine shown in FIG. 50, an EGR flow velocity feedback correction coefficient *Kqac0*, EGR flow velocity learning correction coefficient *Kqac* are calculated.

Referring to FIG. 50, in a step S251, the control unit 41 first reads the target intake fresh air amount *tQac*, real intake air amount *Qac*, engine rotation speed *Ne* and target fuel injection amount *Qsol*.

In a step S252, a delay processing value *tQacd* of the target intake fresh air amount *tQac* is calculated using the following equation (21), from the target intake fresh air amount *tQac* and the time constant equivalent value *Kkin* calculated by the routine of FIG. 8. This value corresponds to the target intake air amount in the intake valve position of the diesel engine 1.

$$tQacd = tQac \cdot Kkin \cdot KQA\# + tQacd_{n-1} \cdot (1 - Kkin \cdot KQA\#) \qquad (21)$$

where, *KQA#* = constant, and

$tQacd_{n-1}$ = *tQacd* calculated on the immediately preceding occasion when the subroutine was executed.

In a following step S253, a feedback permission flag *fefb*, a learning permission flag *felrn*, a learning value reflection permission flag *felrn2* and learning termination flag *felrn3* which are related to the control of the EGR valve opening are read.

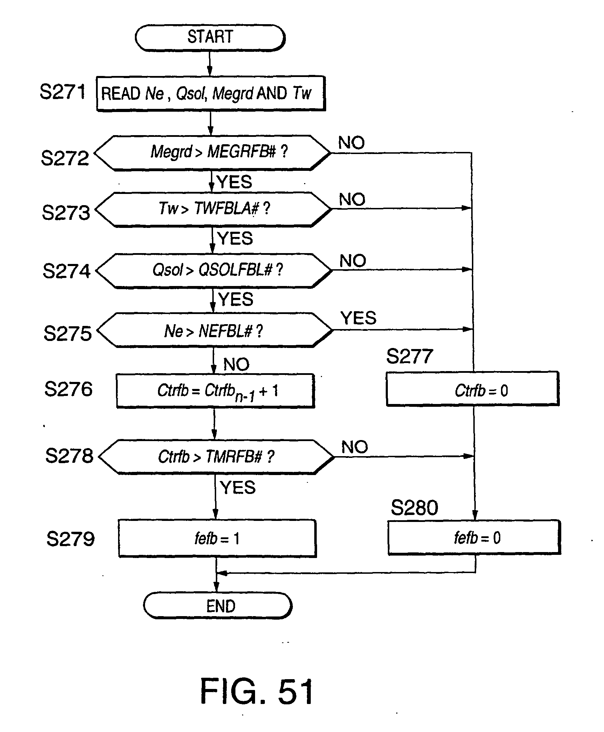

These flags are set by the independent routines shown in FIG. 51, FIG. 52 and FIG. 53, respectively. The initial value of each of the flags is

FIG. 51 shows the routine for setting the feedback permission flag *fefb*. This routine is performed at an interval of 10 milliseconds.

Referring to FIG. 51, firstly in a step S271, the control unit 41 reads the engine rotation speed *Ne,* target fuel injection amount *Qsol*, real EGR rate *Megrd* and water temperature *Tw*.

In subsequent steps S272-S275, the EGR amount feedback control conditions are determined.

In the step S272, it is determined whether or not the real EGR rate *Megrd* exceeds a predetermined value *MEGRFB#*. The predetermined value *MEGRFB#* is a value for checking that exhaust gas recirculation is actually performed. In the step S273, it is determined whether or not the cooling water temperature *Tw* exceeds a predetermined value *TwFBL#*. The predetermined value *TwFBL#* is set to 30'C. In a step S274, it is determined whether or not the target fuel injection amount *Qsol* exceeds a predetermined value *QSOLFBL#*.

The predetermined value *QSOLFBL#* is a value for checking that the diesel engine 1 is not in a fuel cut state. In a step S275, it is determined whether or not the engine rotation speed *Ne* exceeds a predetermined value *NeFBL#*. The predetermined value *NeFBL#* is a value for checking that the vehicle is not in a low-speed region where the diesel engine 1 stops rotation.

When all of the conditions of step S272-S275 are satisfied, the subroutine proceeds to a step S276 and increments a timer value *Ctrfb*.

In a following step S278, it is determined whether or not the timer value *Ctrfb* is greater than a predetermined value *TMRFB#*. The predetermined value *TMRFB#* is set to, for example, a value less than 1 second. When the result of this determination is affirmative, the subroutine sets the feedback permission flag *fefb* to 1 in a step S279, and the subroutine is terminated. On the other hand, if any of the conditions of the steps S272-S275 is not satisfied, in a step S277, the subroutine resets the timer value *Ctrfb* to 0, and proceeds to a following step S280.

When the determination of the step S278 is negative, the subroutine also proceeds to the step S280.

In the step S280, the feedback permission flag *fefb* is reset to 0 and the subroutine is terminated.

According to this subroutine, the feedback permission flag *fefb* is set to 1 only when the state where all of the conditions of the steps S272-S275 were satisfied, continues for a time exceeding the predetermined value *TMRFB#*, and in other cases, the feedback permission flag *fefb* is reset to 0.

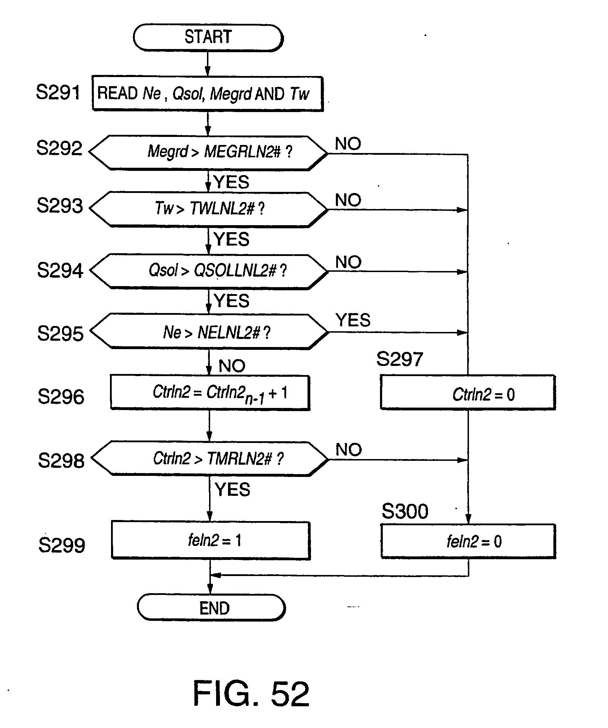

FIG. 52 shows a routine for setting the learning value reflection permission flag *felrn2*. This routine is also performed at an interval of 10 milliseconds.

Referring to FIG. 52, firstly in a step S291, the control unit 41 reads the engine rotation speed *Ne,* target fuel injection amount *Qsol,* real EGR rate *Megrd* and cooling water temperature *Tw.*

In subsequent steps S292-S295, EGR amount learning value reflection conditions are determined.

In the step S292, it is determined whether or not the real EGR rate *Megrd* exceeds a predetermined value *MEGRLN2#.* The predetermined value *MEGRLN2#* is a value for checking that exhaust gas recirculation is actually performed. In the step S293, it is determined whether or not the cooling water temperature *Tw* exceeds a predetermined value *TwLNL2#.* The predetermined value *TwLNL2#* is set to 20'C. In the step S294, it is determined whether or not the target fuel injection amount *Qsol* exceeds a predetermined value *QSOLLNL2#.* The predetermined value *QSOLLNL2#* is a value for checking that the diesel engine 1 is not in a fuel cut state. In the step S295, it is determined whether or not the engine rotation speed *Ne* exceeds a predetermined value *NeLNL2#.* The predetermined value *NeLNL2#* is a value for checking that the vehicle is not in a low-speed region where the diesel engine 1 stops rotation.

Only when all of the conditions of step S292-S295 are satisfied, the subroutine proceeds to a step S296 and increments a timer value *Ctrln2.*

In the following step S298 it is determined whether or not the timer value *Ctrln2* exceeds a predetermined value *TMRLN2#.* The predetermined value *TMRLN2#* is set to 0.5 seconds. When the result of this determination is affirmative, the subroutine sets the learning value reflection permission flag *felrn2* to 1 in a step S299, and the subroutine is terminated.

On the other hand, when any of the conditions of the steps S292-S295 is not satisfied, in a step S297, the subroutine resets the timer value *Ctrln2* to 0, and proceeds to a following step S300. When the determination of the step S298 is negative, the subroutine also proceeds to the step S300.

In the step S300, the learning value reflection permission flag *felrn2* is reset to 0 and the subroutine is terminated.

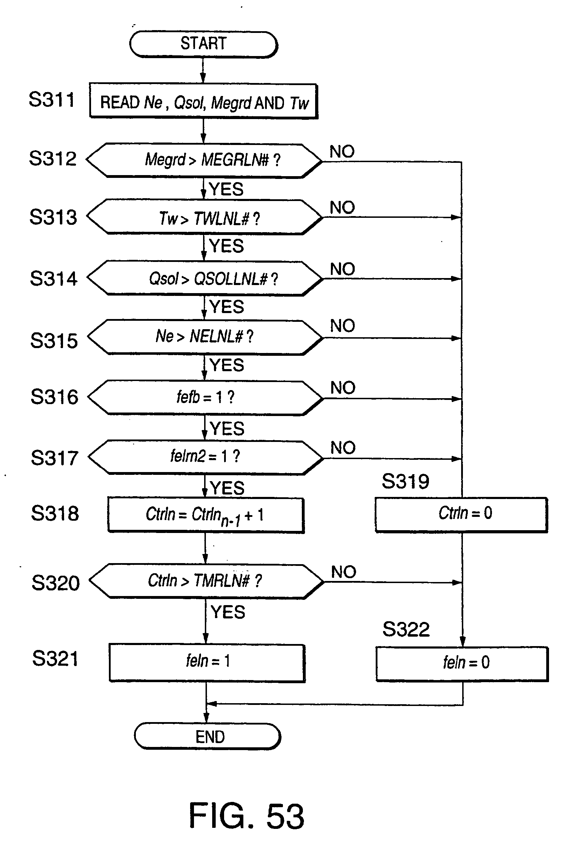

FIG. 53 shows the routine for setting the learning permission flag *felrn.* This routine is also performed at an interval of 10 milliseconds.

Referring to FIG. 53, firstly in a step S311, the control unit 41 reads the engine rotation speed *Ne,* target fuel injection amount *Qsol,* real EGR rate *Megrd,* and water temperature *Tw.*

In subsequent steps S312-S317, the EGR amount learning permission conditions are determined.

In the step S312, it is determined whether or not the real EGR rate *Megrd* exceeds a predetermined value *MEGRLN#.* The predetermined value *MEGRLN#* is a value for checking that exhaust gas recirculation is actually performed. In the step S313, it is determined whether or not the cooling water temperature *Tw* exceeds a predetermined value *TwLNL#.* The predetermined value *TwLNL#* is set to 70-80'C. In the step S314, it is determined whether or not the target fuel injection amount *Qsol* exceeds a predetermined value *QSOLLNL#.* The predetermined value *QSOLLNL#* is a value for checking that the diesel engine 1 is not in a fuel cut state. In the step S315, it is determined whether or not the engine rotation speed *Ne* exceeds a predetermined value *NeLNL#.* The predetermined value *NeLNL#* is a value for checking that the vehicle is not in a low-speed region where the diesel engine 1 stops rotation. In the step S316, it is determined whether or not the feedback permission flag *fefb* is 1. In the step S317, it is determined whether or not the learning value reflection permission flag *felrn2* is 1.

Only when all of the conditions of the steps S2312-S317 are satisfied, the subroutine proceeds to a step S318 and increments a timer value *Ctrln.*

In a following step S320, it is determined whether or not the timer value *Ctrln* exceeds a predetermined value *TMRLN#.* The predetermined value *TMRLN#* is set to 4 seconds. When the result of this determination is affirmative, the subroutine sets the learning permission flag *felrn* to 1 in a step S321, and the subroutine is terminated. On the other hand, if any of the conditions of the steps S312-S317 are not satisfied, in a step S319, the subroutine resets the timer value *Ctrln* to 0, and proceeds to a following step S322. The subroutine also proceeds to the step S322 when the determination of the step S320 is negative. In the step S322, the learning permission flag *felrn* is reset to 0, and the subroutine is terminated.

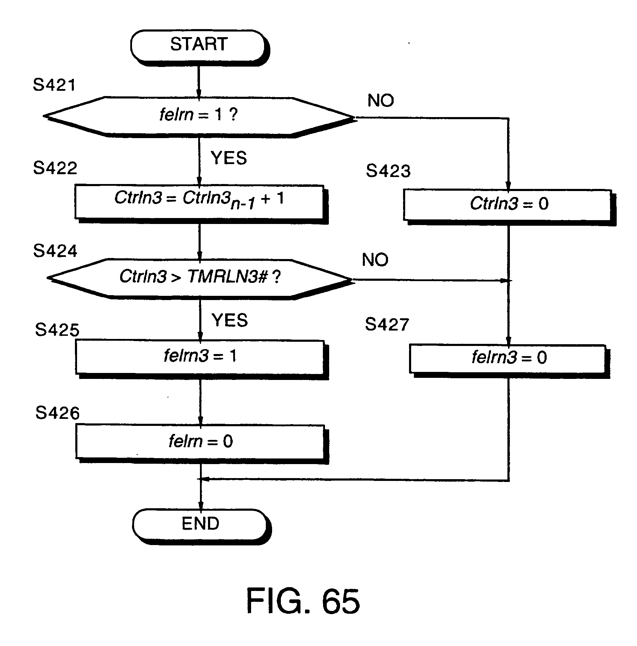

Fig. 65 shows a routine for setting a learning termination flag *felrn3.* This routine is performed at an interval of 10 milliseconds.

In a step S421, it is determined whether or not the learning permission flag *felrn* is 1. When the learning permission flag *felrn* is 1, the routine increments a timer value *Ctrln3* in a step S422, and proceeds to a step S424. When the learning permission flag *felrn* is not 1, the routine resets the timer value *Ctrln3* to zero in a step S423, and proceeds to a step S427.

In a step S424, it is determined whether or not the timer value *Ctrln3* exceeded a predetermined value *TMRLN3#.* When the timer value *Ctrln3* exceeded the predetermined value *TMRLN3#,* the learning termination flag *felrn3* is set to 1 in a step S425, the learning permission flag *felrn* is reset to 0 in a following step S426, and the routine is terminated. On the other hand, when the timer value *Ctrln3* does not exceed the predetermined value *TMRLN3#,* the routine proceeds to the step S427.

In the step S427, the learning termination flag *felrn3* is reset to zero, and the routine is terminated.

Referring again to FIG. 50, after reading this feedback permission flag *fefb,* learning value reflection permission flag *felrn2,* learning permission flag *felrn* and learning termination flag *felrn3,* in a step S254, the control unit 41 determines whether or not the feedback permission flag *fefb* is 1.

When the feedback permission flag *fefb* is 1, after calculating the EGR amount feedback correction coefficient *Kqac00* in a step S255, and the EGR flow velocity feedback correction coefficient *Kqac0* in a step S256, the control unit 41 proceeds to a step S259.

On the other hand, when the feedback permission flag *fefb* is not 1 in the step S254, the control unit 41 sets the EGR amount feedback correction coefficient *Kqac00* to 1 in a step S257, sets the EGR flow velocity feedback correction coefficient *Kqac0* to 1 in a following step S258, and then proceeds to the step S259.

Now, the calculation of the feedback correction coefficient *Kqac00* of the EGR amount performed in the step S255 and the calculation of the EGR flow velocity feedback correction coefficient *Kqac0* performed in the step S256, will be described.

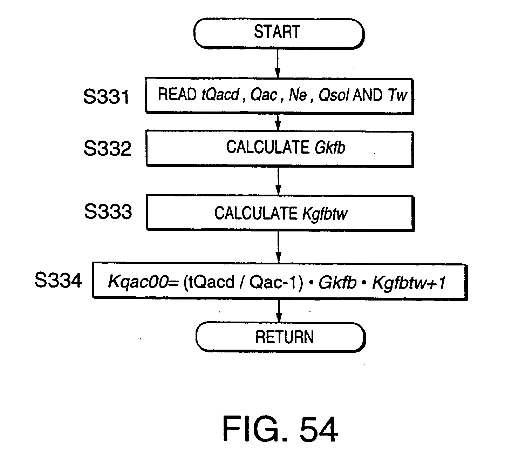

The calculation of the feedback correction coefficient *Kqac00* of the EGR amount is performed by a subroutine of FIG. 54.

Referring to FIG. 54, in a step S331, the control unit 41 first reads the delay processing value *tQacd* of the target intake air amount, real intake air amount *Qac*, engine rotation speed *Ne,* target fuel injection amount *Qsol* and the cooling water temperature *Tw.* The delay processing value *tQacd* is a value calculated in the step S252 of FIG. 50.

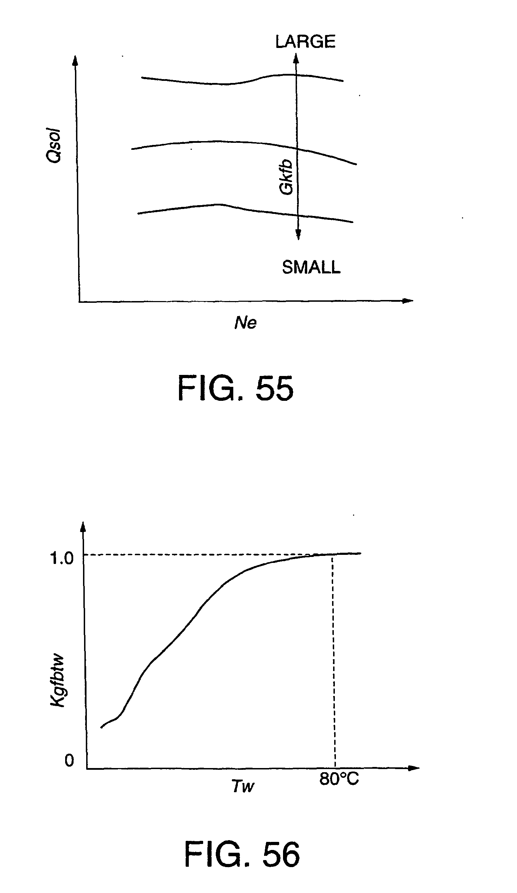

In a step S332, a correction gain *Gkfb* of the EGR flowrate is calculated by looking up a map shown in FIG. 55 previously stored in the memory of the control unit 41, based on the engine rotation speed *Ne* and the target fuel injection amount *Qsol.* In a following step S333, a water temperature correction coefficient *KgfbTw* of the correction gain is calculated by looking up a map shown in FIG. 56 previously stored in the memory of the control unit 41, based on the cooling water temperature *Tw.*

In a final step S334, the feedback correction coefficient *Kqac00* of the EGR amount is calculated by the following equation (22), using the correction gain *Gkfb* and the water temperature correction coefficient *KgfbTw.*

$$Kqac00 = (tQacd / Qac - 1) \cdot Gkfb \cdot Kgfbtw + 1 \tag{22}$$

(*tQacd/Qac*-1), the first term on the right hand side of equation (22), is an error ratio of the target intake air amount delay processing value *tQacd* relative to the real intake air amount *Qac.* Therefore, the feedback correction coefficient *Kqac00* of the EGR amount is a value centered on 1.

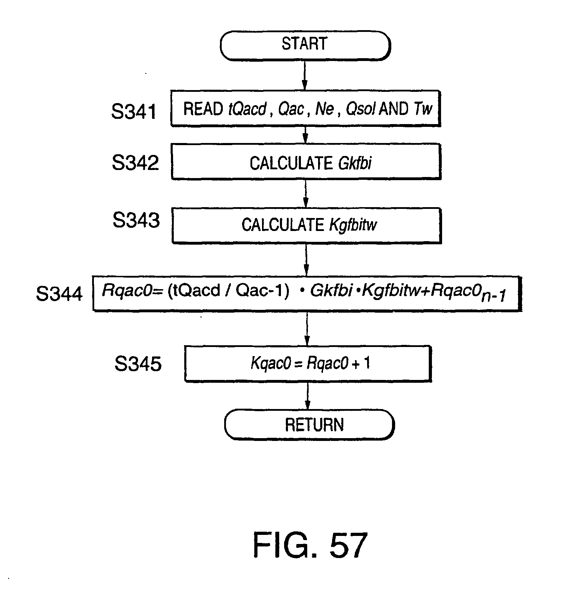

The calculation of the EGR flow velocity feedback correction coefficient *Kqac0* is performed by a subroutine shown in FIG. 57.

Referring to FIG.57, in a step S341, the control unit 41 first reads the delay processing value *tQacd*, real intake air amount *Qac*, engine rotation speed *Ne,* target fuel injection amount *Qsol* and the cooling water temperature *Tw.*

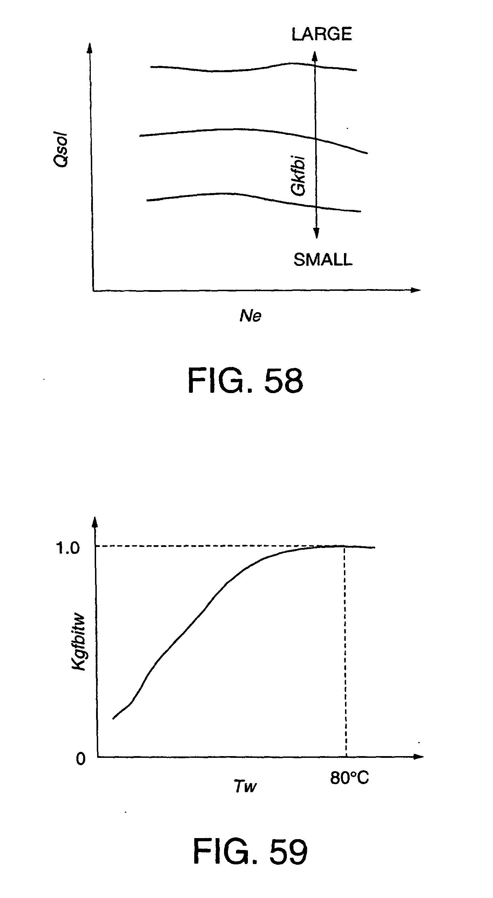

In a step S342, a correction gain *Gkfbi* of the EGR valve flow velocity is calculated by looking up a map shown in FIG. 58 previously stored in the memory of the control unit 41, based on the engine rotation speed *Ne* and the fuel injection amount *Qsol.*

In a step S343, a water temperature correction coefficient *KgfbiTw* of the correction gain is calculated by looking up a map shown in FIG. 59 previously stored in the memory of the control unit 41, based on the cooling water temperature *Tw.*

In a following step S344, an error ratio *Rqac0* is calculated by the following equation (23), using the correction gain *Gkfbi* and the water temperature correction coefficient *KgfbiTw.*

$$Rqac0 = (tQacd / Qac - 1) \cdot Gkfbi \cdot Kgfbitw + Rqac0_{n-1} \tag{23}$$

where, $Rqac0_{n-1}$ = *Rqac0* calculated on the immediately preceding occasion the subroutine was executed.

In a following step S345, by adding 1 to the error ratio *Rqac0*, the EGR flow velocity feedback correction coefficient *Kqac0* is calculated. Therefore, the EGR flow velocity feedback correction coefficient *Kqac0* is a value proportional to the integral of the error ratio.

Now, referring again to FIG. 50, after setting the EGR amount feedback correction coefficient *Kqac00* and the EGR flow velocity feedback correction coefficient *Kqac0,* in a step S259, the control unit 41 determines whether or not the learning value reflection permission flag *felrn2* is 1. When the learning value reflection permission flag *felrn2* is 1, i.e., when reflection of the learning value in EGR amount control is permitted, in a step S260, the control unit 41 determines whether or not the learning permission flag *felrn* is 1.

When the learning permission flag *felrn* is 1, in a step S261, the control unit 41 determines whether or not the learning termination flag *felrn3* is 1.

When the learning value reflection permission flag *felrn2* is zero in the step S259 and when the learning termination flag *felrn3* is zero in the step S261, the control unit 41 sets the EGR flow velocity learning correction coefficient *Kqac* to 1 in a step S262, and terminates the subroutine.

On the other hand, when the learning permission flag *felrn* is 1 in the step S260, the control unit 41 proceeds to a step S263. Here, an error ratio learning value $Rqac_{n-1}$ is first read. This value is the newest value calculated on the immediately preceding occasion, or on prior occasions, when the subroutine was executed. In a next step S264, the EGR flow velocity learning correction coefficient *Kqac* is calculated by adding 1 to the error ratio learning value *Rqac.*

In a next step S265, an error rate $Rqac_n$ is calculated by subtracting 1 from the EGR flow velocity feedback correction coefficient *Kqac0* calculated in the step S256.

In a next step S266, the new error ratio learning value *Rqac* is calculated by adding a weighted average processing by the following equation (24) based on the error ratio learning value $Rqac_{n-1}$ and the error rate $Rqac_n$.

$$Rqac = Rqacn \cdot Tclrn + Rqac_{n-1} \cdot (1 - Tclrn) \tag{24}$$

where, *Tclrn* = learning rate,

*Rqac* = error ratio learning value after updating *Rqac,* and
$Rqac_{n-1}$ = error ratio learning value read in the step S263.

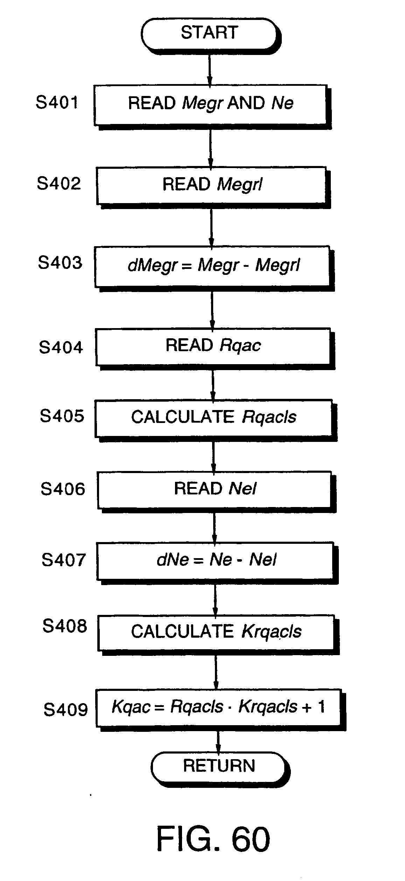

On the other hand, when the learning termination flag *felrn3* is 1 in the step S261, the control unit 41 proceeds to a step S267, and the flow velocity learning correction coefficient *Kqac* is calculated by the subroutine of FIG. 60.

Referring to FIG. 60, firstly in a step S401, the target EGR rate *Megr* and engine rotation speed *Ne* are read.

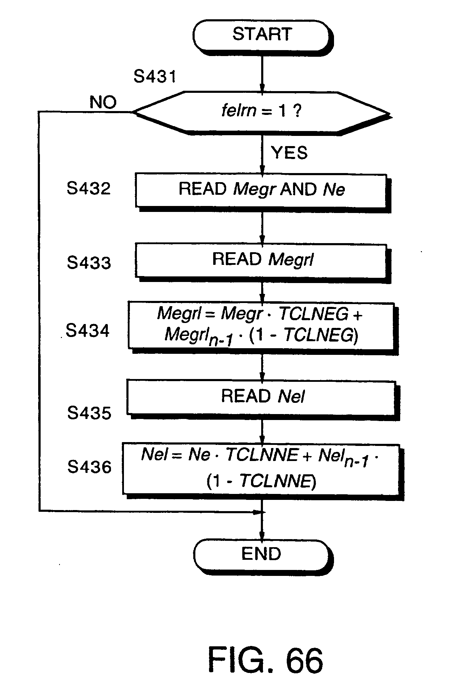

In a next step S402, a learning value *Megrl* of the target EGR rate is read. The learning value *Megrl* of the target EGR rate is a value calculated by an independent routine shown in FIG. 66. This independent routine is performed in synchronism with the REF signal.

Referring to FIG. 66, it is first determined in a step S431 whether or not the learning permission flag *felrn* is 1. When the learning permission flag *felrn* is not 1, the routine is terminated without performing any operations. When the learning permission flag *felrn* is 1, the routine proceeds to a step S432, and the target EGR rate *Megr* and engine rotation speed *Ne* are read.

In a next step S433, a learning value $Megrl_{n-1}$ of the target EGR rate calculated on the immediately preceding occasion the routine was performed, is read. The learning value *Megrl* of the target EGR rate is then calculated in a following step S434 by adding a weighted average to the target EGR rate by the following equation (25).

$$Megrl = Megr \cdot TCLNEG + Megrl_{n-1} \cdot (1 - TCLNEG) \tag{25}$$

where, *TCLNEG* = learning rate (= constant).

In a next step S435, the learning value *Nel* of the engine rotation speed calculated on the immediately preceding occasion the routine was performed, is read. In a next step S436, the learning value *Nel* of the engine rotation speed is calculated by adding a weighted average processing to the engine rotation speed *Ne* by the following equation (26), and the routine is terminated.

$$Nel = Ne \cdot TCLNNE + Nel_{n-1} \cdot (1 - TCLNNE) \tag{26}$$

where, *TCLNNE* = learning rate (= constant).

This routine calculates the learning value *Megrl* of the target EGR rate during the period when the learning permission flag *felrn* is 1, and the learning value *Nel* of the engine rotation speed by a weighted average. If the learning permission flag *felrn* is 1, this routine performs learning when the diesel engine 1 is in the ordinary running state and when it is in a transient running state. Therefore, in order to achieve the sufficient learning frequency, it is necessary to define the values of the learning rates *TCLNEG, TCLNNE* so that a large error does not occur in the learning value.

What is read in the step S402 of FIG. 60 is the learning value *Megrl* of the target EGR rate calculated in the step S434 of FIG. 66.

Next, the control unit 41 calculates a difference *dMegr* of the target EGR rate *Megr* and learning value *Megrl* in a following step S403.

In a next step S404, the error ratio learning value *Rqac* is read. The error ratio learning value *Rqac* is calculated in a step S266 of FIG. 50 described later. Therefore, the value read here is the newest value calculated on the immediately preceding occasion when the subroutine of FIG. 50 was performed, or on prior occasions.

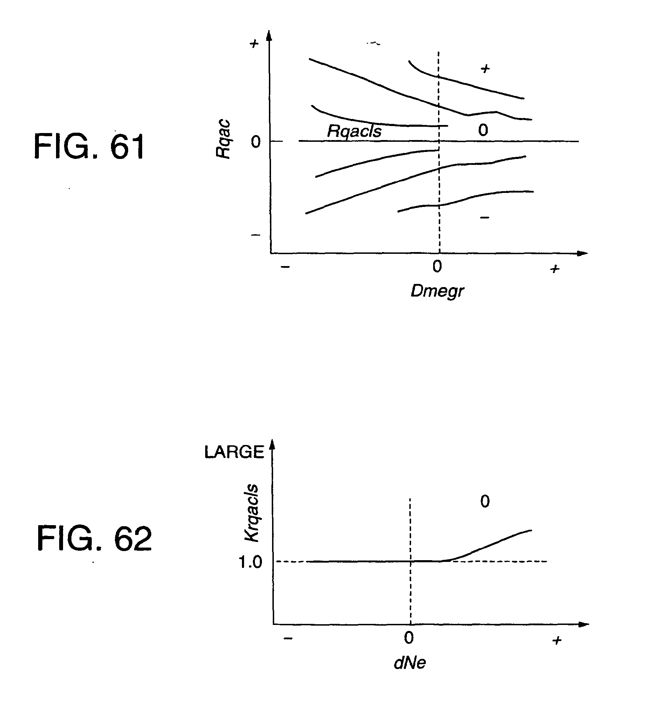

In a next step S405, the learning reflection basic value *Rqacls* is calculated by looking up a map shown in FIG. 61 based on the error rate learning value *Rqac* and difference *dMegr*. This map is stored beforehand in the control unit 41.

In a next step S406, the learning value *Nel* of the engine rotation speed calculated in the step S436 of the routine of FIG. 66, is read.

In a next step S407, the difference *dNe* of the engine rotation speed *Ne* and learning value *Nel* is calculated.

In a next step S408, the learning reflection value correction coefficient *Krqacls* is calculated by looking up a map shown in FIG. 62 based on the difference *dNe*. This map is previously stored in the memory of the control unit 41.

In a next step S409, the flow velocity learning correction coefficient *Kqac* is calculated by the following equation (27) from the correction coefficient *Krqacls* and the learning reflection basic value *Rqacls*.

$$Kqac = Rqacls \cdot Krqacls + 1 \tag{27}$$

After calculating the flow velocity learning correction coefficient *Kqac,* the control unit 41 terminates the subroutine of FIG. 50.

Referring again to FIG. 63, the control unit 41 calculates in a step S413 a corrected real EGR amount *Qec_h* by the following equation (28) using the EGR flow velocity feedback correction coefficient *Kqac0* and EGR flow velocity learning correction coefficient *Kqac* calculated in the step S412.

$$Qec\_h = Qec \cdot Kqac \cdot Kqac0 \tag{28}$$

In steps S414-S417, an initial value of the corrected real EGR amount *Qec_h* when EGR operation begins, is set. In the step S414, it is determined whether or not the corrected real EGR amount *Qec_h* is 0. When *Qec_h* is 0, i.e. when EGR is not operating, the corrected real EGR amount *Qec_h* is set by the following equation (29) in a step S415, and the routine proceeds to a step S416. When the corrected real EGR amount is not 0 in the step S414, the routine bypasses the step S415 and proceeds to the step S416.

$$Qec\_h = Qac \cdot MEGRL\# \tag{29}$$

where, *MEGRL#* = constant.

In the step S416, it is determined whether or not the real EGR rate *Megrd* is 0. When the real EGR rate *Megrd* is 0, the real EGR rate *Megrd* is set equal to the constant *MEGRL#* in the step S417, and the routine proceeds to a step S418. When the real EGR rate *Megrd* is not 0, the routine bypasses the step S417 and proceeds to the step S418.

When the EGR valve 6 is fully closed, the EGR valve flow velocity of the EGR valve 6 is 0, but considering the response delay of the EGR valve 6, equations (28) and (29) are used for setting the initial value of parameters used for flow velocity calculations when EGR operation starts, i.e., when the EGR valve 6 begins to open.

The constant *MEGRL#* may be set to, for example, 0.5.

The differential pressure upstream and downstream of the EGR valve 6 when EGR operation starts is different according to the running conditions of the diesel engine 1, and as a result, the EGR valve flow velocity when EGR operation starts also differs. The differential pressure upstream and downstream of the EGR valve 6 when the EGR valve 6 begins to open, depends on the real intake air amount *Qac*. Thus, the calculation precision of the EGR valve flow velocity when EGR operation starts, can be improved by making the initial value of *Qec_h* directly proportional to the real intake air amount *Qac* by equation (29).

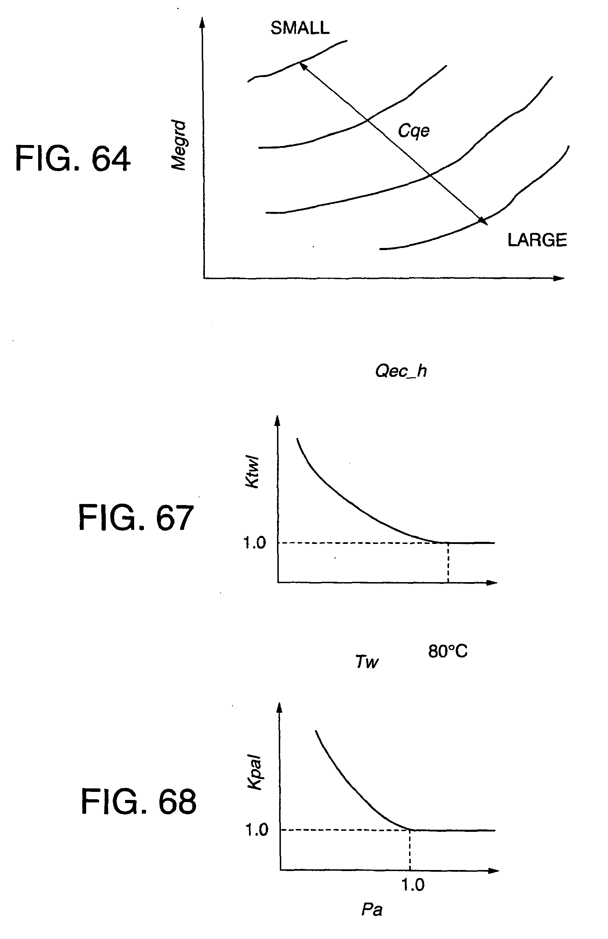

Now, in the step S418, the control unit 41 calculates an EGR valve flow velocity *Cqe* by looking up a map shown in Fig. 64 which is previously stored in the memory of the control unit 41, based on the corrected real EGR amount *Qec_h* and real EGR rate *Megrd,* and the subroutine is terminated.

When the subroutine is terminated, the control unit 41 terminates processing of a step S12 in Fig. 5. In a subsequent step S13 of Fig. 5, the control unit 41 calculates the EGR valve opening surface area *Aev* by the following equation (30) using the target EGR amount *Tqek* per unit time calculated in the step S11, and the EGR valve flow velocity *Cqe* calculated in the step S12,

$$Aev = Tqek / Cqe \tag{30}$$

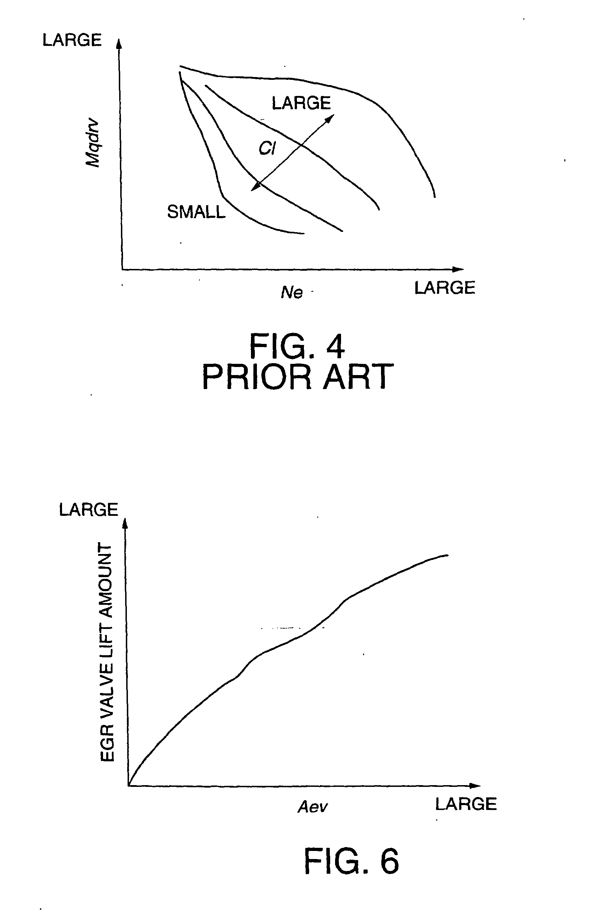

The target EGR valve opening surface area *Aev* obtained is converted to a lift amount or a corresponding signal to the pressure control valve 5 using, for example, the map of Fig. 6. The control unit 41 controls the opening of the EGR valve 6 to the target EGR valve opening surface area *Aev* by outputting the signal to the pressure control valve 5 which drives the EGR valve 6, based on these parameters.

A description will now be given of how, under the above EGR control, the flags are set corresponding to change of running conditions.

The case where a target fuel injection amount *Qsol* increases slowly will be taken as an example. Here, for ease of understanding, it will be assumed that the real EGR rate *Megrd* exceeds all of predetermined values *MEGRFB#, MEGRLN2#* and *MEGRLN#,* the cooling water temperature *Tw* exceeds all of predetermined values *TWFBI#, TWLNL2#* and *TWLNL#,* and the engine rotation speed *Ne* exceeds all of predetermined values *EFBL#, NELNL2#* and *NELNL#.*

Only the target fuel injection amount *Qsol* is varied, other conditions remaining fixed. Although three predetermined values *QSOLFBL#, QSOLLNL2#* and *QSOLLNL#* are shown in the figure, their magnitudes are not limited to the relation shown in the figure.

When the vehicle starts to accelerate, at a time *t1*, the target fuel injection amount *Qsol* exceeds the predetermined value *QSOLFBL#.* As a result, in the routine of FIG. 51, the determination result of the step S274 is affirmative. As all other feedback control conditions are satisfied, timer measurement using a timer value *Ctrfb* is started in a step S276.

At a time *t2*, the target fuel injection amount *Qsol* exceeds the predetermined value *QSOLLNL2#.* As a result, in the routine of FIG. 52, the determination result of the step S294 becomes affirmative. As all other learning value reflection permission conditions are satisfied, timer measurement using the timer value *Ctrln2* is started in the step S296.

At a time *t3*, as the timer value *Ctrfb* which started measurement at the time *t1* exceeds the predetermined value *TMRFB#,* the feedback permission flag *fefb* is set to 1 in the step S279 of FIG. 51.

At a time *t4*, as the timer value *Ctrln2* which started measurement at the time *t2* exceeds the predetermined value *TMRLN1#,* the learning value reflection permission flag *felrn2* is set to 1 in the step S299 of FIG. 52.

If the target fuel injection amount *Qsol* increases further and exceeds the predetermined value *QSOLLNL#* at a time *t5*, in the routine of FIG. 53, the determination result of the step S314 becomes affirmative. As all other learning permission conditions are satisfied, timer measurement using the timer value *Ctrln* is started in the step S318.

At a time *t6*, as the timer value *Ctrln* which started measurement in the step S318 exceeds the predetermined value *TMRLN#,* the learning permission flag *felrn* is set to 1 in the step S321 of FIG. 53. Consequently, in the routine of FIG. 65, the determination result of the step S421 changes to affirmative.

Therefore, timer measurement using the timer value *Ctrln3* is started in the step S422.

At a time *t7*, as the timer value *Ctrln3* which started measurement at the time *t6* exceeds the predetermined value *TMRLN3#,* the learning termination flag *felrn3* is set to 1 in the step S425 of FIG. 65. Also, the learning permission flag *felrn* is reset to 0 in the step S426.

Summarizing the above, the feedback permission flag *fefb* is set to 1 at the time *t3*, the learning value reflection permission flag *felrn2* is set to 1 at the time *t4*, the learning permission flag *felrn* is set to 1 at the time t6, the learning termination flag *felrn3* is set to 1 at the time *t7,* and the learning permission flag *felrn* is reset to zero at the time *t7.*

Before the time *t4*, reflection of learning values is prohibited. Therefore, the determination result of the step S259 of the subroutine of FIG. 50 is negative, and in the step S262, the EGR flow velocity learning correction coefficient *Kqac* is fixed to 1. In other words, the correction of the EGR flow velocity by the learning value is not performed.

During the interval *t4-t6*, although the learning value reflection permission flag *felrn2* is 1, the learning permission flag *felrn* and the learning termination flag *felrn3* are still zero. Therefore, the subroutine of FIG. 50 proceeds to the step S262 via the steps S260, S261 from the step S259, and the EGR flow velocity learning correction coefficient *Kqac* is also fixed to 1.

Therefore, the correction of the EGR flow velocity by the learning value is also not performed in this interval.

During the interval *t6-t7*, the learning permission flag *felrn* is 1 following the learning value reflection permission flag *felrn2.* Therefore, the subroutine of FIG. 50 proceeds to the steps S263-S266 via the step S260 from the step S259, and the EGR flow velocity learning correction coefficient *Kqac* is calculated based on the error ratio learning value *Rqac$_{n-1}$* calculated on the immediately preceding occasion the routine was executed or on prior occasions. On the other hand, the error ratio *Rqac$_n$* is calculated from the EGR flow velocity feedback correction coefficient *Kqac0*, the new error ratio learning value *Rqac* is calculated by the weighted average of this value and the error ratio learning value *Rqac$_{n-1}$*, and the result is stored in the memory of the control unit 41.

After the time *t7*, the learning permission flag *felrn* again becomes zero, learning of the error ratio is prohibited, and the new error rate ratio learning value *Rqac* is reflected in the computation of the EGR valve flow velocity *Cqe.*

Herein, the determination result of the step S260 of the subroutine of FIG. 50 is negative, and the determination result of the step S261 is affirmative. Therefore, calculation of the flow velocity learning correction coefficient *Kqac* is performed using the subroutine of FIG. 60 in the step S267.

As a result, after the time *t7*, the error ratio learning value *Rqac* updated in the interval *t6-t7* is reflected in the calculation of the EGR valve flow velocity *Cqe.*

Specifically, in the step S405, the learning reflection basic value *Rqacls* is calculated by looking up the map of FIG. 61 using the error ratio learning value *Rqac,* and in the step S409, the EGR flow velocity learning correction coefficient *Kqac* is calculated based on the learning reflection basic value *Rqacls.*

In FIG. 61, the learning reflection basic value *Rqacls* is vertically symmetrical about the line

When *Rqac* is positive, the learning reflection basic value *Rqacls* is a positive value. In this case, the learning correction coefficient *Kqac* calculated by Equation (27) is a larger value than 1.

In the calculation of Equation (27), the calculation of the learning correction coefficient *Kqac* by adding 1 to *Rqacls · Krqacls* is to make the learning correction coefficient *Kqac* vary around 1, in a similar way to the calculation of the correction coefficient *Kqac* by adding 1 to the error ratio learning value *Rqac* in the step S264 of FIG. 50.

The error ratio learning value *Rqac* is a value for making the real intake air amount *Qac* coincide with the target value *tQacd*, and when the error ratio learning value *Rqac* is positive, it is necessary to make the learning reflection basic value *Rqacls* a positive value. The case where the error ratio learning value *Rqac* is positive is the case where the target value *tQacd* is larger than the real intake air amount *Qac.* In this case, as the learning correction coefficient *Kqac* is a larger value than 1, in the equation (28), the corrected real EGR amount *Qec_h* is corrected in the increasing direction, and the EGR valve flow velocity *Cqe* obtained from the map of FIG. 64 also increases.

Consequently, as the EGR valve opening surface area *Aev* calculated in a step S13 of FIG. 5 decreases, the real intake air amount *Qac* increases, and the target value *tQacd* is approached. The same is true of the characteristics of the learning reflection basic value *Rqacls* when *Rqac* is negative.

In FIG. 61, the learning reflection basic value *Rqacls* becomes larger the larger the error ratio learning value *Rqac,* and the learning correction coefficient *Kqac* also becomes larger by Equation (27). This is the same as the learning correction coefficient *Kqac* becoming larger, the larger the error ratio learning value *Rqac* in the step S264 of FIG. 50.

On the other hand, in FIG. 61, the learning reflection basic value *Rqacls* is a smaller value, the larger positive value the difference *dMegr* of the target EGR rate learning value *Megrl* and target EGR rate Megrbecomes.

Conversely, the learning reflection basic value *Rqacls* is a larger value, the larger negative value the difference *dMegr* becomes. This means that the learning reflection basic value *Rqacls* is set corresponding to the EGR sensitivity. In FIG. 61, the EGR sensitivity is smaller the further to the right, and the EGR sensitivity is larger the further to the left. Therefore, the learning reflection basic value *Rqacls* shown in FIG. 61 becomes larger the higher the EGR sensitivity. The learning reflection basic value *Rqacls* calculated in FIG. 61 means a value such that the error *dMegr* is 0.

The reason why, when the difference *dNe* of the engine rotation speed *Ne* and learning value *Nel* becomes a positive large value in FIG. 62, the value of the learning reflection value correction coefficient *Krqacls* is made a larger value than 1.0, is as follows. When the difference *dNe* is positive, it means that the real rotation speed *Ne* is larger than the rotation speed learning value *Nel.* When the rotation speed of the diesel engine 1 is large, the EGR valve flow velocity *Cqe* becomes large. If the EGR flowrate is the same, the EGR sensitivity also increases the larger the EGR flow velocity. Thus, it is arranged that when the EGR valve flow velocity *Cqe* is large, the learning correction coefficient *Kqac* also increases.

As mentioned above, according to this invention, the control device needs only a unique error ratio learning value *Rqac,* and even if learning of the error ratio learning value *Rqac* is performed in a region where the EGR sensitivity is large, increase in learning error can be prevented and the precision of the error rate learning value *Rqac* can be enhanced. Also, the learning correction coefficient *Kqac* is calculated using the error ratio learning value *Rqac* according to the differences between the learning values *Megrl, Nel* under learning permission conditions and the real values *Megr, Ne* under learning value reflection permission conditions of the parameters affecting the EGR sensitivity, so the learning correction coefficient *Kqac* compensating the difference in EGR sensitivity can be obtained.

As the parameters are learned by weighted averages under learning permission conditions, the learning values *Megrl, Nel* cannot be easily influenced by fluctuations of the running conditions or by noise. Moreover, learning of parameters is possible when the diesel engine 1 is in an ordinary running state and when it is in a transient running state, and learning prohibition conditions can be made simple.

With respect to the learning of the two parameters, it is possible to simplify the logic of learning control by making the learning permission conditions and learning value reflection permission conditions identical. Determining the learning correction coefficient *Kqac* according to the differences *dMegr, dNe* between the learning values *Megrl, Nel* learned under learning permission conditions, and the target EGR rate *Megr* and engine rotation speed *Ne* under learning value reflection permission conditions, also simplifies the logic.

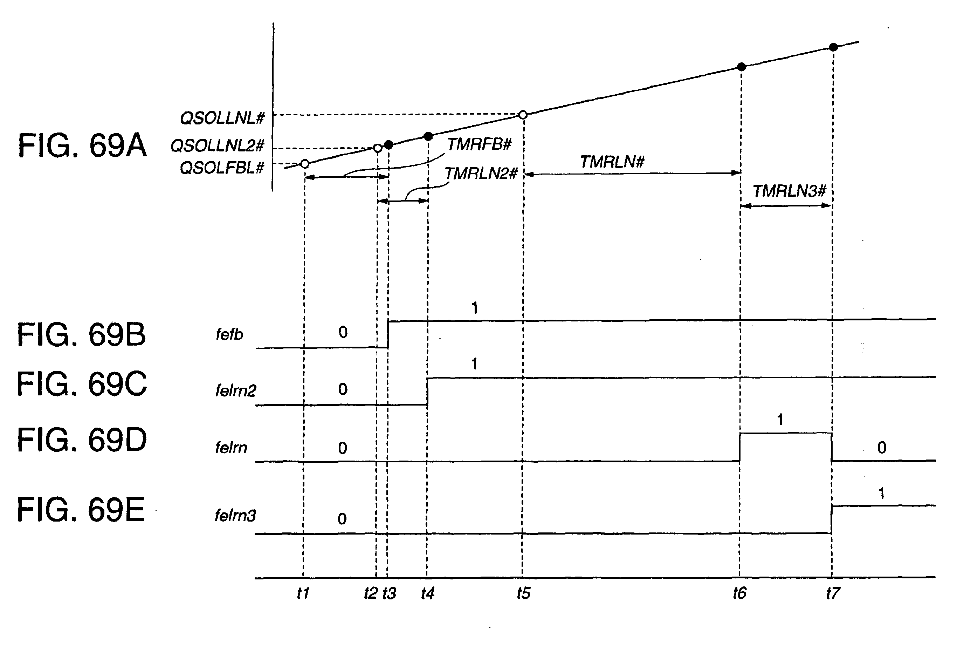

Next, a third embodiment of this invention will be described referring to FIGs. 67 and 68.

In the first and second embodiments, the target EGR rate *Megr* and the engine rotation speed *Ne* were taken as parameters affecting EGR sensitivity, but in this embodiment, in view of the fact that the cooling water temperature *Tw* and atmospheric pressure *Pa* also affect EGR sensitivity via the EGR rate, these elements are used as parameters to determine the EGR flow velocity learning correction coefficient *Kqac.*

In this embodiment, the following Equation (31) is applied instead of Equation (27) in the first and second embodiments.

$$Kqac = Rqacls \cdot Krqacls \cdot Ktwl \cdot Kpal + 1 \qquad (31)$$

where, *Ktwl* = water temperature correction coefficient, and

   *Kpal* = atmospheric pressure correction coefficient.

Moreover, the EGR flow velocity learning correction coefficient *Kqac* is calculated by the following Equation (32) instead of the Equation of the step S264 of FIG. 50.

$$Kqac = Rqac \cdot Ktwl \cdot Kpal + 1 \qquad (32)$$

The water temperature correction coefficient *Ktwl* can be calculated by looking up a map shown in FIG. 67, and the atmospheric pressure correction coefficient *Kpal* can be calculated by looking up a map shown in FIG. 68.

These maps are previously stored in the memory of the control unit 41.

The reason why the correction coefficient *Ktwl* is larger the lower the cooling water temperature *Tw* in the map of FIG. 67, is that the target EGR rate *Megr* is smaller and therefore the EGR sensitivity is higher, the lower the cooling water temperature *Tw.* Likewise, the reason why the correction coefficient *Kpal* is larger the lower the atmospheric pressure in the map of FIG. 68, is that the target EGR rate *Megr* is smaller and therefore the EGR sensitivity is higher, the lower the atmospheric pressure *Pa.*

In all the above embodiments, the learning correction coefficient *Kqac* was calculated based on the differences *dMegr*, *dNe* of learning values and current values of the parameters affecting EGR sensitivity, but it is also possible to use the ratios of learning values and current values of the parameters affecting EGR sensitivity. Further, in all the above embodiments, although the learning permission conditions of the error ratio learning value of intake air amount and the learning permission conditions of the parameters were made the same, these learning permission conditions can also be set independently.

In the first and second embodiments, although the target EGR rate *Megr* and the engine rotation speed *Ne* were used as parameters affecting EGR sensitivity, only one of these may be used as a parameter. Further, as the target EGR rate *Megr* is determined according to the target fuel injection amount *Qsol*, the target fuel injection amount *Qsol* may also be considered as a parameter. The engine load or real EGR rate may also be used as parameters.

In the embodiments, the case was described where the parameters affecting the EGR sensitivity were the target EGR rate and the rotation speed, but only one of these may be introduced.

Further, since the target EGR rate *Megr* is determined by the target fuel injection amount *Qsol*, the fuel injection amount *Qsol* or the engine load may be used instead of the target EGR rate *Megr*. The real EGR rate *Megrd* may also be used as a replacement for the target EGR rate *Megr.*

Moreover, the learning values of parameters are not limited to weighted average values.

In the embodiments, the EGR valve 6 is controlled based on the EGR valve flow velocity *Cqe*, but this invention may be applied also to devices wherein the EGR valve 6 is controlled based on the differential pressure upstream and downstream of the EGR valve 6 which has a fixed relationship to the EGR valve flow velocity *Cqe*.

Further, it is also possible to calculate a delay processing value *RVNTE* of the target opening rate by the following Equation (33) using a target opening rate *Rvnt* and a time constant equivalent value *Tcvnt,* and to use the delay processing value *RVNTE* as an approximate value of the pressure differential upstream and downstream of the EGR valve 6.

$$RVNTE = Rvnt \cdot Tcvnt \cdot KVN1\# + RVNTE_{n-1} \cdot (1 - Tcvnt \cdot KVN1\#) \qquad (33)$$

where, *KVN1#* = constant,

$RVNTE_{n-1}$ = *RVNTE* computed on the immediately preceding occasion.

When the opening of the EGR valve 6 is fixed, the pressure differential upstream and downstream of the EGR valve 6 becomes larger, the smaller the delay processing value *RVNTE* of the opening of the variable nozzle 53.

Therefore, the opening surface area *Aev* of the EGR valve can be directly calculated without using the EGR valve flow velocity *Cqe* by taking the delay processing value *RVNTE* and EGR amount as parameters.

Although the invention has been described above by reference to certain embodiments of the invention, the invention is not limited to the embodiments described above. Modifications and variations of the embodiments described above will occur to those skilled in the art, in light of the above teachings.

For example, in all the above embodiments, the real EGR amount *Qec* was corrected by the EGR flow velocity feedback correction coefficient *Kqac0* and EGR flow velocity learning correction coefficient *Kqac,* and the EGR valve flow velocity *Cqe* was calculated taking the real EGR amount *Qec* as a parameter. However, the real EGR rate *Megrd* which is another parameter determining the EGR valve flow velocity *Cqe,* may also be corrected by the EGR flow velocity feedback correction coefficient *Kqac0* and EGR flow velocity learning correction coefficient *Kqac.* Further, it is also possible to apply a correction to the EGR valve flow velocity *Cqe* itself.

The EGR flow velocity feedback correction coefficient *Kqac0* may also be calculated so that the real intake air amount *Qac* coincides with the target intake air amount *tQac*.

Instead of learning an error ratio, it is also possible to learn the learning correction coefficient *Kqac* directly.

Instead of air amounts, such as the target intake air amount *tQac* and real intake air amount *Qac* used for the calculations, the intake air pressure which is correlated with the intake air amount may also be used.

This invention can be applied not only to a diesel engine which performs low-temperature pre-mixture combustion, but also to an ordinary diesel engine in which diffusion combustion is performed following the pre-mixture combustion.

The embodiments of this invention in which an exclusive property or privilege is claimed are defined as follows:

## Claims

1. A control device of an engine (1) with an intake passage (3) aspirating air, an exhaust passage (2) discharging an exhaust gas of the engine (1), and an exhaust gas recirculation valve (6) recirculating part of the exhaust gas of the exhaust passage (2) into the intake passage (3), comprising:

   a sensor (34, 39) which detects a running condition of the engine (1);
   a sensor (39) which detects a real intake air amount (Qac) of the intake passage (3);
   a microprocessor (41) comprising means (S13) for calculating a target opening (Aev) of the exhaust gas recirculation valve (6) based on the real intake air amount (Qac) and the running condition so as to control the opening of the exhaust gas recirculation valve (6) according to the target opening (Aev), and means (S72) for setting a target intake air amount (tQac) based on the running condition,
   **characterized in that** the device further comprises a sensor (33, 34) which detects a parameter which shows an EGR sensitivity of the intake air amount, the EGR sensitivity representing a magnitude of an effect of a flowrate of the exhaust gas recirculation valve (6) on the real intake air amount (Qac), and said microprocessor (41) further comprises:

   means (S260) for determining whether or not a predetermined learning condition is satisfied;
   means (S266) for calculating a learning value (Rqac) with respect to a difference between the target intake air amount (tQac) and the real intake air amount (Qac) when the predetermined learning condition is satisfied;

means (S434, S436) for storing the parameter as a first value (Megrl, Nel) when the learning condition is satisfied;

means (S259) for determining whether or not a learning value reflection permission condition is satisfied;

means (S401) for sampling the parameter as a second value (Megr, Ne) when the learning value reflection permission condition is satisfied;

means (S412) for calculating a correction coefficient (Kqac) reflecting said EGR sensitivity from the learning value (Rqac) and a difference (dMegr, dNe) between the second value (Megr, Ne) and the first value (Megrl, Nel) when the learning value reflection permission condition is satisfied; and

means (S413, S418, S13) for correcting the target opening of the exhaust gas recirculation valve (6) based on the correction coefficient (Kqac) when the learning value reflection permission condition is satisfied.

2. A control device according to claim 1, **characterized in that** the parameter is an exhaust gas recirculation rate (Megr) which represents a ratio of an exhaust gas recirculation amount of the exhaust gas recirculation valve (6), and the real intake air amount (Qac).

3. A control device according to claim 1, **characterized in that** the parameter is a rotation speed (Ne) of the engine (1).

4. A control device according to claim 1, **characterized in that** the parameter is a cooling water temperature (Tw) of the engine (1).

5. A control device according to claim 1, **characterized in that** the parameter is an atmospheric pressure (Pa).

6. A control device according to claim 1, **characterized in that** the microprocessor (41) further comprises means (S434, S436) for determining the first value (Megrl, Nel) by calculating the parameter on plural occasions during a period when the first condition is satisfied, and for averaging the parameters calculated on the plural occasions.

7. A control device according to claim 1, **characterized in that** the microprocessor (41) further comprises means (S320, S321) for determining that the second condition is satisfied when a predetermined time has elapsed from when the first condition is satisfied.

8. A control device according to claim 1, **characterized in that** the representative value comprises a value representing a ratio of the target intake air amount (tQac) and the real intake air amount (Qac).

9. A control device according to claim 1, **characterized in that** the microprocessor (41) further comprises means (S11) for determining a target flowrate (Tqek) of the exhaust gas recirculation valve (6) based on the real intake air amount (Qac); means (S12, S418) for determining a target flow velocity (Cqe) of the exhaust gas recirculation valve (6) based on the representative value and the difference between the second value (Megr, Ne) and the first value (Megrl, Nel); means (S13) for calculating a target opening area (Aev) of an exhaust gas recirculation valve (6) from the target flowrate (Tqek) and the target flow velocity (Cqe); and means (S13) for controlling an opening area of the exhaust gas recirculation valve (6) to the target opening area (Aev).

10. A control device according to claim 9, **characterized in that** the microprocessor (41) further comprises means (S418) for decreasing the target flow velocity (Cqe) as a ratio of a corrected real exhaust gas recirculation amount (Qec_h) of the exhaust gas recirculation valve (6) and the real exhaust gas recirculation amount (Megrd).

11. A control device according to claim 9, **characterized in that** the parameter is a ratio of a corrected real exhaust gas recirculation amount (Qec_h) of the exhaust gas recirculation valve (6) and the real exhaust gas recirculation amount (Megrd), and the microprocessor (41) further comprises means (S409, S413, S418) for decreasing the target flow velocity (Cqe) as a difference of the second value (Megr, Ne) and the first value (Megrl, Nel) while the second value (Megr, Ne) is larger than the first value (Megrl, Nel).

12. A control device according to claim 9, **characterized in that** the parameter is a rotation speed (Ne) of the engine (1), and the microprocessor (41) further comprises means (S409, S413, S418) for increasing the target flow velocity (Cqe) as a difference of the second value (Megr, Ne) and the first value (Megrl, Nel) while the second value (Megr, Ne) is larger than the first value (Megrl, Nel).

13. A control method of an engine (1) with an intake passage (3) aspirating air, an exhaust passage (2) discharging an exhaust gas of the engine (1), and an exhaust gas recirculation valve (6) recirculating part of the exhaust gas of the exhaust passage (2) into the intake passage (3), comprising:

detecting a running condition of the engine (1);
detecting a real intake air amount (Qac) of the intake passage (3); calculating a target opening (Aev) of the exhaust gas recirculation valve (6) based on the real intake air amount (Qac) and the running condition so as to control the opening of the exhaust gas recirculation valve (6) according to the target opening (Aev) (S13);
setting a target intake air amount (tQac) based on the running condition,
**characterized by**
detecting a parameter which shows an EGR sensitivity of the intake air amount, the EGR sensitivity representing a magnitude of an effect of a flowrate of the exhaust gas recirculation valve (6) on the real intake air amount (Qac);
determining whether or not a predetermined learning condition is satisfied (S260);
calculating a learning value (Rqac) with respect to a difference between the target intake air amount (tQac) and the real intake air amount (Qac) when the predetermined learning condition is satisfied (S266);
storing the parameter as a first value (Megrl, Nel) when the learning condition is satisfied (S434, S436);
determining whether or not a learning value reflection permission condition is satisfied (S259);
sampling the parameter as a second value (Megr, Ne) when the learning value reflection permission condition is satisfied (S401);
calculating a correction coefficient (Kqac) reflecting said EGR sensitivity from the learning value (Rqac) and a difference (dMegr, dNe) between the second value (Megr, Ne) and the first value (Megrl, Nel) when the learning value reflection permission condition is satisfied (S412); and
correcting the target opening of the exhaust gas recirculation valve (6) based on the correction coefficient (Kqac) when the learning value reflection permission condition is satisfied (S413, S418, S13).

**Patentansprüche**

1. Steuerungsvorrichtung eines Motors (1) mit einem Einlasskanal (3), der Luft ansaugt, einem Auslasskanal (2), der ein Abgas des Motors (1) abgibt, und ein Abgas- Rückführungsventil (6), das einen Teil des Abgases des Auslasskanales (2) in den Einlasskanal (3) zurückführt, aufweisend:

einen Sensor (34, 39), der einen Laufzustand des Motors (1) erfasst;
einen Sensor (39), der eine tatsächliche Einlassluftmenge (Qac) des Einlasskanales (3) erfasst;
einen Mikroprozessor (41), aufweisend eine Einrichtung (S13) für das Berechnen einer Zielöffnung (Aev) des Abgas- Rückführungsventils (6) auf der Grundlage der tatsächlichen Einlassluftmenge (Qac)und des Laufzustandes, um die Öffnung des Abgas- Rückführungsventils (6) entsprechend der Zielöffnung (Aev) für das Festlegen einer Ziel- Einlassluftmenge (tQac) auf der Grundlage des Laufzustandes zu steuern,
**dadurch gekennzeichnet, dass** die Vorrichtung außerdem aufweist einen Sensor (33, 34), der einen Parameter erfasst, der eine EGR- Empfindlichkeit der Einlassluftmenge zeigt, wobei die EGR- Empfindlichkeit eine Größe einer Wirkung einer Strömungsrate des Abgas- Rückführungsventils (6) auf die tatsächliche Einlassluftmenge (Qac) repräsentiert, und der Mikroprozessor (41) außerdem aufweist:

eine Einrichtung (S260) für das Bestimmen, ob einer vorbestimmten Lernbedingung genügt wird, oder nicht;
eine Einrichtung (S266) für das Berechnen eines Lernwertes (Rqac) in Bezug auf eine Differenz zwischen der Ziel- Einlassluftmenge (tQac) und der tatsächlichen Einlassluftmenge (Qac), wenn der vorbestimmten Lernbedingung genügt wird; eine Einrichtung (S434, S436) für das Speichern des Parameters als einen ersten Wert (Megrl, Nel), wenn der Lernbedingung genügt wird;
eine Einrichtung (S259) zum Bestimmen, ob einer Lernwert- Reflexions- Erlaubnisbedingung genügt wird, oder nicht;
eine Einrichtung (S401) für das Erfassen des Parameters als einen zweiten Wert (Megr, Ne), wenn der Lernwert- Reflexions- Erlaubnisbedingung genügt wird;
eine Einrichtung (S412) für das Berechnen eines Korrekturkoeffizienten (Kqac), der die EGR- Empfindlichkeit widerspiegelt aus dem Lernwert (Rqac) und einer Differenz (dMegr, dNe) zwischen dem zweiten Wert (Megr, Ne) und dem ersten Wert (Megrl, Nel), wenn der Lernwert- Widerspiegelungs- Erlaubnisbedingung genügt wird; und
eine Einrichtung (S413, S418, S13) für das Korrigieren der Zielöffnung des Abgas- Rückführungsventils (6) auf der Grundlage des Korrekturkoeffizienten (Kqac), wenn der Lernwert- Reflexions- Erlaubnisbedingung genügt wird.

**2.** Steuerungsvorrichtung nach Anspruch 1, **dadurch gekennzeichnet, dass** der Parameter eine eine Abgasrückführungsrate (Megr) ist, die ein Verhältnis einer Abgasrückführungsmenge des Abgas- Rückführungsventils (6) und der tatsächlichen Einlassluftmenge (Qac) repräsentiert.

**3.** Steuerungsvorrichtung nach Anspruch 1, **dadurch gekennzeichnet, dass** der Parameter eine Drehzahl (Ne) des Motors (1) ist.

**4.** Steuerungsvorrichtung nach Anspruch 1, **dadurch gekennzeichnet, dass** der Parameter eine Kühlwassertemperatur (Tw) des Motors (1) ist.

**5.** Steuerungsvorrichtung nach Anspruch 1, **dadurch gekennzeichnet, dass** der Parameter eine Atmosphärendruck (Pa) ist.

**6.** Steuerungsvorrichtung nach Anspruch 1, **dadurch gekennzeichnet, dass** der Mikroprozessor (41) außerdem eine Einrichtung (S434, S436) für das Festlegen des ersten Wertes (Megrl, Nel) durch Berechnen der Parameter bei mehreren Gelegenheiten während eines Zeitraumes, wenn dem ersten Bedingung genügt wird, und für die Durchschnittsbildung der Parameter, berechnet bei den mehreren Gelegenheiten, aufweist.

**7.** Steuerungsvorrichtung nach Anspruch 1, **dadurch gekennzeichnet, dass** der Mikroprozessor (41) außerdem eine Einrichtung (S320, S321) für das Bestimmen aufweist, dass der zweiten Bedingung genügt wird, wenn eine vorbestimmte Zeit von dem Zeitpunkt an verstrichen ist, wenn der ersten Bedingung genügt wird.

**8.** Steuerungsvorrichtung nach Anspruch 1, **dadurch gekennzeichnet, dass** der repräsentative Wert einen Wert aufweist, der ein Verhältnis der Ziel- Einlassluftmenge (tQac) und der tatsächlichen Einlassluftmenge (Qac) repräsentiert.

**9.** Steuerungsvorrichtung nach Anspruch 1, **dadurch gekennzeichnet, dass** der Mikroprozessor (41) außerdem aufweist eine Einrichtung (S11) für das Festlegen einer Ziel- Strömungsrate (Tqek) des Abgas- Rückführungsventils (6) auf der Grundlage der tatsächlichen Einlassluftmenge (Qac); eine Einrichtung für das Festlegen einer Ziel- Strömungsgeschwindigkeit (Cqe) des Abgas- Rückführungsventils (6) auf der Grundlage des repräsentativen Wertes und des Unterschiedes zwischen dem zweiten Wert (Megr, Ne) und dem ersten Wert (Megrl, Nel); eien Einrichtung (S13) für das Berechnen einer Ziel- Öffnungsfläche (Aev) eines Abgas- Rückführungsventils (6) aus der Ziel- Strömungsrate (Tqek) und der Ziel- Strömungsgeschwindigkeit (Cqe); und eine Einrichtung (S13) für das Steuern einer Öffnungsfläche des Abgas- Rückführungsventils (6) auf die Ziel- Öffnungsfläche (Aev).

**10.** Steuerungsvorrichtung nach Anspruch 9, **dadurch gekennzeichnet, dass** der Mikroprozessor (41) außerdem aufweist eine Einrichtung (S418) für das Vermindern der Ziel- Strömungsgeschwindigkeit (Cqe) als ein Verhältnis eines korrigierten tatsächlichen Abgasrückführungsmenge (Qec_h) des Abgas- Rückführungsventils (6) und der tatsächlichen Abgasrückführungsmenge (Megrd).

**11.** Steuerungsvorrichtung nach Anspruch 9, **dadurch gekennzeichnet, dass** der Parameter ein Verhältnis einer korrigierten tatsächlichen Abgasrückführungsmenge (Qec_h) des Abgas- Rückführungsventils (6) und der tatsächlichen Abgasrückführungsmenge (Megrd) ist, und der Mikroprozessor (41) außerdem eine Einrichtung (S409, S413, S418) zum Vermindern der Ziel- Strömungsgeschwindigkeit (Cqe) als eine Differenz des zweiten Wertes (Megr, Ne) und des ersten Wertes (Megrl, Nel) aufweist, während der zweite Wert (Megr, Ne) größer als der erste Wert (Megrl, Nel) ist.

**12.** Steuerungsvorrichtung nach Anspruch 9, **dadurch gekennzeichnet, dass** der Parameter eine Drehzahl (Ne) des Motors (1) ist und der Mikroprozessor (41) außerdem eine Einrichtung (S409, S413, S418) für das Erhöhen der Ziel- Strömungsgeschwindigkeit (Cqe) als eine Differenz des zweiten Wertes (Megr, Ne) und des ersten Wertes (Megrl, Nel) aufweist, während der zweite Wert (Megr, Ne) größer als der erste Wert (Megrl, Nel) ist.

**13.** Verfahren zum Steuern eines Motors (1) mit einem Einlasskanal (3), der Luft ansaugt, einem Auslasskanal (2), der ein Abgas des Motors (1) abgibt, und ein Abgas- Rückführungsventil (6), das einen Teil des Abgases des Auslasskanales (2) in den Einlasskanal (3) zurückführt, aufweisend:

Erfassen eines Laufzustandes des Motors (1);
Erfassen einer tatsächlichen Einlassluftmenge (Qac) des Einlasskanales (3);
Berechnen einer Zielöffnung (Aev) des Abgas- Rückführungsventils (6) auf der Grundlage der tatsächlichen Einlassluftmenge (Qac) und des Laufzustandes, um die Öffnung des Abgas- Rückführungsventils (6) entsprechend der Zielöffnung (Aev) (S13) zu steuern;

Festlegen einer Ziel- Einlassluftmenge (tQac) auf der Grundlage des Laufzustandes, **gekennzeichnet durch**

Erfassen eines Parameters, der eine EGR- Empfindlichkeit der Einlassluftmenge zeigt, wobei die EGR- Empfindlichkeit eine Größe einer Wirkung einer Strömungsrate des Abgas- Rückführungsventils (6) auf die tatsächliche Einlassluftmenge (Qac) repräsentiert;

Bestimmen, ob einer vorbestimmten Lernbedingung genügt wird (S260), oder nicht;

Berechnen eines Lernwertes (Rqac) in Bezug auf eine Differenz zwischen der Ziel- Einlassluftmenge (tQac) und der tatsächlichen Einlassluftmenge (Qac), wenn der vorbestimmten Lernbedingung genügt wird (S266);

Speichern des Parameters als einen ersten Wert (Megrl, Nel), wenn der Lernbedingung genügt wird (S434, S436);

Bestimmen, ob einer Lernwert- Widerspiegelungs- Erlaubnisbedingung genügt wird (S259), oder nicht;

Erfassen des Parameters als einen zweiten Wert (Megr, Ne), wenn der Lernwert-Widerspiegelungs- Erlaubnisbedingung genügt wird (S401);

Berechnen eines Korrekturkoeffizienten (Kqac), der die EGR- Empfindlichkeit aus dem Lernwert (Rqac) und einer Differenz (dMegr, dNe) zwischen dem zweiten Wert (Megr, Ne) und dem ersten Wert (Megrl, Nel) reflektiert, wenn der Lernwert-Widerspiegelungs- Erlaubnisbedingung genügt wird (S412); und

Korrigieren der Zielöffnung des Abgas- Rückführungsventils (6) auf der Grundlage des Korrekturkoeffizienten (Kqac), wenn der Lernwert- Widerspiegelungs- Erlaubnisbedingung genügt wird (S413, S418), S13).

## Revendications

1. Dispositif de commande d'un moteur (1) avec un passage d'admission (3) aspirant l'air, un passage d'échappement (2) évacuant les gaz d'échappement du moteur (1) et une soupape de recirculation des gaz d'échappement (6) recirculant une partie des gaz d'échappement du passage d'échappement (2) dans le passage d'admission (3), comprenant :

   un capteur (34, 39) qui détecte un état de fonctionnement du moteur (1) ;
   un capteur (39) qui détecte une quantité réelle d'air d'admission (Qac) du passage d'admission (3) ;
   un microprocesseur (41) comprenant des moyens (S13) pour calculer une ouverture cible (Aev) de la soupape de recirculation des gaz d'échappement (6) sur la base de la quantité réelle d'air d'admission (Qac) et de l'état de fonctionnement pour commander l'ouverture de la soupape de recirculation des gaz d'échappement (6) en fonction de l'ouverture cible (Aev), et des moyens (S72) pour régler une quantité d'air d'admission cible (tQac) sur la base de l'état de fonctionnement,
   **caractérisé en ce que** dispositif comprend, en outre, un capteur (33, 34) qui détecte un paramètre qui indique une sensibilité EGR de la quantité d'air d'admission, la sensibilité EGR représentant une valeur d'un effet d'un débit de la soupape de recirculation des gaz d'échappement (6) sur la quantité réelle d'air d'admission (Qac), et ledit microprocesseur (41) comprend, en outre :

      des moyens (S260) pour déterminer si oui ou non une condition d'apprentissage prédéterminée est satisfaite;
      des moyens (S266) pour calculer une valeur d'apprentissage (Rqac) en fonction d'une différence entre la quantité d'air d'admission cible (tQac) et la quantité réelle d'air d'admission (Qac) lorsque la condition d'apprentissage prédéterminée est satisfaite;
      des moyens (S434, S436) pour mémoriser le paramètre comme première valeur (Megrl, Nel) lorsque la condition d'apprentissage est satisfaite ;
      des moyens (S259) pour déterminer si oui ou non une condition de permission de réflexion de valeur d'apprentissage est satisfaite ;
      des moyens (S401) pour échantillonner le paramètre comme deuxième valeur (Megr, Ne) lorsque la condition de permission de réflexion de valeur d'apprentissage est satisfaite ;
      des moyens (S412) pour calculer un coefficient de correction (Kqac) reflétant ladite sensibilité EGR à partir de la valeur d'apprentissage (Rqac) et d'une différence (dMegr, dNe) entre la deuxième valeur (Megr, Ne) et la première valeur (Megrl, Nel) lorsque la condition de permission de réflexion de valeur d'apprentissage est satisfaite ; et
      des moyens (S413, S418, S13) pour corriger l'ouverture cible de la soupape de recirculation des gaz d'échappement (6) sur la base du coefficient de correction (Kqac) lorsque la condition de permission de réflexion de valeur d'apprentissage est satisfaite.

**2.** Dispositif de commande selon la revendication 1, **caractérisé en ce que** le paramètre est une taux de recirculation des gaz d'échappement (Megr) qui représente un rapport d'une quantité de recirculation des gaz d'échappement de la soupape de recirculation des gaz d'échappement (6), et la quantité réelle d'air d'admission (Qac).

**3.** Dispositif de commande selon la revendication 1, **caractérisé en ce que** le paramètre est une vitesse de rotation (Ne) du moteur (1).

**4.** Dispositif de commande selon la revendication 1, **caractérisé en ce que** le paramètre est une température d'eau de refroidissement (Tw) du moteur (1).

**5.** Dispositif de commande selon la revendication 1, **caractérisé en ce que** le paramètre est une pression atmosphérique (Pa).

**6.** Dispositif de commande selon la revendication 1, **caractérisé en ce que** le microprocesseur (41) comprend, en outre, des moyens (S434, S436) pour déterminer la première valeur (Megrl, Nel) en calculant le paramètre à plusieurs occasions pendant une période pendant laquelle la première condition est satisfaite, et pour établir la moyenne des paramètres calculés à plusieurs occasions.

**7.** Dispositif de commande selon la revendication 1, **caractérisé en ce que** le microprocesseur (41) comprend, en outre, des moyens (S320, S321) pour déterminer que la deuxième condition est satisfaite lorsqu'une durée prédéterminée s'est écoulée à partir du moment où la première condition est satisfaite.

**8.** Dispositif de commande selon la revendication 1, **caractérisé en ce que** la valeur représentative comprend une valeur représentant un rapport de la quantité d'air d'admission cible (tQac) et de la quantité d'air d'admission réelle (Qac).

**9.** Dispositif de commande selon la revendication 1, **caractérisé en ce que** le microprocesseur (41) comprend, en outre, des moyens (S11) pour déterminer un débit cible (Tqek) de la soupape de recirculation des gaz d'échappement (6) sur la base de la quantité d'air d'admission réelle (Qac); des moyens (S12, S418) pour déterminer une vitesse d'écoulement cible (Cqe) de la soupape de recirculation des gaz d'échappement (6) sur la base de la valeur représentative et de la différence entre la deuxième valeur (Megr, Ne) et la première valeur (Megrl, Nel) ; des moyens (S13) pour calculer une zone d'ouverture cible (Aev) d'une soupape de recirculation des gaz d'échappement (6) à partir du débit cible (Tqek) et de la vitesse d'écoulement cible (Cqe) ; et des moyens (S13) pour commander une zone d'ouverture de la soupape de recirculation des gaz d'échappement (6) en fonction de la zone d'ouverture cible (Aev).

**10.** Dispositif de commande selon la revendication 9, **caractérisé en ce que** le microprocesseur (41) comprend, en outre, des moyens (S418) pour réduire la vitesse d'écoulement cible (Cqe) sous forme d'un rapport d'une quantité réelle d'air d'admission corrigée (Qec_h) de la soupape de recirculation des gaz d'échappement (6) et de la quantité réelle de recirculation des gaz d'échappement (Megrd).

**11.** Dispositif de commande selon la revendication 9, **caractérisé en ce que** le paramètre est un rapport d'une quantité réelle d'air d'admission corrigée (Qec_h) de la soupape de recirculation des gaz d'échappement (6) et de la quantité réelle de recirculation des gaz d'échappement (Megrd), et le microprocesseur (41) comprend, en outre, des moyens (S409, S413, S418) pour réduire la vitesse d'écoulement cible (Cqe) sous forme d'une différence de la deuxième valeur (Megr, Ne) et de la première valeur (Megrl, Nel), la deuxième valeur (Megr, Ne) étant supérieure à la première valeur (Megrl, Nel).

**12.** Dispositif de commande selon la revendication 9, **caractérisé en ce que** le paramètre est une vitesse de rotation (Ne) du moteur (1), et le microprocesseur (41) comprend, en outre, des moyens (S409, S413, S418) pour augmenter la vitesse d'écoulement cible (Cqe) sous forme d'une différence de la deuxième valeur (Megr, Ne) et de la première valeur (Megrl, Nel), la deuxième valeur (Megr, Ne) étant supérieure à la première valeur (Megrl, Nel).

**13.** Procédé de commande d'un moteur (1) avec un passage d'admission (3) aspirant l'air, un passage d'échappement (2) évacuant les gaz d'échappement du moteur (1) et une soupape de recirculation des gaz d'échappement (6) recirculant une partie des gaz d"échappement du passage d'échappement (2) dans le passage d'admission (3), comprenant :

la détection d'un état de fonctionnement du moteur (1) ;

la détection d'une quantité réelle d'air d'admission (Qac) du passage d'admission (3) ;

le calcul d'une ouverture cible (Aev) de la soupape de recirculation des gaz d'échappement (6) sur la base de la quantité réelle d'air d'admission (Qac) et de l'état de fonctionnement pour commander l'ouverture de la soupape de recirculation des gaz d'échappement (6) en fonction de l'ouverture cible (Aev) (S13) ;

le réglage d'une quantité d'air d'admission cible (tQac) sur la base de l'état de fonctionnement,
**caractérisé par**

la détection d'un paramètre qui indique une sensibilité EGR de la quantité d'air d'admission, la sensibilité EGR représentant une valeur d'un effet d'un débit de la soupape de recirculation des gaz d'échappement (6) sur la quantité réelle d'air d'admission (Qac) ;

la détermination si oui ou non une condition d'apprentissage prédéterminée est satisfaite (S260) ;

le calcul d'une valeur d'apprentissage (Rqac) en fonction d'une différence entre la quantité d'air d'admission cible (tQac) et la quantité réelle d'air d'admission (Qac) lorsque la condition d'apprentissage prédéterminée est satisfaite (S266) ;

la mémorisation du paramètre comme première valeur (Megrl, Nel) lorsque la condition d'apprentissage est satisfaite (S434, S436) ;

la détermination si oui ou non une condition de permission de réflexion de valeur d'apprentissage est satisfaite (S259) ;

l'échantillonnage du paramètre comme deuxième valeur (Megr, Ne) lorsque la condition de permission de réflexion de valeur d'apprentissage est satisfaite (S401) ;

le calcul d'un coefficient de correction (Kqac) reflétant ladite sensibilité EGR à partir de la valeur d'apprentissage (Rqac) et d'une différence (dMegr, dNe) entre la deuxième valeur (Megr, Ne) et la première valeur (Megrl, Nel) lorsque la condition de permission de réflexion de valeur d'apprentissage est satisfaite (S412) ; et

la correction de l'ouverture cible de la soupape de recirculation des gaz d'échappement (6) sur la base du coefficient de correction (Kqac) lorsque la condition de permission de réflexion de valeur d'apprentissage est satisfaite (S413, S418, S13).

FIG. 1

WATER
TEMPERATURE SENSOR
36

41

10

CONTROLLER

32 FUEL PRESSURE SENSOR

25

A  C

28

B

24

20

27

26

24

11

ACCELERATOR
OPENING SENSOR
33

CRANK
ANGLE
SENSOR
34

CYLINDER
IDENTIFYING
SENSOR
35

15

16A

13

16

31

12

22

23

21

18

19

17

11

14

FIG. 2

EP 1 156 203 B1

START

S1 READ *Ne*

S2 READ *Cl*

S3 CALCULATE *Mqdrv* FROM *Ne* AND *Cl*

S4 CALCULATE *Qsol* BY CORRECTING *Mqdrv*

END

# FIG. 3
# PRIOR ART

START

S11 CALCULATE *Tqek*

S12 CALCULATE *Cqe*

S13 *Aev = Tqek / Cqe*

END

# FIG. 5

LARGE

*Mqdrv*

LARGE

*Cl*

SMALL

*Ne*

LARGE

# FIG. 4
# PRIOR ART

LARGE

EGR VALVE LIFT AMOUNT

*Aev*

LARGE

# FIG. 6

START

S21 — READ $Qacn$

S22 — READ $Megr$

S23 — $Mqec = Qacn \cdot Megr$

S24 — $Rqec = Mqec \cdot Kkin + Rqec_{n-1} \cdot (1 - Kkin)$

S25 — $Tqec = GKQEC \cdot Mqec - (GKQEC - 1) \cdot Rqec_{n-1}$

S26 — $Tqek = Tqec \cdot (Ne / KCON\#) / Kqac00$

RETURN

## FIG. 7

START

S31 | READ *Ne*

S32 | $Qac0 = \dfrac{Qas0}{Ne} \cdot KCON\#$

S33 | $Qac_n = Qac0_{n-L}$

S34 | $Qac = Qacn\text{-}1 \cdot (1 - Kkin) + Qacn \cdot Kkin$

END

# FIG. 8
# PRIOR ART

START

S41 | READ *Us*

S42 | CONVERT *Us* TO *Qas0_d*

S43 | CALCULATE *Qas0* FROM *Qas0_d*

END

# FIG. 9
# PRIOR ART

LARGE

*Qas0_d*

*Us*                                      LARGE

# FIG. 10
# PRIOR ART

```
                    ┌─────────────┐
                    │    START    │
                    └──────┬──────┘
                           │
                           ▼
  S51   ┌──────────────────────────────────┐
        │    READ Ne, Qsol AND Tw           │
        └──────────────────┬───────────────┘
                           │
                           ▼
  S52   ┌──────────────────────────────────┐
        │       CALCULATE Megrb             │
        └──────────────────┬───────────────┘
                           │
                           ▼
  S53   ┌──────────────────────────────────┐
        │       CALCULATE Kegr_tw           │
        └──────────────────┬───────────────┘
                           │
                           ▼
  S54   ┌──────────────────────────────────┐
        │      Megr = Megrb · Kegr_tw       │
        └──────────────────┬───────────────┘
                           │
                           ▼
  S55   ╔══════════════════════════════════╗
        ║      PERFORM COMPLETE            ║
        ║      COMBUSTION STATE            ║
        ║       DETERMINING                ║
        ║        SUBROUTINE                ║
        ╚══════════════════╤═══════════════╝
                           │
                           ▼
  S56              ◇                    YES
              COMPLETE         ──────────────┐
        COMBUSTION STATE ?                   │
                  ◇                          │
                  │ NO                       │
                  ▼                          │
  S57   ┌──────────────────────┐            │
        │       Megr = 0        │            │
        └──────────┬───────────┘            │
                   │◄──────────────────────┘
                   ▼
            ┌─────────────┐
            │     END     │
            └─────────────┘
```

# FIG. 11
# PRIOR ART

FIG. 12
PRIOR ART

FIG. 13
PRIOR ART

EP 1 156 203 B1

```
                    ┌──────────────┐
                    (    START     )
                    └──────────────┘
                            │
S61                         ▼
              ┌──────────────────────────┐
              │         READ Ne           │
              └──────────────────────────┘
                            │
S62                         ▼
                       ╱         ╲          NO
                 ╱   Ne > NRPMK ?   ╲ ──────────────────────┐
                 ╲                 ╱                         │
                       ╲         ╱                           │
                            │ YES                      S66   ▼
                            │              ┌──────────────────────────┐
                            ▼              │        Tmrkb = 0          │
S63                    ╱         ╲          └──────────────────────────┘
                 ╱  Tmrkb > TMRKBP? ╲  NO                    │
                 ╲                 ╱ ──────────┐             │
                       ╲         ╱        S65  ▼             │
                            │ YES     ┌──────────────────┐   │
                            │         │ Tmrkb = Tmrkb + 1│   │
S64                         ▼         └──────────────────┘   │
          ┌──────────────────────────┐      │               │
          │ COMPLETE COMBUSTION        │      └──────────────┤
          │        FLAG = ON           │               S67   ▼
          └──────────────────────────┘      ┌──────────────────────────┐
                            │                │ COMPLETE COMBUSTION       │
                            │                │        FLAG = OFF         │
                            │                └──────────────────────────┘
                            │                             │
                            ▼◄────────────────────────────┘
                    ┌──────────────┐
                    (   RETURN     )
                    └──────────────┘
```

FIG. 14
PRIOR ART

START

S71 | READ *Megrd*

S72 | CALCULATE *tQac*

S73 | CALCULATE *Qec*

S74 | READ *Rvnt*

S75 | PERFORM ADVANCE PROCESSING OF *Rvnt*

S76 | CALCULATE *Avnt_fb*

S77 | PERFORM LINEARIZATION PROCESSING OF *Rvnt*

S78 | DETERMINE *Dtyvnt*

END

# FIG. 15

START

S71 | READ *Megrd*

S72 | CALCULATE *tQac*

S74 | READ *Rvnt*

S75 | PERFORM ADVANCE PROCESSING OF *Rvnt*

S76 | CALCULATE *Avnt_fb*

S77 | PERFORM LINEARIZATION PROCESSING OF *Rvnt*

S78 | DETERMINE *Dtyvnt*

END

FIG. 16

START

S81  READ *Megr*

S82  READ *Kkin*

S83  $Megrd = megr \cdot Kkin \cdot Ne \cdot Ke2\# + Megrd_{n-1} \cdot (1 - Kkin \cdot Ne \cdot KE2\#)$

END

# FIG. 17

START

S91  READ *Ne, Qsol* AND *Megrd$_{n-1}$*

S92  CALCULATE *Kinb*

S93  $Kin = Kinb \cdot \dfrac{1}{1 + \dfrac{Megrd_{n-1}}{100}}$

S94  $Kkin = Kin \cdot KVOL$

END

# FIG. 18

FIG. 19

START

S101 READ *Ne* , *Qsol* AND *Megrd*

S102 *Megrd* > *MEGRLV#* ? —NO→

YES

S103 CALCULATE *tQacb*

S104 CALCULATE *ktQac*

S105 *tQac* = *tQacb* • *ktQac*

S106 CALCULATE *tQac* FROM *Ne* AND *Qsol*

RETURN

# FIG. 20

FIG. 21

FIG. 22

FIG. 23

START

S111 | READ $Qacn$, $Megr$ AND $Kkin$

S112 | $Qec0 = Qacn \cdot Megr$

S113

$$Qec = Qec0 \cdot Kkin \cdot Ne \cdot KE\# + Qec_{n-1} \cdot (1 - Kkin \cdot Ne \cdot KE\#)$$

RETURN

# FIG. 24

START

S121 | READ $tQac$, $Qec$, $Ne$ AND $Qsol$

S122 | $tQas0 = (tQac + Qsol \cdot QFGAN\#) \cdot Ne / KCON\#$

S123 | $Qes0 = (Qec + Qsol \cdot QFGAN\#) \cdot Ne / KCON\#$

S124 | SET $Rvnt$

RETURN

# FIG. 25

FIG. 26

START

S131

READ *Megrd, Ne* AND *Qsol*

S132

$$tQas0 = (tQac + Qsol \cdot QFGAN\#) \cdot \frac{Ne}{KCON\#}$$

S133

SET *Rvnt*

RETURN

# FIG. 27

FIG. 28

START

S141 — READ $Rvnt$

S142 — $Rvnt > Cavnt_n$

YES →

S143 — $Gkvnt = GKVNT0\#$

S144 — $TCVNT = TCVNT0\#$

NO →

S145 — $Rvnt < Cavnt_{n-1}$ ?

YES →

S146 — $Gkvnt = KGVNTC\#$

S147 — $Tcvnt = TCVNTC\#$

NO →

S148 — $Gkvnt = Gkvnt_{n-1}$

S149 — $Tcvnt = Tcvnt_{n-1}$

S150 — $Cavnt = Rvnt \cdot Tcvnt + Cavnt_{n-1} \cdot (1 - Tcvnt)$

S151 — $Avnt\_f = Gkvnt \cdot Rvnt - (Gkvnt - 1) \cdot Cavnt_{n-1}$

RETURN

FIG. 29

EP 1 156 203 B1

START

S161 | READ *tQac*, *Megr*, *Ne*, *Qsol* AND *Qac*

S162 | *Megr* > *MEGRLV#* ? — YES

NO

S163 | *dQac* = 0

S164 | *dQac* = *tQac* / *Qac*-1

S165 | SET *Kh* FROM *Ne* AND *Qsol*

S166 | $Kp = KPB\# \cdot Kh$
$Ki = KIB\# \cdot Kh$
$Kd = KDB\# \cdot Kh$

S167 | CALCULATE *Avnt_fb*

RETURN

# FIG. 30

START

S171 | READ *Avnt_f* AND *Avnt_fb*

S172 | *Avnt* = *Avnt_f* + *Avnt_fb*

S173 | SET *Ratdty*

RETURN

# FIG. 31

FIG. 32

FIG. 33

START

S181 | READ $Ne$, $Qsol$, $Ratdty$, $Tcvn$ AND $TW$

S182 | SET DUTY SIGNAL VARIATION FLAGS

S183 | READ $Dty\_t$

S184 | $fvnt = 1$ ?

— YES

S185 | SET $Duty\_h$ FROM $Duty\_h\_p$ MAP

— NO

S187 | SET $Duty\_h$ FROM $Duty\_h\_n$ MAP

S186 | SET $Duty\_l$ FROM $Duty\_l\_p$ MAP

S188 | SET $Duty\_l$ FROM $Duty\_l\_n$ MAP

S189 | $Dty\_h = (Duty\_h - Duty\_l) \cdot Ratdty + Duty\_l + Dty\_t$

S190 | $fvnt2 = 1$ ?

— YES

— NO

S191 | $Dtyv = Dtyvnt_{n-1}$

S192 | $Dtyv = Dty\_h$

S193 | PERFORM OPERATION CHECK

RETURN

FIG. 34

START

S201 | READ *Avnt* AND *Tcvnt*

S202 | $Adlyvnt = Avnt \yen Tcvnt + Adlyvnt_{n-1} \yen (1 - Tcvnt)$

S203 | $Adlyvnt \ddagger Adlyvnt_{n-M}$ ? — NO

YES

S204 | $fvnt = 1$

S205 | $fvnt = 0$

S206 | $Adlyvnt = Adlyvnt_{n-M}$ ? — NO

YES

S207 | $fvnt2 = 1$

S208 | $fvnt2 = 0$

RETURN

# FIG. 35

```
              ┌─────────────────┐
              │      START      │
              └────────┬────────┘
                       │
  S211    ┌────────────▼────────────┐
          │  READ Ne , Qsol AND Tw  │
          └────────────┬────────────┘
                       │
  S212    ┌────────────▼────────────┐
          │     Calculate Texhb     │
          └────────────┬────────────┘
                       │
  S213    ┌────────────▼────────────┐
          │   Calculate Ktexh_tw    │
          └────────────┬────────────┘
                       │
  S214    ┌────────────▼────────────┐
          │  Texhi = Texhb • Ktexh_tw │
          └────────────┬────────────┘
                       │
  S215    ┌────────────▼────────────┐
          │ Texhdly = Texhi • KEXH# │
          │ + Texhdly_{n-1} • (1 - KEXH#) │
          └────────────┬────────────┘
                       │
  S216    ┌────────────▼────────────┐
          │  dTexh = Texhb - Texhdly │
          └────────────┬────────────┘
                       │
  S217    ┌────────────▼────────────┐
          │    CALCULATE Dty_t      │
          └────────────┬────────────┘
                       │
              ┌────────▼────────┐
              │     RETURN      │
              └─────────────────┘
```

$$Texhi = Texhb \cdot Ktexh\_tw$$

$$Texhdly = Texhi \cdot KEXH\# + Texhdly_{n-1} \cdot (1 - KEXH\#)$$

$$dTexh = Texhb - Texhdly$$

# FIG. 36

FIG. 37

FIG. 38

FIG. 39

FIG. 40

FIG. 41

FIG. 42

FIG. 43

FIG. 44

FIG. 45

START

S221

READ $Dtyv$, $Me$, $Qsol$ AND $Tw$

S222

$Qsol < QSOLDIZ\#$ ? —— NO

S223 ↓ YES

$Ne < NEDIZ\#$ ? —— NO

S224 ↓ YES

$Tw < TWDIZ\#$ ? —— NO

↓ YES

S225

$fdiz = 1$ ? —— YES

S226 ↓ NO

$Ctrdiz = Ctrdiz_{n-1} + 1$

S227

$Ctrdiz < CTRDIZH\#$ ? —— NO

↓ YES

S230 $Ctrdiz_{n-1} < CTRDIZH\#$ ? —— NO

S231 ↓ YES

$Dtyvnt = 0$

S228

$Ctrdiz \ddagger CTRDIZL\#$ ? —— NO

S229 ↓ YES

SET $Dtyvnt$

S232

$fdiz = 1$

S233

$fdiz = 0$

S234

$Ctrdiz = 0$

S235

$Dtyvnt = Dtuv$

RETURN

FIG. 46

START

S241 | READ *Ctrdiz* AND *Ne*

S242 | SET *Duty_pu* FROM (*Ctrdiz* - *CTRDIZL#*)

S243 | SET *Duty_p_ne* FROM *Ne*

S244 | *Dtyvnt = Duty_pu • Duty_p_ne*

END

# FIG. 47

**FIG. 48**

**FIG. 49**

START

S251 — READ *tQac, Qac, Ne* AND *Qsol*

S252 — $tQacd = tQac \cdot Kkin \cdot KQA\# + tQacd_{n-1}(1 - Kkin \cdot KQA\#)$

S253 — READ *fefb, felrn, felrn2* AND *felrn3*

S254 — *fefb* = 1 ?

NO →

YES ↓

S255 — CALCULATE *Kqac00*

S257 — *Kqac00* = 1

S256 — CALCULATE *Kqac0*

S258 — *Kqac0* = 1

S259 — *felrn2* = 1 ?

NO →

YES ↓

S260 — *felrn* = 1 ?

YES →

NO ↓

S261 — *felrn3* = 1 ?

NO →

YES ↓

S263 — READ *Rqac*

S264 — $Kqac = Rqac + 1$

S265 — $Rqac_n = Kqac0 - 1$

S266 — $Rqac = Rqac_n \cdot Tclrn + Rqac_{n-1} \cdot (1 - Tclrn)$

S267 — CALCULATE *Kqac*

S262 — $Kqac = 1$

RETURN

## FIG. 50

FIG. 51

START

S291 READ $Ne$, $Qsol$, $Megrd$ AND $Tw$

S292 $Megrd > MEGRLN2\#$ ? — NO

YES

S293 $Tw > TWLNL2\#$ ? — NO

YES

S294 $Qsol > QSOLLNL2\#$ ? — NO

YES

S295 $Ne > NELNL2\#$ ? — YES

NO

S296 $Ctrln2 = Ctrln2_{n-1} + 1$

S297 $Ctrln2 = 0$

S298 $Ctrln2 > TMRLN2\#$ ? — NO

YES

S299 $feln2 = 1$

S300 $feln2 = 0$

END

FIG. 52

FIG. 53

START

S331 — READ *tQacd*, *Qac*, *Ne*, *Qsol* AND *Tw*

S332 — CALCULATE *Gkfb*

S333 — CALCULATE *Kgfbtw*

S334 — $Kqac00 = (tQacd / Qac - 1) \cdot Gkfb \cdot Kgfbtw + 1$

RETURN

# FIG. 54

FIG. 55

FIG. 56

FIG. 57

FIG. 58

FIG. 59

START

S401 — READ *Megr* AND *Ne*

S402 — READ *Megrl*

S403 — $dMegr = Megr - Megrl$

S404 — READ *Rqac*

S405 — CALCULATE *Rqacls*

S406 — READ *Nel*

S407 — $dNe = Ne - Nel$

S408 — CALCULATE *Krqacls*

S409 — $Kqac = Rqacls \cdot Krqacls + 1$

RETURN

## FIG. 60

FIG. 61

FIG. 62

START

S411 — READ $Qec.\ Megrd$ AND $Qac$

S412 — CALCULATE $Kqac0$ AND $Kqac$

S413 — $Qec\_h = Qec \cdot Kqaqc \cdot Kqac0$

S414 — $Qec\_h = 0$ ? — NO

YES

S415 — $Qec\_h = Qac \cdot MEGRL\#$

S416 — $Megrd = 0$ ? — NO

YES

S417 — $Megrd = MEGRL\#$

S418 — CALCULATE $Cqe$

RETURN

# FIG. 63

FIG. 64

FIG. 67

Qec_h

FIG. 68

Tw    80°C

START

S421

felrn = 1 ? —NO→

YES

S422

$Ctrln3 = Ctrln3_{n-1} + 1$

S423

$Ctrln3 = 0$

S424

$Ctrln3 > TMRLN3\#$ ? —NO→

YES

S425

felrn3 = 1

S427

felrn3 = 0

S426

felrn = 0

END

FIG. 65

START

S431

NO — felrn = 1 ?

YES

S432  READ *Megr* AND *Ne*

S433  READ *Megrl*

S434  $Megrl = Megr \cdot TCLNEG + Megrl_{n-1} \cdot (1 - TCLNEG)$

S435  READ *Nel*

S436  $Nel = Ne \cdot TCLNNE + Nel_{n-1} \cdot (1 - TCLNNE)$

END

FIG. 66

FIG. 69A

QSOLLNL#

QSOLLNL2#

QSOLFBL#

TMRFB#

TMRLN2#

TMRLN#

TMRLN3#

FIG. 69B    fefb    0    1

FIG. 69C    felrn2    0    1

FIG. 69D    felrn    0    1    0

FIG. 69E    felrn3    0    1

t1    t2 t3    t4    t5    t6    t7

EP 1 156 203 B1